# EUROPÄISCHE PATENTSCHRIFT

(11) **EP 3 602 387 B1**
(45) Veröffentlichungstag und Bekanntmachung des Hinweises auf die Patenterteilung: **15.11.2023**
(21) Anmeldenummer: 18707696.3
(22) Anmeldetag: 23.02.2018
(51) Int. Cl.: G06F 21/64

(54) **IDENTIFIKATOREN ZUR INTEGRITÄTSSICHERUNG VON DIGITAL CODIERTE KOPIEN**
IDENTIFIERS FOR INTEGRITY PROTECTION OF DIGITALLY CODED COPIES
IDENTIFICATEURS POUR SÉCURISER L'INTÉGRITÉ DE COPIES CODÉES DE FACON NUMÉRIQUE

(30) Priorität: 27.03.2017 DE 102017205165
(43) Veröffentlichungstag der Anmeldung: 05.02.2020
(73) Patentinhaber: Bundesdruckerei GmbH, 10969 Berlin (DE)
(72) Erfinder: KOMAROV, Ilya, 13507 Berlin (DE); PAESCHKE, Manfred, 16348 Wandlitz (DE)
(74) Vertreter: Richardt Patentanwälte PartG mbB
(86) Internationale Anmeldenummer: PCT/EP2018/054559
(87) Internationale Veröffentlichungsnummer: WO 2018/177664

(56) Entgegenhaltungen:
- Mohammed Rangwala ET AL: "A Mutual Agreement Signature Scheme for Secure Data Provenance", , 31. Dezember 2014 (2014-12-31), XP055476791, ISBN: 978-1-4799-3572-7 Gefunden im Internet: URL:https://www.science.iupui.edu/~xkzou/P apers/ICCCN14_Digital_Provenance.pdf [gefunden am 2018-05-18]
- XINLEI (OSCAR) WANG ET AL: "Chaining for securing data provenance in distributed information networks", MILITARY COMMUNICATIONS CONFERENCE, 2012 - MILCOM 2012, IEEE, 29. Oktober 2012 (2012-10-29), Seiten 1-6, XP032315421, DOI: 10.1109/MILCOM.2012.6415609 ISBN: 978-1-4673-1729-0
- RAGIB HASAN ET AL: "Preventing history forgery with secure provenance", ACM TRANSACTIONS ON STORAGE, ASSOCIATION FOR COMPUTING MACHINERY, NEW YORK, NY, US, Bd. 5, Nr. 4, 14. Dezember 2009 (2009-12-14), Seiten 1-43, XP058380479, ISSN: 1553-3077, DOI: 10.1145/1629080.1629082
- AHMED IDREES ET AL: "Aggregated Signatures for Chaining: A Secure Provenance Scheme", 2016 IEEE TRUSTCOM/BIGDATASE/ISPA, IEEE, 23. August 2016 (2016-08-23), Seiten 2012-2017, XP033063568, DOI: 10.1109/TRUSTCOM.2016.0307 [gefunden am 2017-02-07]

## Beschreibung

Die Erfindung betrifft ein Verfahren und ein Computersystem zur elektronischen Datenverarbeitung. Insbesondere betrifft die Erfindung ein Verfahren und ein Computersystem zur Integritätssicherung beim Kopieren digital codierter Dokumente.

Die Möglichkeit einer Veränderung oder gar gezielten Manipulation von digital codierten Daten kann bei einer typischen elektronischen Datenübertragung und/oder -verarbeitung im Allgemeinen kaum verhindert werden. Dies gilt insbesondere, wenn es sich um öffentlich zugängliche Daten handelt, wie etwa um Daten, die im Internet bereitgestellt werden. Solche Daten werden im Internet typischer Weise über Links, genauer gesagt Hyperlinks, zum Abruf bereitgestellt. Links stellen Verknüpfungen bzw. elektronische Verweise auf die entsprechenden Daten dar und entsprechen einer Vernetzung auf Anwendungsebene. Mit ihrer Hilfe lassen sich Webseiten und andere Dateien verbinden, die entweder auf demselben Rechner liegen oder durch einen Webserver zur Verfügung gestellt werden.

Digital codierte Dokumente, beispielsweise in Form von Textdateien, lassen sich mit Hilfe eines Computers leicht kopieren und verändern. Somit stellt sich häufig die Frage, ob Informationen eines über einen Link verknüpften bzw. bereitgestellten digital codierten Dokuments authentisch sind oder aber verändert, wenn nicht gar absichtlich manipuliert wurden. Diese Frage stellt sich insbesondere im Bereich der modernen Nachrichtenverbreitung über das Internet. Bei der Verbreitung einer Nachrichtenmeldung in Form eines digital codierten Dokuments, wie etwa eines Textes, eines Bildes, einer Ton- und/oder Filmdatei, über das Internet wird das entsprechende Dokument regelmäßig kopiert und zum weiteren Abruf auf zusätzlichen Webseiten bzw. Plattformen bereitgestellt. Der Abruf der Kopien wird beispielsweise durch Verknüpfungen über Links ermöglicht. Bei der großen Anzahl von Nachrichtenmeldungen, welche über unterschiedlichste Plattformen, etwa Websites, verbreitet werden, stellt sich die Frage nach der Vertrauenswürdigkeit der verlinkten Meldungen: Sind die jeweiligen Meldungen korrekt oder handelt es sich möglicherweise um Falschmeldungen.

Eine Falschmeldung ist eine unzutreffende Nachrichtenmeldung, welche beispielsweise unbeabsichtigt durch fehlerhafte oder nachlässige Recherche oder durch bewusstes Lancieren entstehen kann. Als "Fake News" werden Falschmeldungen bezeichnet, die sich überwiegend im Internet, insbesondere in sozialen Netzwerken verbreiten und die mitunter auch von Journalisten aufgegriffen werden. Als besonders problematisch können sich Fake News erweisen, welche den Eindruck erwecken aus einer allgemein anerkannten und seriösen Nachrichtenquelle zu stammen. Dies kann etwa der Fall sein, wenn eine originale Nachrichtenmeldung kopiert und in manipulierter Form weiterverbreitet wird.

Eine Überprüfung von Nachrichtenmeldung auf ihre Integrität hin erweist sich gerade im Bereich des Internets als mühsam, wenn nicht gar bisweilen als unmöglich, da hierfür der Ursprung der entsprechenden Nachrichten rekonstruiert werden muss. Sind die Verbreitungswege einer Nachrichtenmeldung aber nicht bekannt, lässt sich schwer nachvollziehen, wie die vorliegende Nachricht zustande gekommen ist bzw. ob und wer diese möglicherweise manipuliert hat.

Der Artikel "A Mutual Agreement Signature Scheme for Secure Data Provenance" von Mohammed Rangwala et al., 31. Dezember 2014, beschreibt eine digitale Provenienz, welche eine fälschungssichere Aufzeichnung einer Kette von aufeinanderfolgenden Verwahrungen eines digitalen Objekts und eine Abfolge von Operationen, die an dem digitalen Objekt ausgeführt werden. Die digitale Provenienz bildet eine unveränderliche Struktur eines gerichteten azyklischen Graphen (DAG). Es wird ein Schema beschrieben, das unterschriftsbasierte gegenseitige Vereinbarungen zwischen aufeinanderfolgenden Benutzern verwendet, um den Übergang der Verantwortung des Dokuments während der Weitergabe entlang einer Kette von Benutzern klar abzugrenzen. Neben der Wahrung von Vertraulichkeit, Unveränderlichkeit und Verfügbarkeit einer digitalen Herkunftskette wird die Darstellung von DAG-Herkunftsstrukturen unterstützt.

Der Artikel "Chaining for Securing Data Provenance in Distributed Information Networks" von Xinlei (Oscar) Wang et al., MILCOM 2012 - 2012 IEEE Military Communications Conference, 29. Oktober 2012, S. 1-6, beschreibt Sicherheitsaspekte der Provenienz von Informationen. Dabei wird ein Provenienzschema mit "Kettenstruktur" verwendet, um die Sicherheit von Provenienz-Metadaten in drei Dimensionen zu gewährleisten: Vertraulichkeit, Integrität und Verfügbarkeit.

Der Artikel "Preventing history forgery with secure provenance" von Ragib Hasan et al., ACM Transactions on Storage, Association for Computing Machinery, Bd. 5, Nr. 4, 14. Dezember 2009, S. 1-43, beschreibt ein provenienzfähiges System, welches ein Provenienz-Tracking von Datenschreibvorgängen auf der Anwendungsebene implementiert.

Der Artikel "Aggregated Signatures for Chaining: A Secure Provenance Scheme" von Idrees Ahmed et al., 23. August 2016, 2016 IEEE TrustCom-BigDataSE-ISPA, S. 2012-2017, beschreibt ein auf aggregierten Signaturen basierendes Provenienzschema, welches Vertraulichkeit, Integrität, Nicht-Zurückweisung und Verfügbarkeit in einer verteilten Umgebung gewährleistet, um eine sichere Provenienz zu erreichen. Diese Provenienz generiert einen gerichteten azyklischen Graphen (DAG) und eine Kettenstruktur.

Der Erfindung liegt somit die Aufgabe zugrunde, ein Verfahren zur Integritätssicherung digital codierter Kopien eines digital codierten Ursprungsdokuments zu schaffen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben. Ausführungsformen umfassen ein Verfahren und ein Computersystem zur Integritätssicherung digital codierter Kopien eines digital codierten Ursprungsdokuments unter Verwendung einer in Identifikatoren der Kopien integrierten Blockchain-Struktur zur Protokollierung der Abstammungshistorie der Kopien.

Ausführungsformen umfassen ein Verfahren zur Integritätssicherung digital codierter Kopien eines digital codierten Ursprungsdokuments unter Verwendung einer in Identifikatoren der Kopien integrierten Blockchain-Struktur zur Protokollierung der Abstammungshistorie der Kopien Das Verfahren umfasst:
- Aufrufen einer ersten digital codierten Kopiervorlage, welche Daten des digital codierten Ursprungsdokuments umfasst, unter Verwendung eines Identifikators der ersten Kopiervorlage, welcher eine Adresse zum Aufrufen der ersten Kopiervorlage und als Parameterwert eine Blockchain-Struktur umfasst, in der die Abstammungshistorie der ersten Kopiervorlage protokolliert ist,
- Erstellen einer ersten digital codierten Kopie von Daten der ersten Kopiervorlage, wobei die kopierten Daten der ersten Kopie die Daten des digital codierten Ursprungsdokuments umfassen,
- Bereitstellen der ersten Kopie unter einer Adresse zum Aufrufen der ersten Kopie,
- Erstellen eines Identifikators der ersten Kopie, wobei der Identifikator der ersten Kopie die Adresse der ersten Kopie und als Parameterwert die Blockchain-Struktur der ersten Kopiervorlage umfasst, wobei ein zusätzlicher Block zu der Blockchain-Struktur hinzugefügt wird, wobei der zusätzliche Block der ersten Kopiervorlage zugeordnet ist, wobei der zusätzliche Block die Adresse der ersten Kopiervorlage sowie einen Prüfmerkmal der kopierten Daten umfasst, welcher eine Integritätsprüfung der kopierten Daten inklusive des Identifikators der ersten Kopiervorlage ermöglicht,
- Bereitstellen des Identifikators der ersten Kopie zum Aufrufen der ersten Kopie und zum Prüfen der Identität der kopierten Daten der ersten Kopie.

Unter einem digital codierten Dokument wird ein Datenkonstrukt zur elektronischen Datenverarbeitung verstanden, welches digital codierte Daten umfasst. Hierbei kann es sich insbesondere um eine elektronische Datei eines beliebigen Dateiformats handeln, wie etwa eine Text-, Tabellen-, Ton- Bild- und/oder Videodatei. Nach Ausführungsformen kann die elektronische Datei ausführbar oder nicht ausführbar sein. Bei dem Dokument kann es sich insbesondere um eine Nachrichtenmeldung handeln, etwa in Form einer Webseite, einer mit einer Webseite verlinkten oder in einer Webseite integrierten Datei oder eines Postings. Unter einer Webseite bzw. Webdokument, Internetseite oder Webpage wird ein über das Internet bereitgestelltes Dokument verstanden, das beispielsweis von einem Webserver angeboten und mit einem Browser eines Nutzer-Computersystems unter Angabe eines einheitlichen Ressourcenzeigers, d.h. "Uniform Resource Locators" (URL), abgerufen werden kann. Beispielsweise handelt es sich um ein HTML-Dokument. Unter einem Posting wird hier ein einzelner Beitrag auf einer Internet-Plattform, wie etwa einer Social-Media-Plattform, in einem Webforum oder einem Blog verstanden.

Unter einer digital codierten Kopie wird eine Kopie eines digital codierten Dokuments oder zumindest eines Teils eines digital codierten Dokuments verstanden.

Die Abstammungshistorie einer digital codierten Kopie umfasst ausgehend von einem der Kopie zugrundeliegenden digital codierten Ursprungsdokument alle Kopiervorgänge bzw. Zwischenkopien, welche bei diesen Kopiervorgängen erstellt wurden, bis hin zu der Erstellung der digital codierten Kopie, der die Abstammungshistorie zugeordnet ist. Anhand der Abstammungshistorie kann somit einerseits der Ausbreitungsweg der von einer vorliegenden digital codierten Kopie umfassten Daten von einem zugrundeliegenden Ursprungsdokument bis hin zu der vorliegenden Kopie nachvollzogen werden, andererseits kann durch Vergleich mit den in der Abstammungshistorie angeführten Zwischenkopien nachgeprüft werden, ob und ggf. bei welchem Kopiervorgang Daten verändert wurden.

Unter einer Blockchain-Struktur wird eine Datenstruktur verstanden, welche einen Blockchain bildet. Unter einer "Blockchain" wird eine geordnete Datenstruktur verstanden, welche eine Mehrzahl von miteinander verketteten Datenblöcken umfasst. Insbesondere wird unter einer Blockchain eine Datenbank verstanden, deren Integrität, d.h. Sicherung gegen nachträgliche Manipulation, durch Speicherung eines Prüfmerkmals, wie etwa eines Hashwertes, des vorangehenden Datensatzes in dem jeweils nachfolgenden Datensatz gesichert ist. Das Prüfmerkmal ist dabei dem Inhalt des vorangehenden Datensatzes zugeordnet und charakterisiert diesen eindeutig. Wird der Inhalt des vorangehenden Datensatzes verändert, so erfüllt dieser nicht mehr das Prüfmerkmal, woraus die Veränderung ersichtlich wird. Im Falle von bekannten Blockchain-Strukturen wird etwa jeder Block der Blockchain eindeutig durch einen Hash-Wert identifiziert und referenziert einen Vorgängerblock in der Blockchain, dessen Hash-Wert er umfasst.

Für Beispiele einer Blockchain vergleiche https://en.wikipedia.org/wiki/Block_chain_(database) und "Mastering Bitcoin", Chapter 7, The Blockchain, Seite 161 ff. Das Konzept der Blockchains wurde beispielsweise im Jahre 2008 in einem White Paper unter dem Pseudonym Satoshi Nakamoto im Kontext der Kryptowährung Bitcoin beschrieben ("Bitcoin: Peer-to-Peer Electronic Cash System" (https://bitcoin.org/bitcoin.pdf)). In diesem Ausführungsbeispiel enthält jeder Block der Blockchain in seinem Header den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke nicht möglich ist, ohne auch alle nachfolgenden Blöcke ebenfalls zu modifizieren.

Integrität bezeichnet hier allgemein die Sicherstellung der Korrektheit, d.h. Unversehrtheit bzw. Authentizität, von Daten. Der Begriff Integrität drückt dabei aus, dass die Daten vollständig und unverändert sind. In der Informationstechnik wird der Begriff der Integrität ferner auf "Informationen" angewendet, wobei der Begriff "Information" für Daten steht, denen je nach Zusammenhang bestimmte Attribute wie z. B. Autor oder Zeitpunkt der Erstellung zugeordnet werden können. Der Verlust der Integrität im Fall von Informationen kann daher bedeuten, dass diese unerlaubt verändert, Angaben zum Autor verfälscht oder Zeitangaben zur Erstellung manipuliert wurden.

Ein Identifikator bezeichnet ein charakteristisches Merkmal eines Objekts, wie etwa einer digital codierten Kopiervorlage oder einer digital codierten Kopie, zur eindeutigen Identifizierung des entsprechenden Objekts. Ferner umfasst ein Identifikator eine Adresse zum Aufrufen der digital codierten Kopie. Bei einem Identifikator kann es sich beispielsweise um einen Hyperlink, insbesondere einen Weblink handeln. Beispielswiese umfasst der Identifikator eine URI und/oder eine URL. Zudem kann ein Identifikator einen Dateinamen, Seriennummer und/oder Stammnummer umfassen. Nach Ausführungsformen umfasst ein Identifikator beispielsweise einen alphanumerischen Code und/oder geometrischen Code.

Eine Adresse als Teil eines Identifikators identifiziert einen elektronischen Speicherort, wie etwa ein elektronisches Speichersystem, eine elektronische Speicherkomponente und/oder eine elektronische Speicheradresse, an dem ein digital codiertes Dokument gespeichert ist bzw. bereitgestellt wird. Die Adresse umfasst beispielsweise einen Identifikator eines elektronischen Speichersystems, wie etwa ein Hostsystem bzw. einen Server eines Netzwerks. Nach Ausführungsformen umfasst die Adresse ferner eine Pfadangabe einer Verzeichnisstruktur eines Dateisystems, welches das digital codierte Dokument umfasst. Beispielsweise spezifiziert die Adresse eine Pfadangabe, die an der Wurzel der Verzeichnisstruktur beginnt und alle zu durchlaufenden Verzeichnisse auf dem Pfad von der Wurzel zu dem digital codierten Dokument auflistet. Nach Ausführungsformen kann die Pfadangabe auch auf einer anderen Ebene als der Wurzel der Verzeichnisstruktur starten. Die Adresse kann eine Netzwerkadresse, d.h. eine über ein Netzwerk erreichbare Adresse wie etwa eine IP-Adresse, beispielsweise IPv4 oder IPv6, umfassen. Ferner kann die Adresse einen Datenbankschlüssel, einen Datenbank-Identifikator, einen Dateinamen, und/oder eine Speicheradresse umfassen. Nach Ausführungsformen umfasst eine Adresse beispielsweise einen alphanumerischen Code und/oder geometrischen Code. Nach Ausführungsformen ist die Adresse zum Aufrufen des digital codierten Dokuments zuerst in ein maschinenlesbares Format zu transformieren. Beispielsweise wird die Adresse über das DNS-Protokoll in eine IP-Adresse umgesetzt.

Ein Prüfmerkmal für Daten ist ein den entsprechenden Daten zugeordnetes Merkmal, welches die Daten derart eindeutig charakterisiert, dass die Integrität der Daten anhand des Prüfmerkmals überprüft werden kann. Das Prüfmerkmal wird beispielsweise aus den entsprechenden Daten erzeugt, abgeleitet bzw. berechnet, wie etwa eine Prüfsumme, und ist in der Lage mindestens einen Bitfehler in den Daten zu erkennen. Bei einem Prüfmerkmal kann es sich um einen Prüfwert handeln, etwa in Form einer Prüfsumme, beispielsweise Prüfziffer, Quersumme oder Paritätsbit, oder in Form eines mittels eine Hashfunktion aus den Daten berechneten Hash-Werts. Ferner kann es sich bei einem Prüfmerkmal auch um ein komplexeres Datenkonstrukt handeln, wie etwa eine Matrix. Schließlich kann es sich bei einem Prüfmerkmal auch um eine Prüffunktion handeln, mit einem oder mehreren Parametern, welche aus den entsprechenden Daten erzeugt, abgeleitet bzw. berechnet wurden.

Ausführungsformen können den Vorteil haben, dass anhand der in die Identifikationen integrierten Blockchain-Struktur jederzeit die Abstammungshistorie der entsprechenden Kopien, welche die Identifikatoren identifizieren, nachvollzogen werden kann. Beispielsweise entsprechen die einzelnen Blöcke einer Blockchain-Struktur jeweils einem Kopiervorgang. Somit lässt sich beispielsweise anhand einer Blockchain-Struktur mit N Blöcken nachvollziehen, dass die vorliegende Kopie das Resultat von N Kopiervorgängen ausgehend von einem Ursprungsdokument darstellt. Nach Ausführungsformen kann die Anzahl an Blöcken auch größer als N sein, z.B. N+1, falls etwa ein Genesisblock vorgesehen ist. Ein solcher Genesisblock kann beispielsweise dem Ursprungsdokument zugeordnet sein und dessen Identifikator und/oder Adresse umfassen.

Beispielsweise ist jeder Kopie der Abstammungshistorie ein Identifikator zugeordnet, anhand dessen die individuellen Kopien eindeutig identifizierbar und adressierbar bzw. aufrufbar sind. Aus der Abstammungshistorie kann somit nachvollzogen werden, welche digital codierten Dokumente zwischenzeitlich als Kopiervorlagen, d.h. Zwischenkopien, bei der Erstellung der mit einem vorliegenden Identifikator identifizieren Kopie verwendet wurden. Ferner kann anhand des Prüfmerkmals für jeden der Kopiervorgänge jeweils nachgeprüft werden, welche Daten des Ursprungsdokuments dem jeweiligen Kopiervorgang zugrunde lagen.

Anhand der Daten der Blockchain werden somit detaillierte Informationen dazu bereitgestellt, wie ein durch einen vorliegende Identifikator identifiziertes digital codiertes Dokument zustande gekommen ist. Beispielsweise durch Rückgriff auf die zur Erstellung verwendeten Kopiervorlagen sowie das Ursprungsdokuments kann überprüft werden, ob die bereitgestellten Daten korrekt sind oder ob die Daten im Zuge eines der Kopiervorgänge, sei es versehentlich oder absichtlich, verändert wurden.

Beispielsweise handelt es sich bei der digital codierten Kopie um eine Nachrichtenmeldung oder einen Auszug einer solchen Nachrichtenmeldung, welche etwa im Internet auf einer Webseite bereitgestellt wird. Anhand eines Identifikator der Nachrichtenmeldung, etwa eines Weblinks, mit einer integrierten Blockchain-Struktur kann effektiv und effizient prüfen, woher die entsprechende Nachrichtmeldung erstens stammt und ob diese zweitens verändert wurde. Ist die Integrität der Nachrichtenmeldung gewahrt, so kann anhand ihres Ursprungs zudem beurteilt werden, ob die Meldung vertrauenswürdig ist, d.h. ob darauf vertraut werden kann, dass Sachverhalte der realen Welt korrekt abgebildet werden.

Ausführungsformen können somit den Vorteil haben das Manipulationen, welche einem Man-in-the-Middle-Angriff (MITM-Angriff) entsprechen, unterbunden bzw. erfolgreich abgewehrt werden können. Bei der Verbreitung eines Dokuments, wie etwa einer Nachrichtenmeldung, über das Internet hat im Allgemeinen weder der Ersteller des Ursprungsdokuments noch der Leser, welcher über einen Identifikator, wie etwa einen Weblink, auf eine Kopie des Ursprungsdokuments zugreift, Einfluss auf den in der entsprechenden Kopie resultierenden Ausbreitungsweg der Daten. Dieser Ausbreitungsweg umfasst möglicherweise eine Mehrzahl von Kopiervorgängen bzw. Vervielfältigungsprozessen. Ausführungsformen erlauben es diesen Ausbreitungsweg vollständig zu rekonstruieren und mögliche Man-in-the-Middle-Angriffe zu identifizieren. Ferner können unter Verwendung der Blockchain das Ursprungsdokument identifiziert und/oder die ursprünglichen Daten rekonstruiert werden.

Durch Abgleich mit der Abstammungshistorie gemäß der Blockchain-Struktur mit den in der Blockchain-Struktur identifizierten Kopiervorlagen sowie dem Ursprungsdokument kann beispielsweise zunächst geprüft werden, ob die Integrität der Blockchain-Struktur bzw. der darin protokollierten Abstammungshistorie gewahrt ist. Können alle in der Abstammungshistorie angeführten Dokumente tatsächlich identifiziert werden und kann die Korrektheit aller in der Abstammungshistorie angeführten Prüfelemente durch Vergleich mit den identifizierten Dokumenten nachgewiesen werden, so ist die Integrität der Blockchain-Struktur. Mit anderen Worten gibt die Blockchain-Struktur also die tatsächliche Abstammungshistorie wider. Durch Vergleich der Daten der vorliegenden Kopie mit den Daten des in der Blockchain-Struktur identifizierten Ursprungsdokuments kann beispielsweise nachgeprüft werden, ob die Daten im Zuge der Vervielfältigung verändert wurden, d.h. ob die Integrität der entsprechenden Daten gewahrt wurde.

In diesem Kontext bedeutet die Feststellung, dass die Integrität der kopierten Daten verletzt wurde, nicht unbedingt, dass beispielsweise inhaltliche Aussagen eines Textes verändert wurden. Vielmehr kann es sich bei einer die Integrität verletzenden Veränderung beispielsweise auch um eine hinzugefügte Erläuterung, ein Weglassungen und/oder eine schriftbildliche Änderung handeln. Anhand der Prüfmerkmale der einzelnen Blöcke der Blockchain kann nachvollzogen werden, welche Kopiervorlagen mit welchem Dateninhalt den einzelnen Kopiervorgängen jeweils zugrunde gelegen haben. Dabei protokolliert die Blockchain-Struktur zugleich auch alle Änderungen, falls solche an den Daten des Ursprungsdokuments im Zuge der Kopiervorgänge vorgenommen wurden. Die Blockchain-Struktur kann somit herangenommen werden, um durch Abgleich mit den einzelnen in der Blockchain-Struktur angeführten Kopiervorlagen der Abstammungshistorie und insbesondere mit dem Ursprungsdokument nachzuprüfen, ob Daten im Zuge der Kopiervorgänge verändert wurden und worin diese Veränderungen gegebenenfalls bestehen.

Stellt man beispielsweise ein für eine Kopiervorlage berechnetes Prüfmerkmal einem für die resultierende Kopie berechneten Prüfmerkmal ohne Berücksichtigung des aus dem Kopiervorgang resultierenden zusätzlichen Blocks der Blockchain-Struktur gegenüber, so zeigt sich im Falle einer Übereinstimmung beider Prüfmerkmale, dass keine Veränderung der Daten vorgenommen wurde. Aus einer Abweichung ergibt andererseits, dass die Daten im Zuge des Kopiervorgangs verändert wurden.

Wird beispielsweise eine digital codierte Kopie in Form einer durch eine Webseite bereitgestellten Nachrichtmeldung unter Verwendung eines Identifikators der Kopie aufgerufen, so kann das Computersystem des Nutzers im Hintergrund unter Verwendung der in den Identifikator, etwa einen Weblink, integrierten Blockchain-Struktur eine Integritätsprüfung des aufgerufenen Dokuments ausführen. Das Ergebnis dieser Integritätsprüfung kann beispielsweise in der Mitteilung bestehen, dass keine Veränderungen an den kopierten Daten vorgenommen wurden und diese mit den Daten des ursprünglichen Dokuments identisch sind. Ferner kann die Abstammungshistorie des aufgerufenen Dokuments angezeigt werden. Wenn die Identifikatoren der einzelnen Kopien beispielsweise auch identifizieren, wer diese Kopien erstellt hat, kann die Abstammungshistorie zudem aufzeigen, von wem eine Nachrichtmeldung stammt bzw. wer aktiv zu deren Verbreitung beigetragen hat. Ferner kann das Ergebnis der Integritätsprüfung anzeigen, dass die vorliegenden Daten nicht identisch mit den Daten des ursprünglichen Dokuments sind. Darüber hinaus kann die Mitteilung nach Ausführungsformen aber auch exakt bestimmen, an welchen Punkten der Abstammungshistorie, d.h. bei welchem Kopiervorgang und ggf. von wem, welche Änderungen an den Daten vorgenommen wurden. Hierzu umfassen die Identifikatoren der Kopiervorlagen wie zuvor erläutert vorteilhafterweise jeweils einen Identifikator des Erstellers der Kopiervorlage. Dieser Identifikator kann beispielsweise ein Computersystem, wie etwa einen Server, identifizieren, welcher die Kopiervorlage bereitstellt. Dies kann beispielsweise unter Verwendung einer IP-Adresse erfolgen. Ferner kann der Identifikator beispielswiese eine Internetdomain, eine Website, ein Profil einer Social-Media-Plattform oder eines Forums, ein Pseudonym, eine IP-Adresse, eine juristische Person und/oder eine natürliche Person als Ersteller identifizieren.

Nach Ausführungsformen umfasst der zusätzliche Block der Blockchain-Struktur ferner eine Adresse zum Aufrufen des verwendeten Identifikators der ersten Kopiervorlage.

Nach Ausführungsformen umfasst das Bereitstellen der ersten Kopiervorlage:
- Aufrufen einer zweiten digital codierten Kopiervorlage, welche die Daten des digital codierten Ursprungsdokuments umfasst, unter Verwendung eines Identifikators der zweiten Kopiervorlage, welcher eine Adresse zum Aufrufen der zweiten Kopiervorlage umfasst,
- Erstellen der ersten Kopiervorlage als eine zweite digital codierte Kopie von Daten der zweiten digital codierten Kopiervorlage, wobei die kopierten Daten der zweiten Kopie die Daten des digital codierten Ursprungsdokuments umfassen,
- Bereitstellen der zweiten Kopie unter der Adresse zum Aufrufen der ersten Kopiervorlage,
- Erstellen des Identifikators der zweiten Kopie, wobei der Identifikator der zweiten Kopie die zweite Adresse umfasst, wobei ein Block der Blockchain-Struktur als Parameterwert zu dem Identifikator der zweiten Kopie hinzugefügt wird, wobei der Block der zweiten Kopiervorlage zugeordnet ist, wobei der Block die Adresse der zweiten Kopiervorlage sowie einen Prüfmerkmal der kopierten Daten umfasst, welcher eine Integritätsprüfung der kopierten Daten der zweiten Kopie ermöglicht,
- Bereitstellen des Identifikators der zweiten Kopie zum Aufrufen der zweiten Kopie und zum Prüfen der Identität der kopierten Daten der zweiten Kopie.

Die Verwendung von Ordinalzahlen wie "erstes", "zweites", "drittes" etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren. Insbesondere kann es sich bei der zuvor genannten "zweiten" Kopie beispielsweise um eine Kopie handeln, welche als ("erste") Kopiervorlage zum Erstellen der "ersten" Kopie verwendet und somit in zeitlicher Hinsicht vor der "ersten" Kopie erstellt wird.

Ausführungsformen können den Vorteil haben, dass durch eine sukzessive Erweiterung der Blockchain-Struktur mit jedem Kopiervorgang und ein Einfügen der resultierenden erweiterten Blockchain-Struktur in den Identifikator der durch den entsprechenden Kopiervorgang erstellten Kopie für jeder Identifikator, welcher eine Kopie identifiziert Informationen zu ihrer vollständigen Abstammungshistorie bereitstellt. Fehlt es einem Identifikator an einer solchen Blockchain-Struktur, so ist der Identifikator und damit das von diesem identifizierte digital codierte Dokument bzw. die von diesem identifizierte digital codierte Kopie nicht vertrauenswürdig.

Nach Ausführungsformen umfasst der hinzugefügte Block der Blockchain-Struktur ferner eine Adresse zum Aufrufen des verwendeten Identifikators der zweiten Kopiervorlage.

Nach Ausführungsformen handelt es sich bei der zweiten digital codierten Kopiervorlage um das digital codierte Ursprungsdokument.

Ausführungsformen können den Vorteil haben, dass die Blockchain-Struktur ausgehend von der ersten Kopie des digital codierten Ursprungsdokuments mit jedem weiteren Kopierschritt sukzessive wächst. Nach Ausführungsformen umfasst das ein Identifikator des digital codierten Ursprungsdokuments keine Blöcke der Blockchain-Struktur. Der Identifikator der unter Verwendung des Ursprungsdokuments als Kopiervorlage erstellten Kopie umfasst einen ersten Block der Blockchain-Struktur. Ein Identifikator einer weitere auf Basis dieser Kopie als Kopiervorlage erstellten Kopie umfasst sodann zwei Blöcke der Blockchain, d. h. den in der Reihenfolge ersten und zweiten Block der Blockchain-Struktur. Dies setzt sich mit jeder weiteren Kopie fort. Nach weiteren Ausführungsformen umfasst bereits der Identifikator des digital codierten Ursprungsdokuments einen ersten Block der Blockchain-Struktur, d.h. einen Genesisblock. Dieser Genesisblock kann beispielsweise das Ursprungsdokument als ein Ursprungsdokument kennzeichnen. Ferner kann der Genesisblock ein Prüfmerkmal und/oder eine Adresse des Ursprungsdokuments umfassen.

Der Identifikator der zweiten Kopiervorlage umfasst als Parameterwert eine Blockchain-Struktur umfasst, wobei die Blockchain-Struktur einen Block für jeden Kopiervorgang der Abstammungshistorie der zweiten Kopiervorlage ausgehend von dem digital codierten Ursprungsdokument bis hin zu der Erstellung der zweiten Kopiervorlage umfasst. Die Blöcke sind jeweils der Kopiervorlage zugeordnet, welche für den entsprechenden Kopiervorgang verwendet wurde. Jeder der Blöcke umfasst jeweils eine Adresse zum Aufrufen der Kopiervorlage, welcher der entsprechende Block zugeordnet ist. Jeder der Blöcke umfasst jeweils ein Prüfmerkmal der kopierten Daten des entsprechenden Kopiervorgangs, welcher eine Integritätsprüfung der kopierten Daten inklusive des Identifikators der Kopiervorlage ermöglicht, welcher der entsprechende Block zugeordnet ist.

Der Identifikator der zweiten Kopie umfasst als Parameterwert die Blockchain-Struktur der zweiten Kopiervorlage. Das Hinzufügen des Blocks zu dem Identifikator der zweiten Kopie umfasst ein Erweitern der Blockchain-Struktur der zweiten Kopiervorlage um den entsprechenden Block. Das Prüfmerkmal der kopierten Daten ermöglicht eine Integritätsprüfung der kopierten Daten der zweiten Kopie inklusive des Identifikators der zweiten Kopiervorlage.

Ausführungsformen können den Vorteil haben, dass jeder Identifikator jeder Kopie ausgehend von dem digital codierten Ursprungsdokument einen Block für jeden Kopiervorgang der Abstammungshistorie der entsprechenden Kopie umfasst. Bei diesen Kopiervorgängen handelt es sich um solche Kopiervorgänge, welche die entsprechende Kopie jeweils in einer direkten Folge mit dem Ursprungsdokument verbinden. Dient eine der Kopien als Kopiervorlage für eine Mehrzahl weiterer Kopien, so bildet diese Kopiervorlage einen Verzweigungspunkt. Die Blockchain-Strukturen der Identifikatoren der nachfolgenden Kopien unterscheiden sich dann je nachdem, zu welchem Zweig der Verzweigung die entsprechenden Kopien gehören. In diesem Fall weist jede Blockchain-Struktur der Identifikatoren von nachfolgenden Kopien für sich genommen beispielsweise nur einen Blockchain-Strang bzw. Zweig auf, d.h. keine Verzweigung. Betrachtet man jedoch die Blockchain-Strukturen von Identifikatoren unterschiedlicher Zweige zusammen, so bilden diese eine Baumstruktur, d. h. die einzelnen Blockstränge weisen ausgehend von dem Ursprungsdokument unterschiedlich lange Anfangsabschnitte auf, welche zumindest für einige der Blockstränge identisch sind. Insbesondere weisen alle Blockstränge das Ursprungsdokument als gemeinsamen, identischen Ursprung auf.

Nach Ausführungsformen umfasst jeder der Blöcke jeweils eine Adresse zum Aufrufen des Identifikators der Kopiervorlage, welcher der entsprechende Block zugeordnet ist.

Nach Ausführungsformen umfassen die kopierten Daten der ersten digital codierten Kopie und/oder die kopierten Daten der zweiten digital codierten Kopie zumindest einen Auszug der Daten des digital codierten Ursprungsdokuments.

Nach Ausführungsformen umfassen die kopierten Daten der ersten digital codierten Kopie und/oder die kopierten Daten der zweiten digital codierten Kopie die vollständigen Daten des digital codierten Ursprungsdokuments.

Ausführungsformen können den Vorteil haben, dass die digital codierten Kopien das Ursprungsdokument vollständig als Kopie umfassen. Alternative Ausführungsformen können den Vorteil haben, dass sie Teile des Ursprungsdokuments umfassen, beispielsweise einen oder mehrere Auszüge aus diesem. Bei einer Integritätsprüfung einer der Kopien anhand der Blockchain-Strukturen eines zugeordneten Identifikators, würde nach Ausführungsformen auffallen, dass das Ursprungsdokument nicht vollständig übernommen wurde.

Nach Ausführungsformen umfassen die Identifikatoren der Kopien und Kopiervorlagen jeweils eine URI und das Aufrufen der jeweiligen Kopien und/oder Kopiervorlagen erfolgt über ein Netzwerk. Ein URI (Uniform Resource Identifier) bezeichnet einen Identifikator bzw. einen einheitlichen Identifikator für Ressourcen und besteht aus einer Zeichenfolge, die zur Identifizierung einer abstrakten oder physischen Ressource dient. URIs können beispielsweise zur Bezeichnung von Ressourcen, wie etwa Webseiten, sonstigen Dateien, Aufruf von Webservices, aber auch z. B. E-Mail-Empfängern, im Internet eingesetzt werden. In diesem Fall stellt beispielsweise die URI selbst die Adresse eines digital codierten Dokuments bzw. digital codierten einer Kopie bereit. Nach Ausführungsformen ist die URI um eine Blockchain-Struktur der Abstammungshistorie des entsprechenden digital codierten Dokuments als Parameterwert der URI erweitert.

Nach Ausführungsformen umfassen die Identifikatoren der Kopien und Kopiervorlagen jeweils eine URL. Eine URL (Uniform Resource Locator) bezeichnet einen Identifikator in Form eines einheitlichen Ressourcenzeigers, welcher eine Ressource identifiziert und lokalisiert. Dabei gibt die URL beispielswiese eine zu verwendende Zugriffsmethode, zum Beispiel ein zu verwendendes Netzwerkprotokoll wie HTTP oder FTP, und den Speicherort der Ressource in einem Netzwerk an. Beispielsweise gibt die URL eine Webseite an. URLs sind eine Unterart der generellen Identifikationsbezeichnung mittels URls. In vorliegenden Fall stellt beispielsweise die URL selbst die Adresse eines digital codierten Dokuments bzw. digital codierten einer Kopie bereit. Nach Ausführungsformen ist die URL um eine Blockchain-Struktur der Abstammungshistorie des entsprechenden digital codierten Dokuments als Parameterwert der URL erweitert.

Nach Ausführungsformen sind die Identifikatoren jeweils zur Verwendung in einem Protokoll zur Übertragung von Daten auf der Anwendungsschicht des TCP/IP-Referenzmodels editiert. Nach Ausführungsformen handelt es sich bei dem Protokoll um ein HTTP- oder HTTPS-Protokoll. Nach weiteren Ausführungsformen handelt es sich bei dem Protokoll um FTP.

Ausführungsformen können den Vorteil haben, dass ein Identifikator bereitgestellt werden kann, welcher einen direkten Zugriff auf ein von dem Identifikator identifiziertes digital codiertes Dokument erlaubt und zugleich eine Blockchain-Struktur zur Integritätsprüfung des aufgerufenen Dokuments bereitstellt. Nach Ausführungsformen kann bereits vor dem Aufrufen des digital codierten Dokuments dessen Integrität anhand der durch den Identifikator bereitgestellten Blockchain-Struktur auf ihre Validität hin geprüft werden.

Nach Ausführungsformen umfasst das Verfahren ferner: auf das Hinzufügen des Blocks zu dem Identifikator der zweiten Kopiervorlage hin, Aktualisieren der Blockchain-Strukturen aller Identifikatoren aller Kopien, welche die Abstammungshistorie der zweiten Kopiervorlage umfasst, wobei das Aktualisieren jeweils ein Ergänzen der entsprechenden Blockchain-Struktur um den hinzugefügten Block umfasst. Nach Ausführungsformen umfasst das Verfahren ferner: auf das Hinzufügen des zusätzlichen Blocks zu der Blockchain-Struktur der ersten Kopiervorlage in dem Identifikator der ersten Kopie hin, Aktualisieren der Blockchain-Strukturen aller Identifikatoren aller Kopien, welche die Abstammungshistorie der ersten Kopiervorlage umfasst, wobei das Aktualisieren jeweils ein Ergänzen der entsprechenden Blockchain-Struktur um den zusätzlichen Block umfasst.

Ausführungsformen können den Vorteil haben, dass für alle Kopiervorlagen der Abstammungshistorie bei jedem nachfolgenden Kopiervorgang jeweils die Blockchain-Struktur zumindest eines Identifikator ebenfalls erweitert wird. Bei diesen Identifikatoren handelt es sich jeweils um den Identifikator, welcher beim Aufrufen der Kopiervorlage zum Erstellen der jeweiligen Kopie verwendet wurde bzw. welche beim Erstellen der entsprechenden Kopiervorlage zum Aufrufen derselben erstellt wurde. Im Ergebnis umfasst somit jeder der zuvor genannten Identifikatoren eine vollständige Blockchain-Struktur, die nicht nur alle der entsprechenden Kopiervorlagen vorangehenden bzw. zugrundeliegenden Kopiervorlagen, sondern zudem auch alle aus ihr hervorgegangenen Kopien identifiziert. Liegt eine einzelne Kopie der Abstammungshistorie vor, so kann aus der Blockchain-Struktur des zugeordneten Identifikators abgeleitet werden, welche weiteren Kopien aus dieser Kopie bis jetzt hervorgegangen sind. Wenn diese Kopie oder zumindest eine aus dieser Kopien hervorgegangen Kopie als direkte Kopiervorlage für eine Mehrzahl unabhängiger Kopien gedient hat, so weist die aktualisierte Blockchain-Struktur des Identifikators der vorliegenden Kopie Verzweigungen auf. Solche Verzweigungen ergeben sich jedes Mal, wenn die vorliegende Kopie oder eine nachfolgende Kopie als direkte Kopiervorlage für mehr als eine Kopie dient. Mit anderen Worten umfasst eine solche Blockchain-Struktur nicht nur einen einzelnen Blockchain-Strang bzw. Zweig, sondern eine baumförmige Struktur mit Verzweigungen, d.h. einer Mehrzahl von Zweigen. Somit kann der vollständige Ausbreitungsweg der kopierten Daten auf der Basis eines Identifikators einer digital codierten Kopie der Daten nachvollzogen werden.

Nach Ausführungsformen umfassen die Blöcke der Blockchain-Struktur ferner jeweils eine Adresse unter welcher der von dem entsprechenden Block umfasste Identifikator bereitgestellt wird. Unter Verwendung dieser Adressen können die Identifikatoren und/oder die die Identifikatoren bereitstellenden Computersysteme adressiert werde, um eine Aktualisierung der Blockchain-Strukturen der entsprechenden Identifikatoren zu initialisieren bzw. auszuführen.

Nach Ausführungsformen umfasst ein Identifikator des Ursprungsdokuments eine Adresse zum Aufrufen des Ursprungsdokuments und eine Blockchain-Struktur umfasst. Nach Ausführungsformen umfasst das Verfahren ferner: auf das Hinzufügen des Blocks zu dem Identifikator der zweiten Kopiervorlage hin, Aktualisieren der Blockchain-Struktur des Identifikators des Ursprungsdokuments, wobei das Aktualisieren ein Ergänzen der Blockchain-Struktur des Identifikators des Ursprungsdokuments um den hinzugefügten Block umfasst. Nach Ausführungsformen umfasst das Verfahren ferner: auf das Hinzufügen des zusätzlichen Blocks zu der Blockchain-Struktur der ersten Kopiervorlage in dem Identifikator der ersten Kopie hin, Aktualisieren der Blockchain-Struktur des Identifikators des Ursprungsdokuments, wobei das Aktualisieren ein Ergänzen der Blockchain-Struktur des Identifikators des Ursprungsdokuments um den zusätzlichen Block umfasst.

Ausführungsformen können den Vorteil haben, dass die Blockchain-Struktur des Identifikators des Ursprungsdokuments die vollständigen Abstammungshistorien aller Kopien wiedergibt, welche auf Basis des Ursprungsdokuments erstellt wurden.

Nach Ausführungsformen handelt es sich bei den Blockchain-Strukturen jeweils um eine bidirektional verkettete Blockchain-Struktur und das Hinzufügen eines Blocks zu den Blockchain-Strukturen im Zuge eines Kopiervorgangs umfasst ferner jeweils:
- Bereitstellen einer kopiervorgangsunabhängigen Verkettungsfunktion,
- Ableiten einer kopiervorgangsindividuellen bidirektionalen Verkettungsfunktion aus der kopiervorgangsunabhängigen Verkettungsfunktion,
   wobei für das Ableiten ein Dateninhalt der Kopie, welche im Zuge eines Kopiervorgangs erstellt wird, als ein erster Parameter und ein Dateninhalt der Kopiervorlage, welche für den Kopiervorgang verwendet wird, als ein zweiter Parameter verwendet werden, sodass die kopiervorgangsindividuelle bidirektionale Verkettungsfunktion paarweise sowohl von der erstellten Kopie als auch von der verwendeten Kopiervorlage abhängig ist,
- bidirektionales Verketten des hinzuzufügenden Blocks mit dem zuletzt hinzugefügten Block der entsprechenden Blockchain-Struktur.

Unter einer kopiervorgangsunabhängigen Verkettungsfunktion wird hier eine Funktion zum Erzeugen bzw. Ableiten einer Prüffunktion verstanden. Unter einer kopiervorgangsindividuellen Verkettungsfunktion eine aus einer kopiervorgangsunabhängigen Verkettungsfunktion erzeugte bzw. abgeleitete Prüffunktion verstanden, welche von den kopierten Daten eines Kopiervorgangs abhängt.

Handelt es sich bei der kopiervorgangsunabhängigen Verkettungsfunktion um eine Funktion zum Erzeugen einer unidirektionalen Prüffunktion, umfasst die kopiervorgangsunabhängige Verkettungsfunktion zumindest einen Parameter, welcher abhängig ist von ersten Daten. Durch das Hinzufügen der Prüffunktion und/oder das Anwenden der Prüffunktion zu bzw. auf zweite Daten wird eine unidirektionale Verknüpfung zwischen den ersten und den zweiten Daten erzeugt. Anhand der zweiten Daten, zu welchen die Prüffunktion hinzugefügt wurde und/oder auf die die Prüffunktion angewendet wurde, kann die Integrität der ersten Daten geprüft werden. Hierzu wird beispielsweise unter Verwendung der ersten Daten eine zusätzliche Prüffunktion berechnet und diese mit der von den zweiten Daten bereitgestellten Prüffunktion verglichen. Stimmen beide Prüffunktionen überein, ist die Integrität der ersten Daten gewahrt. Insbesondere kann eine solche unidirektionale Prüffunktion daher zum Erzeugen einer unidirektional verkettenden Blockchain-Struktur verwendet werden. Bei den ersten Daten handelt es sich beispielsweise um Daten einer Kopiervorlage, welche für einen Kopiervorgang verwendet wurde, und bei den zweiten Daten um eine aus dem Kopiervorgang resultierende Kopie von Daten der Kopiervorlage. Die unidirektionale Prüffunktion wird beispielsweise hinzugefügt zu oder angewendet auf einen zusätzlichen Block der Blockchain-Struktur, welcher zu der erstellen Kopie hinzugefügt wird. Ferner kann die unidirektionale Prüffunktion nach Ausführungsformen auf die erstellte Kopie angewendet werden.

Handelt es sich bei der kopiervorgangsunabhängigen Verkettungsfunktion um eine Funktion zum Erzeugen einer bidirektionalen Prüffunktion, umfasst die kopiervorgangsunabhängige Verkettungsfunktion zumindest zwei Parameter. Alternativ umfasst die kopiervorgangsunabhängige Verkettungsfunktion zumindest einen Parameter, welcher das Ergebnis einer Verknüpfung eines ersten mit einem zweiten Parameter ist.

Eine bidirektionale Prüffunktion, d.h. eine kopiervorgangsindividuelle Verkettungsfunktion, umfasst somit beispielsweise zumindest einen ersten Parameter, welcher von ersten Daten abhängig ist, und einen zweiten Parameter, welcher von zweiten Daten abhängig ist. Alternativ umfasst die bidirektionale Prüffunktion einen Parameter, welcher das Ergebnis einer Verknüpfung eines von den ersten Daten abhängigen ersten Parameters und eines von den zweiten Daten abhängigen zweiten Parameters ist. Durch das Hinzufügen der Prüffunktion zu einem Block, welcher den ersten Daten zugeordnet ist, ebenso wie zu einem Block, welcher den zweiten Daten zugeordnet ist, wird eine bidirektionale Verknüpfung zwischen dem Block der ersten Daten und dem Block der zweiten Daten bzw. zwischen den ersten und den zweiten Daten erzeugt. Anhand der zweiten Daten kann somit die Integrität der ersten Daten überprüft werden und anhand der ersten Daten die Integrität der zweiten Daten. Hierzu wird beispielsweise unter Verwendung der ersten Daten und der zweiten Daten eine zusätzliche Prüffunktion berechnet und diese mit der bereitgestellten Prüffunktion verglichen. Stimmen die berechnete und die bereitgestellte Prüffunktionen überein, ist die Integrität der ersten und zweiten Daten gewahrt.

Insbesondere kann eine solche bidirektionale Prüffunktion zum Erzeugen einer bidirektional verkettenden Blockchain-Struktur verwendet werden. Bei den ersten Daten handelt es sich beispielsweise um Daten einer Kopiervorlage, welche für einen Kopiervorgang verwendet wurde, und bei den zweiten Daten eine aus dem Kopiervorgang resultierende Kopie von Daten der Kopiervorlage. Die bidirektionale Prüffunktion wird beispielsweise hinzugefügt zu oder angewendet auf einen zusätzlichen Block der Blockchain-Struktur, welcher zu einem Identifikator der erstellen Kopie hinzugefügt wird. Zudem wird die bidirektionale Prüffunktion beispielsweise hinzugefügt zu oder angewendet auf den Block der Blockchain-Struktur, welcher dem zusätzlichen Block unmittelbar vorangeht. Ferner kann die bidirektionale Prüffunktion nach Ausführungsformen auf die erstellte Kopie und/oder die Kopiervorlage angewendet werden.

Nach Ausführungsformen kann das Verfahren bei Verwendung einer bidirektionale Prüffunktion zum bidirektionalen Verketten ferner umfassen: Aktualisieren der Blockchain-Struktur des Identifikators der Kopiervorlage, welche für die Erstellung der Kopie verwendet wurde. Dabei umfasst das Aktualisieren ein Hinzufügen der Prüffunktion zu oder Anwenden auf den letzten Block der Blockchain-Struktur des Identifikators der Kopiervorlage. Im Ergebnis entspricht dieser Block des Identifikators der Kopiervorlage somit dem Block der Blockchain-Struktur der erstellten Kopie, welcher dem zusätzlich hinzugefügten Block unmittelbar vorangeht.

Unter einer bidirektionalen Verkettung zweier Blöcke einer Blockchain-Struktur wird hier eine Transformation beider Blöcke verstanden, wobei die Transformation von Dateninhalten beider Blöcke abhängt, sodass die Transformationsergebnisse der Blöcke Paare bilden welche gegenseitig voneinander abhängig sind. Wird der Dateninhalt eines der beiden Blöcke geändert, so ändert sich automatisch auch das Transformationsergebnis des zweiten Blocks. Demgegenüber wird unter einer unidirektionalen Verkettung zweier Blöcke eine Transformation eines der beiden Blöcke verstanden, wobei die Transformation vom Dateninhalten des nicht transformierten Blocks abhängt, sodass auch das Transformationsergebnisse vom Dateninhalten des nicht transformierten Blocks abhängt. Wird der Dateninhalt des zu transformierenden Blocks geändert, so hat dies keinen Einfluss auf den nicht zu transformierten Block. Eine Transformation eines Blocks umfasst hier ein Hinzufügen eines Prüfmerkmals, wie beispielsweise einer Prüffunktion, zu dem Inhalt des entsprechenden Blocks. Ferner kann eine Transformation im Falle einer Prüffunktion ein Anwenden der Prüffunktion auf den Inhalt des entsprechenden Blocks umfassen.

Nach Ausführungsformen weisen die Blöcke der resultierenden Blockchain-Struktur somit abgesehen von dem ersten und letzten Block jeweils zwei unterschiedliche kopiervorgangsindividuelle bidirektionale Verkettungsfunktionen auf: Eine Verkettungsfunktion, welche die Verkettung zu dem unmittelbar vorangehenden Block etabliert und eine Verkettungsfunktion, welche die Verkettung zu dem unmittelbar nachfolgenden Block etabliert. Liegen die beiden Verkettungsfunktionen in Form zweier Prüffunktionen vor, so können die beiden Prüffunktionen miteinander verknüpft werden. Bei der Verknüpfung kann es sich beispielsweise um eine arithmetische Verknüpfung, wie Addition, Subtraktion, Multiplikation und/oder Division handeln. Die resultierende Verknüpfung kann dann zu dem entsprechenden Block hinzugefügt oder auf diesen angewendet werden.

Ausführungsformen können den Vorteil haben, dass durch die Verwendung einer kopiervorgangsindividuellen bidirektionalen Verkettungsfunktion nicht nur Manipulationen vorangehender Blöcke der Blockstruktur, wie etwa im Falle bekannter Blockchain-Strukturen, verhindert werden können, sondern darüber hinaus auch Manipulationen nachfolgender Blöcke. Aus der kopiervorgangsunabhängigen Verkettungsfunktion wird eine kopiervorgangsindividuelle Verkettungsfunktion abgeleitet. Mit anderen Worten wird für jeden Kopiervorgang, d. h. für jede individuelle Verbindung zwischen zwei Blöcken der Blockchain-Struktur, jeweils eine individuelle Verkettungsfunktion bereitgestellt, welche unter Verwendung von Dateninhalten beider miteinander zu verbindender Blöcke erzeugt wird. Wird die Blockchain-Struktur beispielsweise abgeschnitten, so wird aus der Verkettung des letzten verbleibenden Blocks der Blockchain-Struktur ersichtlich, dass mindestens ein nachfolgender Block fehlt, d.h. die Blockchain-Struktur unvollständig ist. Beispielsweise umfasst der letzte verbleibende Block eine bidirektionale Verkettungsfunktion, welche von Daten eines abgeschnittenen Blocks der Blockchain-Struktur oder eines dem abgeschnittenen Block zugeordneten Dokuments abhängt. Ausführungsformen können somit die Manipulationssicherheit der Blockchain-Struktur erhöhen. Insbesondere können sie die Manipulationssicherheit im Vergleich zu bekannten unidirektionalen Blockchain-Struktur erhöhen.

Nach Ausführungsformen umfasst das bidirektionale Verketten ein Hinzufügen der kopiervorgangsindividuellen bidirektionalen Verkettungsfunktion als Prüfmerkmal sowohl zu dem hinzuzufügenden Block als auch zu dem zuletzt hinzugefügten Block der entsprechenden Blockchain-Struktur.

Ausführungsformen können den Vorteil haben, dass die kopiervorgangsindividuelle bidirektionale Verkettungsfunktion in beide zu verkettenden Blöcken jeweils aufgenommen wird und somit jeder der beiden Blöcke jeweils die vollständige Verkettungsfunktion umfasst. Wird einer der beiden Blöcke manipuliert, so fällt dies auf Grundlage der mit der Manipulation nicht mehr kompatiblen Verkettungsfunktion des nicht manipulierten Blocks auf.

Nach Ausführungsformen kann es sich bei der bidirektionalen Verkettungsfunktion beispielsweise um eine Hash-Funktion oder eine Kombination von zwei Hash-Funktionen handeln.

Nach Ausführungsformen umfasst das bidirektionale Verketten ein Anwenden der kopiervorgangsindividuellen bidirektionalen Verkettungsfunktion auf die kopierten Daten und ein Hinzufügen des resultierenden Ergebnisses als Prüfmerkmal sowohl zu dem hinzuzufügenden Block als auch zu dem zuletzt hinzugefügten Block der entsprechenden Blockchain-Struktur.

Ausführungsformen können den Vorteil haben, dass durch Anwenden der kopiervorgangsindividuellen bidirektionalen Verkettungsfunktionen die kopierten Daten transformiert werden können. Das Ergebnis einer solchen Transformation kann beispielsweise ein Chiffrat sein, sodass die Daten ohne Kenntnis der Verkettungsfunktion bzw. einer zu der Verkettungsfunktion inversen Funktion nicht in ihre ursprüngliche Form zurücktransformiert werden können. Dies kann insbesondere vorteilhaft sein im Falle von sicherheitssensiblen Daten, welche vor unberechtigten Zugriffen geschützt werden sollen.

Nach Ausführungsformen umfasst das bidirektionale Verketten ein Anwenden der kopiervorgangsindividuellen bidirektionalen Verkettungsfunktion auf die kopierten Daten und ein Hinzufügen der kopiervorgangsindividuellen bidirektionalen Verkettungsfunktion als Prüfmerkmal sowohl zu dem hinzuzufügenden Block als auch zu dem zuletzt hinzugefügten Block der entsprechenden Blockchain-Struktur. Nach Ausführungsformen umfasst das bidirektionale Verketten ferner ein Anwenden der kopiervorgangsindividuellen bidirektionalen Verkettungsfunktion auf die als Kopiervorlage dienenden Daten.

Nach Ausführungsformen wird zumindest eine der Blockchain-Strukturen durch eine verkürzte Blockchain-Struktur ersetzt, wobei die verkürzte Blockchain-Struktur um zumindest ein inneres Kettensegment der Blockchain-Struktur verkürzt ist, wobei das innere Kettensegment zumindest einen Block umfasst, und wobei zwei direkte Nachbarblöcke, zwischen denen das innere Kettensegment entnommen wurde, mit einer bidirektionalen Verkettungsfunktion verketten werden, welche eine Kombination aller kopiervorgangsindividuellen bidirektionalen Verkettungsfunktionen der Blöcke des inneren Kettensegments umfassen.

Ausführungsformen können den Vorteil haben, dass die Blockchain-Struktur verkürzt werden kann, ohne dass die Informationen über die Verkettungen der entnommenen Blöcke verloren gehen. Bei der Kombination der kopiervorgangsindividuellen bidirektionalen Verkettungsfunktionen der Blöcke des inneren Verkettungssegments kann es sich beispielsweise um Verknüpfungen, wie etwa arithmetische Verknüpfungen, handeln. Solch arithmetische Verknüpfungen können beispielsweise Addition, Subtraktion, Multiplikation und/oder Division umfassen. Die kopiervorgangsindividuellen bidirektionalen Verkettungsfunktionen sind jeweils von Dateninhalten der Blöcke, welche sie verketten, bzw. von Dateninhalten, welchen diese Blöcke eindeutig zugeordnet sind, abhängig. Als Kombination aller kopiervorgangsindividuellen bidirektionalen Verkettungsfunktionen der Blöcke des inneren Kettensegments umfasst die bidirektionale Verkettungsfunktion, welche die beiden nach der Entnahme des inneren Kettensegments verbleibenden losen Enden des Blockchain-Strangs miteinander verkettet, somit Informationen über alle Dateninhalte aller zwischen den losen Enden entnommenen Blöcke des inneren Kettensegments.

Ausführungsformen können den Vorteil haben, dass durch Verkürzen der Blockchain-Struktur beispielsweise Speicherplatz gespart werden kann. Dies kann insbesondere vorteilhaft sein, wenn die entsprechenden Blockchain-Strukturen in den Dokumenten selbst integriert sind. Hiermit kann verhindert werden, dass bei einer Vielzahl von Kopiervorgängen die von den Dokumenten umfassten Datenmengen zu groß werden.

Nach Ausführungsformen wird für eine Integritätsprüfung einer Kopie unter Verwendung eines Identifikators mit der verkürzten Blockchain-Struktur das entnommene innere Kettensegment bereitgestellt. Anhand der bidirektionalen Verkettungsfunktion, welche die beiden Blöcke verkettet, zwischen denen das innere Kettensegment entnommen wurde, kann durch Abgleich mit dem bereitgestellten inneren Kettensegment geprüft werden, ob es sich bei dem bereitgestellten inneren Kettensegment tatsächlich um das entnommene innere Kettensegment handelt. Hierzu wird beispielsweise eine Kombination aller kopiervorgangsindividuellen bidirektionalen Verkettungsfunktionen der Blöcke des bereitgestellten inneren Kettensegments erzeugt und mit der bidirektionalen Verkettungsfunktion, welche die beiden Blöcke verkettet, zwischen denen das innere Kettensegment entnommen wurde, verglichen. Bei einer Übereinstimmung ist das bereitgestellte innere Kettensegment identisch mit dem entnommenen inneren Kettensegment. Die verkürzte Blockchain-Strukturen kann dann unter Verwendung des bereitgestellten inneren Kettensegments vervollständigt werden. Somit kann eine Integritätsprüfung unter Verwendung der vollständigen Blockchain-Strukturen, d. h. unter Berücksichtigung der vollständigen Abstammungshistorie einer Kopie, ausgeführt werden. Das entnommene innere Kettensegment wird beispielsweise von einem Server zum Abruf, etwa über das Internet, bereitgestellt. Bei dem Server kann es sich beispielsweise um einen Server des Inhabers bzw. Erzeugers des Ursprungsdokuments oder einer unabhängigen Instanz handeln.

Nach Ausführungsformen handelt es sich bei den beiden direkten Nachbarblöcken, zwischen denen das innere Kettensegment entnommen wurde, um den Block, welcher dem Ursprungsdokument zugeordnet ist, und den zuletzt hinzugefügten Block der Blockchain-Struktur. Ausführungsformen können den Vorteil haben, dass die resultierende Blockchain-Struktur auf eine minimale Länge verkürzt ist, sodass sie ein Minimum an Speicherplatz beansprucht.

Nach Ausführungsformen umfasst das Verfahren ferner: Auf das Verkürzen der Blockchain-Struktur hin, Aktualisieren der Blockchain-Strukturen zumindest eines Identifikators jeder Kopie, welche die Abstammungshistorie der Kopie mit der verkürzten Blockchain-Struktur umfasst, wobei das Aktualisieren jeweils ein Verkürzen der entsprechenden Blockchain-Struktur umfasst. Nach Ausführungsformen umfasst das Verkürzen ein Verkürzen um das identische innere Kettensegment. Nach Ausführungsformen umfasst das Verkürzen ein Verkürzen um alle Blöcke des inneren Kettensegments, welche die entsprechende Blockchain-Struktur umfasst, mit Ausnahme des letzten Blocks der entsprechenden Blockchain-Struktur. Nach Ausführungsformen wird eine Blockchain-Struktur des Ursprungsdokuments in analoger Weise verkürzt.

Nach Ausführungsformen umfasst das Verfahren ferner eine Integritätsprüfung der ersten Kopie, wobei die Prüfung umfasst:
- Zugreifen auf das Ursprungsdokument,
- Erzeugen eines Referenzmerkmals für das Prüfmerkmal des zusätzlichen Blocks unter Verwendung des Ursprungsdokuments und der von der Blockchain-Struktur der ersten Kopie protokollierten Abstammungshistorie der ersten Kopie,
- Vergleichen des Referenzmerkmals mit dem Prüfmerkmal des zusätzlichen Blocks,
- im Fall einer Übereinstimmung des Referenzmerkmals mit dem Prüfmerkmal, Bestätigen der Integrität der ersten Kopie.

Ausführungsformen können den Vorteil haben, dass geprüft werden kann, ob die Protokollierung der Abstammungshistorie und damit der Generierung einer vorliegenden Kopie von Daten eines Ursprungsdokuments vollständig und unverändert ist. Ferner kann anhand des Ursprungsdokuments überprüft werden, ob Kopien der Abstammungshistorie, welche zum Prüfen einer vorliegenden Kopie von Daten des Ursprungsdokuments bereitgestellt werden, unverfälscht sind. Schließlich kann anhand des bereitgestellten Ursprungsdokuments und/oder Kopien der Abstammungshistorie überprüft werden, ob die Daten der vorliegenden Kopie unverfälscht, d. h. authentisch, sind oder nicht. Zudem kann im Fall von Änderungen festgestellt werden, an welcher Stelle der Abstammungshistorie eine Veränderung der Daten vorgenommen wurde. Im Fall einer Übereinstimmung des Referenzmerkmals mit dem Prüfmerkmal kann ferner auf die Integrität der protokollierten Abstammungshistorie der ersten Kopie geschlossen werden. Nach Ausführungsformen kann die Integrität der aus dem Ursprungsdokument stammenden Daten der ersten Kopie auch durch einen Vergleich zwischen dem bereitgestellten Dokument und der Kopie erfolgen, wobei beispielsweise jeweils ein Hash-Wert der zu vergleichenden Daten berechnet und die Ergebnisse miteinander verglichen werden.

Nach Ausführungsformen umfasst das Verfahren ferner eine Integritätsprüfung der Blockchain-Struktur des Identifikators der ersten Kopie, wobei die Prüfung umfasst:
- Prüfen der Konsistenz der Blockchain-Struktur des Identifikators der ersten Kopie unter Verwendung der kopierten Daten des Ursprungsdokuments,
- Prüfen der Existenz der in der Abstammungshistorie der ersten Kopie protokollierten Kopiervorlagen,
- im Fall eines positiven Ergebnisses der Konsistenzprüfung sowie der Existenzprüfung, Bestätigen der Integrität der Abstammungshistorie der ersten Kopie.

Ausführungsformen können den Vorteil haben, dass geprüft werden kann, ob die Protokollierung der Abstammungshistorie in sich konsistent ist und Sachverhalte der realen Welt korrekt abgebildet, d.h. ob sich die Abstammungshistorie sich auf tatsächlich existente Kopiervorlagen stützt.

Nach Ausführungsformen umfasst die Integritätsprüfung der ersten Kopie:
- Zugreifen auf eine der Kopien, welche die Abstammungshistorie der ersten Kopie umfasst, die die Blockchain-Struktur des Identifikators der ersten Kopie protokolliert,
- Erzeugen eines Referenzmerkmals für das Prüfmerkmal des zusätzlichen Blocks unter Verwendung der Kopie, auf welche zugegriffen wird, und der protokollierten Abstammungshistorie der ersten Kopie,
- Vergleichen des Referenzmerkmals mit dem Prüfmerkmal des zusätzlichen Blocks,
- im Fall einer Übereinstimmung des Referenzmerkmals mit dem Prüfmerkmal, Bestätigen der Integrität der ersten Kopie im Verhältnis zu der Kopie, auf welche zugegriffen wurde.

Ausführungsformen könne den Vorteil haben, dass die Integrität der ersten Kopie im Verhältnis zu einer beliebigen Kopie der Abstammungshistorie geprüft werden kann. Bei der Kopie, auf welche zum Zwecke der Integritätsprüfung zugegriffen wird, handelt es sich beispielsweise um eine vertrauenswürdige Kopie bzw. um eine Kopie, welche von einer vertrauenswürdigen Instanz, wie etwa einer vertrauenswürdigen Website und/oder Plattform, bereitgestellt wird. Ferner kann es sich bei einer vertrauenswürdigen Kopie um eine Kopie handeln, deren Identifikator von einer vertrauenswürdigen Instanz, wie etwa einer vertrauenswürdigen Website und/oder Plattform, bereitgestellt wird. Beispielsweise handelt es sich um eine offizielle Website einer allgemein anerkannten Instanz, von welcher bekannt ist, dass eine dort bereitgestellte Kopie bzw. den dort bereitgestellten Identifikator vor der Bereitstellung sorgfältig auf ihre Integrität geprüft wurde. In einem solchen Fall kann auf Basis der Integrität der ersten Kopie im Verhältnis zu der vertrauenswürdigen Kopie, auf welche zugegriffen wurde, zusätzlich auf die Integrität der ersten Kopie gegenüber dem Ursprungsdokument geschlossen werden. Die vertrauenswürdige Kopie, auf welche zugegriffen wird, bildet somit einen Vertrauensanker.

Nach Ausführungsformen wird im Fall einer fehlenden Übereinstimmung des Referenzmerkmals mit dem Prüfmerkmal die Integrität der ersten Kopie verneint.

Nach Ausführungsformen umfasst das Verfahren ferner eine Integritätsprüfung der zweiten Kopie. Die Integritätsprüfung der zweiten Kopie wird beispielswiese analog zur Integritätsprüfung der ersten Kopie ausgeführt.

Nach Ausführungsformen umfasst das Verfahren ferner eine Integritätsprüfung aller Kopien der Abstammungshistorie der ersten Kopie. Die Integritätsprüfungen werden beispielswiese analog zur Integritätsprüfung der ersten Kopie ausgeführt.

Nach Ausführungsformen umfasst das Verfahren ferner eine Integritätsprüfung der protokollierten Abstammungshistorie der ersten Kopie, wobei die Prüfung umfasst:
- Zugreifen auf das Ursprungsdokument sowie die Kopien, welche die Abstammungshistorie der ersten Kopie umfasst, die die Blockchain-Struktur des Identifikators der ersten Kopie protokolliert,
- Erzeugen von Referenzmerkmalen für die Prüfmerkmale der einzelnen Blöcke der Blockchain-Struktur des Identifikators der ersten Kopie unter Verwendung des Ursprungsdokuments sowie der Kopien, auf welche zugegriffen wird,
- Vergleichen der Prüfmerkmale der einzelnen Blöcke mit dem für das jeweilige Prüfmerkmal erzeugten Referenzmerkmal,
- im Fall einer Übereinstimmung der Prüfmerkmale mit den jeweiligen Referenzmerkmalen, Bestätigen der Integrität der protokollierten Abstammungshistorie der ersten Kopie.

Ausführungsformen können den Vorteil haben, dass anhand eines detaillierten Vergleich der einzelnen Blöcke der Blockchain-Struktur der ersten Kopie die Integrität der protokollierten Abstammungshistorie, welche in Form der Blöcke bereitgestellt wird, effektiv geprüft werden kann.

Nach Ausführungsformen wird im Fall einer fehlenden Übereinstimmung eines der Prüfmerkmale mit dem für das jeweilige Prüfmerkmal erzeugten Referenzmerkmal die Integrität der protokollierten Abstammungshistorie der ersten Kopie verneint.

Nach Ausführungsformen umfasst das Verfahren ferner eine Integritätsprüfung der protokollierten Abstammungshistorie der zweiten Kopie. Die Integritätsprüfung der Abstammungshistorie der zweiten Kopie wird beispielswiese analog zur Integritätsprüfung der Abstammungshistorie der ersten Kopie ausgeführt.

Nach Ausführungsformen umfasst das Verfahren ferner eine Integritätsprüfung der Abstammungshistorien aller Kopien der Abstammungshistorie der ersten Kopie. Die Integritätsprüfungen werden beispielswiese analog zur Integritätsprüfung der Abstammungshistorie der ersten Kopie ausgeführt.

Nach Ausführungsformen umfassen die Prüfmerkmale jeweils einen Hashwert der kopierten Daten. Ausführungsformen können den Vorteil haben, dass ein effizientes Verfahren zur Bildung eines Prüfmerkmals bereitgestellt wird, mittels dessen eine Unverfälschtheit aller gehashter Daten sicher überprüfen lässt.

Beispielsweise kann eine entsprechende Integritätsprüfung digital codierter Kopien und/oder deren Abstammungshistorien automatisiert im Hintergrund ablaufen, wenn eine entsprechende Kopie geöffnet wird. Ausführungsformen können den Vorteil haben, dass die Blockchain-Struktur es beim Lesen, Ansehen und/oder Hören des entsprechenden durch den die Blockchain-Struktur umfassenden Identifikator bezeichneten digital codierten Dokuments zu keiner Störung führt. Das Ergebnis der Integritätsprüfung wird beispielsweise nur angezeigt, wenn dieses negativ ausfällt und es Zweifel an der Integrität eines vorliegenden digital codierten Dokuments gibt. In diesem Fall kann das Ergebnis als ein Warnhinweis angezeigt werden. Nach weiteren Ausführungsformen wird das Ergebnis der Integritätsprüfung beispielsweise nur angezeigt, wenn dieses positiv ausfällt. Nach weiteren Ausführungsformen umfasst das angezeigte Ergebnis beispielsweise die Identifikatoren aller Kopiervorlagen der Abstammungshistorie.

Nach Ausführungsformen umfasst der elektronische Datenspeicher ein Dateisystem. Das Dateisystemstellt eine Ablageorganisation auf dem Datenspeicher bereit. Digital codierte Dokument können als Dateien auf dem Datenspeicher gespeichert werden. Ferner können die Dateien gelesen, verändert oder gelöscht werden.

Nach Ausführungsformen werden die erstellten digital codierten Kopien und oder die erstellten Identifikatoren der digital codierten Kopien in einem Datenspeicher gespeichert. Nach Ausführungsformen umfasst der Datenspeicher ein Dateisystem. Das Dateisystem stellt eine Ablageorganisation auf dem Datenspeicher bereit. Digital codierte Dokumente können als Dateien auf dem Datenspeicher gespeichert werden. Ferner können die Dateien gelesen, verändert oder gelöscht werden.

Nach Ausführungsformen umfasst der elektronische Datenspeicher eine Datenbank. Eine Datenbank bzw. ein Datenbanksystem bezeichnet ein System zur elektronischen Datenverwaltung. Ein Datenbanksystem erlaubt es, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Das Datenbanksystem umfasst beispielsweise ein Datenbankmanagementsystem und eine Datenbank im engeren Sinn bzw. Datenbasis. Das Datenbankmanagementsystem stellt eine Verwaltungssoftware zum Verwalten von Daten der Datenbasis bereit. Die Verwaltungssoftware organisiert intern die strukturierte Speicherung der Daten und kontrolliert alle lesenden und schreibenden Zugriffe auf die Datenbank. Die Datenbasis umfasst die Menge der zu verwaltenden Daten. Digital codierten Dokument wird in diesem Fall beispielsweise als Teil der Datenbasis gespeichert.

Bei dem Datenspeicher kann es sich beispielsweise um einen Wechselspeicher handeln, d.h. einen nicht fest eingebauter, austauschbarer und/oder tragbarer Datenträger für ein Computersystem handeln. Wechselspeicher umfassen beispielsweise Blu-ray Discs, CDs, Disketten, DVDs, HD-DVDs, Magnetbänder, MO/MODs, Solid-State-Drives (SSD), Speicherkarten, USB-Sticks oder Wechselfestplatten.

Ausführungsformen umfassen ferner ein Verfahren zum integritätssicheren Versenden von digital codierten Daten über ein Netzwerk. Das Verfahren umfasst:
- Erstellen eines digital codierten Dokuments, welches die zu versendenden digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt und unter einer Adresse zum Aufrufen der Kopie gespeichert wird,
- Erstellen eines Identifikators der digital codierten Kopie unter Verwendung eines Verfahrens nach einer der vorangehenden Ausführungsformen, wobei der Identifikator die Adresse zum Aufrufen der Kopie umfasst,
- Versenden des Identifikators der digital codierten Kopie über das Netzwerk,
- Versenden des digital codierten Dokuments über das Netzwerk in Antwort auf eine Anforderung des digital codierten Dokuments, welche die Adresse durch den des digital codierten Dokuments identifiziert.

Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln. Ferner kann es sich bei dem beispielsweise um ein digitales zellulares Mobilfunknetzwerk handeln.

Nach Ausführungsformen erfolgt das Versenden des Identifikators und/oder des digital codierten Dokuments auf einen Empfang einer Anforderung zum Versenden. Beispielsweise handelt es sich bei dem Identifikator um einen in ein HTML-Dokument eingebetteten Hyperlink. Beispielsweise handelt es sich bei dem digital codierten Dokument ebenfalls um ein HTML-Dokument. Beispielsweise wird der Identifikator und/oder das digital codierten Dokument auf einer Internet-Plattform bereitgestellt, etwa als Webseite oder als Posting. Unter einem Posting wird hier ein einzelner Beitrag auf einer Internet-Plattform, wie etwa einer Social-Media-Plattform, in einem Webforum oder einem Blog verstanden. Ferner kann der Identifikator und/oder das digital codierten Dokument zum Download bereitgestellt sein. Beispielsweise umfasst eine Webseite oder ein Posting einen Link zum Aufrufen des digital codierten Dokuments.

Auf eine entsprechende Anforderung hin, etwa in Form einer HTTP-GET-Anforderung, wird der Identifikator und/oder das digital codierten Dokument an das anfordernde Computersystem versendet.

Nach Ausführungsformen erfolgt das Versenden des Identifikators unabhängig von einer Anforderung zum Versenden. Beispielsweise wird der Identifikator in Form einer E-Mail, einer Instant-Massage, einer SMS oder einer MMS versendet bzw. von einem der zuvor genannten Nachrichtentypen umfasst. Instant Messaging bezeichnet eine Kommunikationsmethode, bei der zwei oder mehr Teilnehmer per digital codierter Text-, Sprach-, Bild- und/oder Videonachrichten miteinander kommunizieren. Dabei löst der Absender die Übermittlung der Nachricht aus, d.h. ein sog. Push-Verfahren findet Anwendung, so dass die Nachrichten möglichst unmittelbar bei dem vorgesehenen Empfänger ankommen. Die Teilnehmer dabei mit einem Computerprogramm über ein Netzwerk, wie etwa das Internet, direkt oder über einen Server miteinander verbunden sein.

Ausführungsformen umfassen ferner ein Verfahren zum integritätssicheren Anfordern von digital codierten Daten über ein Netzwerk. Das Verfahren umfasst:
- Empfangen eines Identifikators eines digital codierten Dokuments über das Netzwerk, welches die digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt und unter einer Adresse zum Aufrufen der Kopie gespeichert wurde, wobei der Identifikator unter Verwendung eines Verfahrens nach einer der vorangehenden Ausführungsformen erstellt wurde und die Adresse zum Aufrufen der Kopie umfasst,
- Anfordern eines digital codierten Dokuments über das Netzwerk unter Verwendung der von dem Identifikator umfassten Adresse zum Aufrufen der Kopie,
- in Antwort auf das Anfordern, Empfangen des angeforderten digital codierten Dokuments über das Netzwerk.

Auf eine entsprechende Anforderung hin wird beispielsweise das zuvor genannte Verfahren zum integritätssicheren Versenden von digital codierten Daten initiiert. Ausführungsformen umfassen ferner ein Computersystem zur Integritätssicherung digital codierter Kopien eines digital codierten Ursprungsdokuments unter Verwendung einer in Identifikatoren der Kopien integrierten Blockchain-Struktur zur Protokollierung der Abstammungshistorie der Kopien. Das System umfasst einen Prozessor und einen Speicher mit maschinenlesbaren Instruktionen, wobei ein Ausführen der maschinenlesbaren Instruktionen durch den Prozessor das Computersystem dazu veranlasst, ein Verfahren auszuführen, welches umfasst:
- Aufrufen einer digital codierten Kopiervorlage, welche Daten des digital codierten Ursprungsdokuments umfasst, unter Verwendung eines Identifikators der Kopiervorlage, welcher eine Adresse zum Aufrufen der Kopiervorlage und als Parameterwert eine Blockchain-Struktur umfasst, in der die Abstammungshistorie der Kopiervorlage protokolliert ist,
- Erstellen einer digital codierten Kopie von Daten der Kopiervorlage, wobei die kopierten Daten der Kopie die Daten des digital codierten Ursprungsdokuments umfassen,
- Bereitstellen der Kopie unter einer Adresse zum Aufrufen der Kopie,
- Erstellen eines Identifikators der Kopie, wobei der Identifikator der Kopie die Adresse der Kopie und als Parameterwert die Blockchain-Struktur der Kopiervorlage umfasst, wobei ein zusätzlicher Block zu der Blockchain-Struktur hinzugefügt wird, wobei der zusätzliche Block der Kopiervorlage zugeordnet ist, wobei der zusätzliche Block die Adresse der Kopiervorlage sowie einen Prüfmerkmal der kopierten Daten umfasst, welcher eine Integritätsprüfung der kopierten Daten inklusive des Identifikators der Kopiervorlage ermöglicht,
- Bereitstellen des Identifikators der Kopie zum Aufrufen der Kopie und zum Prüfen der Identität der kopierten Daten der Kopie.

Nach Ausführungsformen ist das Computersystems dazu konfiguriert eine oder mehrere der zuvor genannten Ausführungsformen des Verfahrens zur Integritätssicherung digital codierter Kopien auszuführen.

Unter einem "Computersystem" wird hier ein Gerät verstanden, welches mittels programmierbarer Rechenvorschriften unter Verwendung elektronischer Schaltkreise Daten verarbeitet. Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Ein Computersystem kann eine Schnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden.

Bei einem Computersystem kann es sich beispielsweise um ein mobiles Telekommunikationsgerät, insbesondere ein Smartphone, einen tragbaren Computer, wie zum Beispiel einen Laptop oder Palmtop-Computer, einen Personal Digital Assistant oder dergleichen handeln. Ferner kann es sich um beispielsweise um eine Smartwatch oder Smartglasses handeln. Zudem kann es sich um ein stationäres Computersystem, wie beispielsweise einen Personal Computer oder einen in einer Client-Server-Umgebung eingebundenen Server handeln. Insbesondere kann es sich um einen Server mit einem Datenbankmanagementsystem, welcher eine Datenbank mit einer Daten verwaltet.

Unter einem "Speicher" bzw. "Datenspeicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln.

Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Unter einer Kommunikationsschnittstelle zur drahtlosen Kommunikation wird eine Kommunikationsschnittstelle, welche zum kontaktlosen Senden und Empfangen von Daten konfiguriert ist. Die Kommunikation kann beispielsweise nach einem RFID- und/oder NFC-Standard, wie etwa Bluetooth, erfolgen. Ferner kann die Kommunikationsschnittstelle zur Kommunikation über ein lokales Funknetz konfiguriert sein, beispielsweise nach einem Standard der IEEE-802.11-Familie und/oder Wi-Fi.

Eine Schnittstelle kann beispielsweise als Funkschnittstelle konfiguriert sein, welche eine Kommunikation über ein digitales zellulares Mobilfunknetzwerk ermöglicht, das nach einem Mobilfunkstandard wie zum Beispiel GSM, UMTS, LTE, CDMA oder einem anderen Standard aufgebaut sein kann.

Eine Kommunikation kann im Allgemeinen beispielsweise über ein Netzwerk erfolgen. Unter einem "Netzwerk" wird hier jedes Übertragungsmedium mit einer Anbindung zur Kommunikation verstanden, welche eine Kommunikation zwischen zumindest zwei Computersystemen ermöglicht. Ein Netzwerk kann beispielsweise ein lokales Netzwerk, insbesondere ein Local Area Network (LAN), ein privates Netzwerk, insbesondere ein Intranet, oder ein virtuelles privates Netzwerk (Virtual Private Network - VPN) umfassen. Beispielsweise kann das Computersystem eine Standardfunkschnittstelle zur Anbindung an ein WLAN aufweisen. Ferner kann es sich um ein öffentliches Netzwerk, wie beispielsweise das Internet handeln.

Bei dem Computersystem handelt es sich beispielsweise um ein elektronisches Datenspeichersystem mit einem Dateisystem und/oder einer Datenbank.

Ausführungsformen umfassen ferner ein Telekommunikationssystem zum integritätssicheren Versenden von digital codierten Daten über ein Netzwerk. Das Telekommunikationssystem umfasst einen Prozessor und einen Speicher mit maschinenlesbaren Instruktionen. Ferner umfasst das Telekommunikationssystem eine Kommunikationsschnittstelle zur Kommunikation über das Netzwerk. Ausführen der maschinenlesbaren Instruktionen durch den Prozessor veranlasst das Telekommunikationssystem dazu, ein Verfahren auszuführen, welches umfasst:
- Erstellen eines digital codierten Dokuments, welches die zu versendenden digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt und unter einer Adresse zum Aufrufen der Kopie gespeichert wird,
- Erstellen eines Identifikators der digital codierten Kopie unter Verwendung eines Verfahrens nach einer der vorangehenden Ausführungsformen, wobei der Identifikator die Adresse zum Aufrufen der Kopie umfasst,
- Versenden des Identifikators der digital codierten Kopie über das Netzwerk,
- Versenden des digital codierten Dokuments über das Netzwerk in Antwort auf eine Anforderung des digital codierten Dokuments, welche die Adresse durch den des digital codierten Dokuments identifiziert.

Bei dem Telekommunikationssystem handelt es sich beispielsweise um ein mobiles tragbares Telekommunikationssystem bzw. Computersystem.

Ausführungsformen umfassen ein Telekommunikationssystem zum integritätssicheren Aufrufen von digital codierten Daten über ein Netzwerk. Das Telekommunikationssystem umfasst einen Prozessor und einen Speicher mit maschinenlesbaren Instruktionen. Ferner umfasst das Telekommunikationssystem eine Kommunikationsschnittstelle zur Kommunikation über das Netzwerk. Ausführen der maschinenlesbaren Instruktionen durch den Prozessor veranlasst das Telekommunikationssystem dazu, ein Verfahren auszuführen, welches umfasst:
- Empfangen eines Identifikators eines digital codierten Dokuments über das Netzwerk, welches die digital codierten Daten umfasst, wobei es sich bei den digital codierten Daten um kopierte Daten eines digital codierten Ursprungsdokuments handelt und wobei das digital codierte Dokument als digital codierte Kopie unter Verwendung eines Verfahrens nach einer der vorangehenden Ausführungsformen erstellt und unter einer Adresse zum Aufrufen der Kopie gespeichert wurde, wobei der Identifikator unter Verwendung eines Verfahrens nach einer der vorangehenden Ausführungsformen erstellt wurde und die Adresse zum Aufrufen der Kopie umfasst,
- Anfordern eines digital codierten Dokuments über das Netzwerk unter Verwendung der von dem Identifikator umfassten Adresse zum Aufrufen der Kopie,
- in Antwort auf das Anfordern, Empfangen des angeforderten digital codierten Dokuments über das Netzwerk.

Die zuvor genannten Telekommunikationssysteme zum Anfordern und Versenden digital codierten Daten über ein Netzwerk bilden beispielsweise zusammen ein System, über welches digital codierten Daten zwischen den einzelnen Telekommunikationssystemen angefordert und versendet werden können. Nach Ausführungsformen werden der Identifikator und das digital codierte Dokument von zwei verschiedenen Datenspeichersystemen bzw. Telekommunikationssystemen gespeichert. Folglich werden der Identifikator und das digital codierte Dokument bei zwei verschiedenen Telekommunikationssystemen angefordert und den beiden verschiedenen Telekommunikationssystemen, bei welchen sie angefordert wurden, versendet.

Im Weiteren werden Ausführungsformen der Erfindung mit Bezugnahme auf die Zeichnungen näher erläutert. Es zeigen:
- Figur 1: ein schematisches Blockdiagramm erster Ausführungsformen exemplarischer Identifikatoren,
- Figur 2: ein schematisches Blockdiagramm zweiter Ausführungsformen exemplarischer Identifikatoren,
- Figur 3: ein schematisches Blockdiagramm dritter Ausführungsformen exemplarischer Identifikatoren,
- Figur 4: ein schematisches Blockdiagramm vierter Ausführungsformen exemplarischer Identifikatoren,
- Figur 5: ein schematisches Blockdiagramm einer fünften Ausführungsform eines exemplarischen Identifikators,
- Figur 6: ein schematisches Flussdiagramm eines exemplarischen Verfahrens zum Erstellen einer bidirektionalen Blockchain-Struktur,
- Figur 7: ein schematisches Flussdiagramm eines exemplarischen Verfahrens zum Erstellen einer verkürzten bidirektionalen Blockchain-Struktur,
- Figuren 8: schematische Blockdiagramme von Ausführungsformen exemplarischer Computersysteme,
- Figur 9: ein schematisches Flussdiagramm einer ersten Ausführungsform eines exemplarischen Verfahrens,
- Figur 10: ein exemplarisches Flussdiagramm einer zweiten Ausführungsform eines exemplarischen Verfahrens,
- Figur 11: ein exemplarisches Flussdiagramm einer dritten Ausführungsform eines exemplarischen Verfahrens,
- Figur 12: ein schematisches Flussdiagramm einer vierten Ausführungsform eines exemplarischen Verfahrens,
- Figur 13: ein schematisches Flussdiagramm einer fünften Ausführungsform eines exemplarischen Verfahrens, und
- Figur 14: ein schematisches Flussdiagramm einer sechsten Ausführungsform eines exemplarischen Verfahrens.

Elemente der nachfolgenden Ausführungsformen, die einander entsprechen, werden mit denselben Bezugszeichen gekennzeichnet.

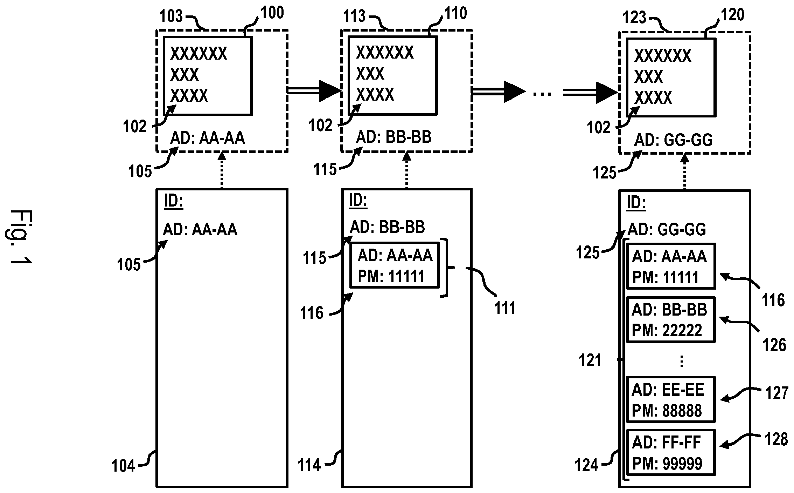

Figur 1 zeigt eine exemplarische Abstammungshistorie digital codierter Dokumente 100, 110, 120. Für jedes der digital codierten Dokumente 100, 110, 120 wird ein Identifikator 104, 114, 124 bereitgestellt, welcher eine Adresse 105, 115, 125 umfasst unter welcher das entsprechende Dokument 100, 110, 120 aufgerufen werden kann. Hierbei sind die digital codierten Dokumente 100, 110, 120 beispielsweise an den Speicherorten 103, 113, 133 mit den Adressen 105, 115, 125 gespeichert. Beispielsweise kann können die digital codierten Dokumente 100, 110, 120 unter Verwendung des HTTP oder HTTPS-Protokolls aufgerufen werden. Beispielsweise werden die digital codierten Dokumente 100, 110, 120, etwa in Form von Webseite, durch Server zum Aufrufen über das Internet bereitgestellt. Die Identifikator 104, 114, 124 werden beispielsweise ebenfalls auf Webseiten in Form von Links mit URLs bereitgestellt, welche die Adressen 105, 115, 125 zum Aufrufen der digital codierten Dokumente 100, 110, 120 umfassen. Wenn auf einer dieser Webseiten Webseite einer der Links aktiviert wird, so wird an den von der entsprechenden URL identifizierten Server eine Anfrage gerichtet, die Ressource, d.h. das entsprechende digital codierte Dokument, zurückzusenden. Beispielsweise umfasst die URL einen Namen des Servers, etwa eines HTTP-Servers, welcher zunächst über das DNS-Protokoll in eine IP-Adresse umgesetzt. Zur Initialisierung einer Übertragung des digitalen codierten Dokuments wird beispielsweise über TCP auf den Standard-Port 80 des HTTP-Servers eine HTTP-GET-Anforderung gesendet. Als Antwort auf die HTTP-GET-Anforderung erhält das anfordernde Computersystem, welches die Webseite mit dem Link aufgerufen und diesen aktiviert hat, da angeforderte digital codierte Dokument.

Das digital codierte Ursprungsdokument 100 umfasst Daten 102, beispielsweise in Textform. Ferner ist dem Ursprungsdokument 100 ein eindeutiger Identifikator 104 zugeordnet, welcher die Adresse 105 des Ursprungsdokuments 100 umfasst und somit auf das Ursprungsdokument verweist. Dieser Identifikator ID 104 kann beispielswiese in ein weiteres von dem Inhalt des Ursprungsdokument 100 unabhängiges digital codierte Dokument wie etwa eine Webseite und/oder ein Verzeichnis bzw. eine Verzeichnisdatei eines Dateisystems oder einer Datenbank. Durch einen ersten Kopiervorgang wird eine Kopie 110 des Ursprungsdokuments 100 erstellt, welche die Daten 102 des Ursprungsdokuments 100 umfasst. Ferner wird ein eindeutiger Identifikator 114 erstellt, welcher der Kopie 110 zugeordnet ist und die Adresse 115 der Kopie 110 umfasst. Zu dem Identifikator 114 wird weiterhin ein Block 116 einer Blockchain-Struktur 111 hinzugefügt. Dieser Block 116 umfasst die Adresse 105 des Ursprungsdokuments 100 sowie ein Prüfmerkmal PM der kopierten Daten 102. Anhand des Prüfmerkmals kann geprüft werden, ob die von der Kopie 110 umfassten Daten identisch mit den ursprünglichen Daten 102 des Ursprungsdokuments 100 sind. Beispielsweise kann das Prüfmerkmal einen Hashwert der Daten 102 umfassen.

Bei jedem Kopiervorgang wird ein zusätzliches digital codiertes Dokument als Kopie der Daten 102 des Ursprungsdokuments 100 erzeugt. Diese jeweilige zusätzliche Kopie umfasst die Daten 102 des Ursprungsdokuments 100, wie sie von der für den entsprechenden Kopiervorgang verwendeten Kopiervorlage bereitgestellt werden. Ferner wird für jede der Kopien jeweils ein Identifikator zum Aufrufen der entsprechenden Kopie erstellt, welcher jeweils eine Kopie der Blockchain-Struktur der verwendeten Kopiervorlage umfasst. Die kopierte Blockchain-Struktur wird um einen zusätzlichen Block erweitert. Dieser zusätzliche Block der Blockchain-Struktur umfasst jeweils eine Adresse der verwendeten Kopiervorlage sowie ein Prüfmerkmal der kopierten Daten der verwendeten Kopiervorlage. Nach Ausführungsformen umfasst das Prüfmerkmal ferner den letzten Block der Blockchain-Struktur des Identifikators der verwendeten Kopiervorlage. Nach einer weiteren Ausführungsform umfasst das Prüfmerkmal ferner die vollständige Blockchain-Struktur des Identifikators der verwendeten Kopiervorlage.

Somit wächst die Blockchain-Struktur der Identifikatoren mit jeder Generation, d. h. jedem Kopiervorgang um einen zusätzlichen Block an. Eine N-te Kopie 120 des Ursprungsdokuments 100, welche das Resultat von N Kopiervorgängen ist, umfasst beispielsweise die kopierten Daten 102 des Ursprungsdokuments 100. Ferner ist der Kopie 120 ein eindeutiger Identifikator 124 zugeordnet, welcher die Adresse 125 der Kopie 120 sowie eine Blockchain-Struktur 121, welche beispielsweise N Blöcke 116, 126, 127, 128 für die N Kopiervorgänge umfasst. Jeder dieser Blöcke umfasst jeweils eine Adresse AD der für den entsprechenden Kopiervorgang verwendeten Kopiervorlage sowie ein Prüfmerkmal PM der verwendeten Kopiervorlage. Dieses Prüfmerkmal umfasst nach Ausführungsformen die kopierten Daten 102 sowie zumindest den letzten Block der Blockchain-Struktur des Identifikators der verwendeten Kopiervorlage. Umfassen heißt in diesem Zusammenhang, dass das Prüfmerkmal sowohl von den kopierten Daten 102 als auch dem letzten Block der Blockchain-Struktur der verwendeten Kopiervorlage abhängt bzw. diese eindeutig festlegt. Nach weiteren Ausführungsformen umfasst das Prüfmerkmal die verwendete Kopiervorlage vollständig, d. h. durch das Prüfmerkmal wird eine Prüfung der vollständigen Kopiervorlage auf ihre Integrität ermöglicht. Beispielsweise umfasst das Prüfmerkmal einen Hashwert, der die Nachprüfbarkeit der Integrität gewährleisten soll. Nach Ausführungsformen umfasst zudem jeder Block jeweils eine Adresse zum Aufrufen des Identifikators der für den entsprechenden Kopiervorgang verwendeten Kopiervorlage.

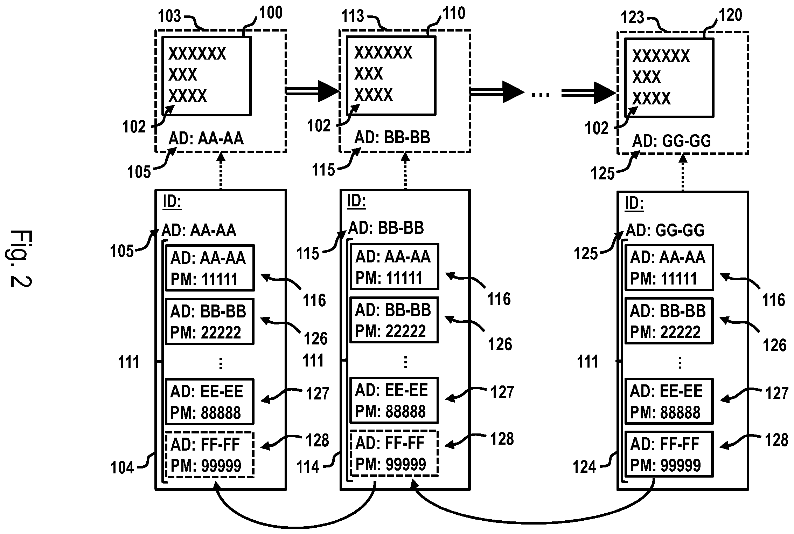

Figur 2 zeigt eine weitere Ausführungsform exemplarischer digital codierter Dokumente 100, 100, 120, welche durch ein exemplarisches Verfahren zur Integritätssicherung digital codierter Kopien erzeugt und an den Speicherorten 103, 133, 133 mit den Adressen 105, 115, 125 gespeichert wurden. Jedem dieser digital codierter Dokumente 100, 100, 120 ist ein Identifikator 104, 114, 124 zugeordnet, durch dessen Verwendung das zugeordnete digital codierter Dokumente 100, 100, 120 aufgerufen werden kann. Die gezeigten digital codierten Dokumente 100, 110, 120 entsprechen den Dokumenten 100, 110, 120 der Figur 1. Darüber hinaus entsprechen die gezeigten Identifikatoren 104, 114, 124 weitgehend den Identifikatoren 104, 114, 124 der Figur 1. Im vorliegenden Fall werden aber, anders als in Figur 1, beim Erzeugen einer zusätzlichen Kopie die Blockchain-Strukturen aller für die Kopiervorgänge verwendeter Identifikatoren der Kopien bzw. Kopiervorlagen der Abstammungshistorien der zusätzlich erzeugten Kopie aktualisiert. Im Zuge der Aktualisierung wird jede der Blockchain-Strukturen der Identifikatoren der Kopien bzw. Kopiervorlagen der Abstammungshistorie der zusätzlich erstellten Kopie um einen zusätzlichen Block ergänzt, welche dem Kopiervorgang zum Erstellen der zusätzlichen Kopie zugeordnet ist. Aufgrund dieser Aktualisierungen weisen alle Identifikatoren der Kopien bzw. Kopiervorlagen der Abstammungshistorie die vollständige Blockchain-Struktur der zuletzt erzeugten Kopie auf. Mit anderen Worten die Blockchain-Strukturen umfassen alle die vollständige Abstammungshistorie der zuletzt erzeugten Kopie.

Beispielsweise weisen alle Identifikatoren der digital codierten Dokumente 100, 110 einer gemeinsamen Abstammungshistorie die identische Blockchain-Struktur 111 auf, welche eine Mehrzahl von Blöcken 116, 126, 127 umfasst. Beispielsweise umfasst die Abstammungshistorie N-1 Kopiervorgänge, bei denen N-1 voneinander abhängige Kopien 110 des Ursprungsdokuments 100 erstellt wurden. Mithin umfasst die Blockchain-Struktur 111 beispielsweise N-1 Blöcke. Wird eine zusätzliche Kopie 120 erstellt, umfasst diese die Blockchain-Struktur 111, die um einen zusätzlichen Block 128 erweitert wird. Dieser zusätzliche Block 128 ist dem Kopiervorgang zum Erzeugen der zusätzlichen Kopie 120 zugeordnet. Der zusätzliche Block 128 umfasst eine Adresse AD der verwendeten Kopiervorlage sowie einen Prüfmerkmal PM, welches eine Prüfung der kopierten Daten 102 inklusive der kopierten Blockchain-Struktur 111 ermöglicht. Im Zuge der Aktualisierung der Kopien bzw. Kopiervorlagen der Abstammungshistorie der hinzugefügten Kopie 120 werden alle Blockchain-Strukturen 111 der Identifikatoren der Kopien bzw. Kopiervorlagen 100, 110 der Abstammungshistorie um den zusätzlichen Block 128 ergänzt. Somit weist jeder Identifikator der Abstammungshistorie jeweils eine Blockchain-Struktur 111 auf, aus welcher alle Kopiervorgänge hervorgehen, welche zur Erstellung der dem Identifikator zugeordneten Kopie geführt haben, ebenso wie alle Kopiervorgänge, welche ausgehend von der zugeordneten Kopie ausgeführt wurden. Nach Ausführungsformen umfasst ferner jeder Block 116, 126, 127, 128 jeweils eine Adresse zum Aufrufen des Identifikators der für den entsprechenden Kopiervorgang verwendeten Kopiervorlage.

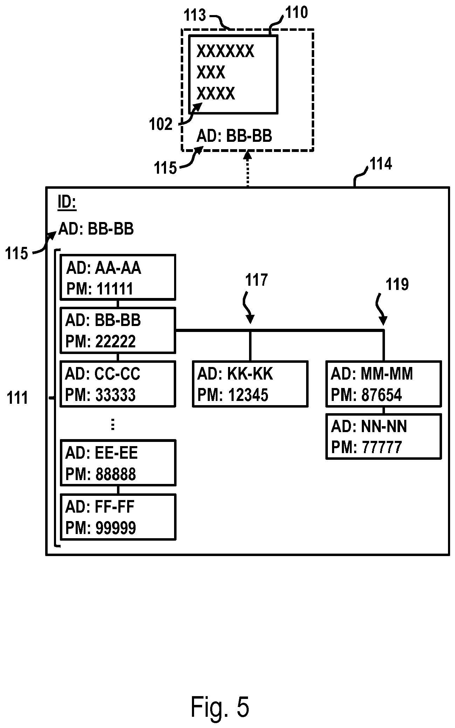

Wird eine Kopie der Abstammungshistorie als direkte Kopiervorlage für eine Mehrzahl von Kopien verwendet, so kommt es zu einer Verzweigung der Blockchain-Struktur. Der Identifikator der entsprechenden Kopie, welche als Kopiervorlage für die Mehrzahl von weiteren Kopien verwendet wurde, sowie die Identifikatoren der Kopiervorlagen ihrer Abstammungshistorie weisen in diesem Fall jeweils die vollständige Blockchain-Struktur mit allen Verzweigung auf. Ein Beispiel für einen Identifikators eines digital codierten Dokuments mit einer entsprechenden verzweigten Blockchain-Struktur ist in Figur 5 gezeigt.

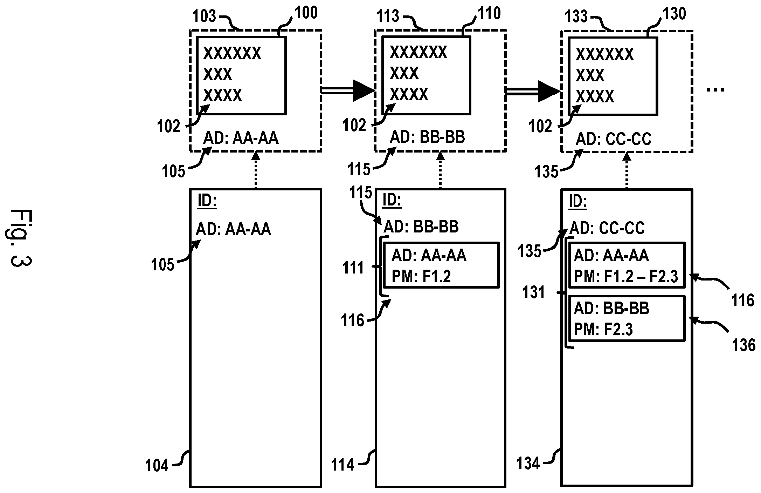

Figur 3 zeigt den Anfang einer exemplarischen Abstammungshistorie, welche ein Ursprungsdokument 100 sowie Kopien 110,130 des Ursprungsdokuments 100 bzw. der Daten 102 umfasst. Die digital codierten Dokumente 100, 110, 130 entsprechen den Dokumenten 100, 110, 120 aus Figur 1 und sind an den Speicherorten 103, 113, 133 mit den Adressen 105, 115, 135 gespeichert. Ferner ist jedem der digital codierten Dokumente 100, 110, 130 jeweils ein Identifikator 104, 114, 124 zugeordnet. Die Identifikator 104, 114, 124 umfassen jeweils eine Adresse 105, 115, 125 zum Aufrufen des zugeordneten digital codierten Dokuments 100, 110, 130. Dabei entsprechen die Identifikator 104, 114, 12 entsprechen weitgehend den Identifikator 104, 114, 124 aus Figur 1. Jedoch unterscheiden sich der Aufbau der Blockchain-Strukturen der Identifikator 104, 114, 12 von dem Aufbau der Blockchain-Strukturen der Identifikator 104, 114, 124 aus Figur 1. Bei den Prüfmerkmalen PM handelt es sich im Fall der Figur 3 jeweils um kopiervorgangsindividuelle bidirektionale Verkettungsfunktionen. Bei der Erstellung der Kopie 110 wird ein Identifikator 114 der Kopie 110 mit der Blockchain-Struktur 111 erstellt, welche den Block 116 umfasst. Der Block 116 des Identifikators 114 der Kopie 110 umfasst ein Adresse 115 der verwendeten Kopiervorlage, d.h. des Ursprungsdokuments 100, sowie eine kopiervorgangsindividuelle bidirektionale Verkettungsfunktion F1.2. Ferner kann der Block 116 nach Ausführungsformen eine Adresse des Identifikators 104 des Ursprungsdokuments 100 umfassen. Die kopiervorgangsindividuelle bidirektionale Verkettungsfunktion F1.2 wurde unter Verwendung der kopierten Daten 102 der Kopie 110 sowie der Daten 102 des Ursprungsdokuments 100 erstellt. Nach Ausführungsformen finden beim Erstellen der kopiervorgangsindividuelle bidirektionale Verkettungsfunktion F1.2 ferner die Identifikatoren 104, 114 von Ursprungsdokument 100 sowie der Kopie 110 Berücksichtigung. Die kopiervorgangsindividuelle bidirektionale Verkettungsfunktion F1.2 wird dem Block 116 als Prüfmerkmal hinzugefügt, welches die Kopie 110 mit dem Ursprungsdokument 100 bidirektional verkettet. Die bidirektionale Verkettung bedeutet, dass bereits eine nachträgliche Veränderung des Ursprungsdokument 100 ebenso wie eine Veränderung der Kopie 110 ausreicht, dass das Prüfmerkmal des Blocks 116 in Form der kopiervorgangsindividuelle bidirektionale Verkettungsfunktion F1.2 nicht mehr erfüllt wird. Mit anderen Worten: Wird für die kopiervorgangsindividuelle bidirektionale Verkettungsfunktion F1.2 beispielsweise eine Referenzfunktion unter Verwendung des oder der veränderten Dokumente 100, 110 erstellt, so stimmt diese nicht mit der abgespeicherten Verkettungsfunktion F1.2 überein. Anhand der Abweichung wird ersichtlich, dass eine nachträgliche Veränderung vorgenommen wurde.

Bei der Erstellung der Kopie 130 unter Verwendung des Dokuments 110 als Kopiervorlage wird auch ein Identifikator 134 erstellt mit einer Adresse 135 zum Aufrufen der Kopie 130. Dabei wird auch die Blockchain-Struktur 111 kopiert und dem Identifikator 134 hinzugefügt. Die kopierte Blockchain-Struktur 111 wird zur Blockchain-Struktur 131 erweitert. Hierzu wird der Block 136 hinzugefügt und mit dem letzten Block 116 der kopierten Blockchain-Struktur 111 bidirektional verkettet. Der Block 136 umfasst die Adresse 115 der Kopiervorlage, d.h. des Dokuments 110. Die bidirektionale Verkettung umfasst das Hinzufügen der kopiervorgangsindividuelle bidirektionale Verkettungsfunktion F2.3 sowohl zu Block 136 als auch zu Block 116. Im Ergebnis umfasst der Block 116 der Blockchain-Strukturen 131 somit zwei kopiervorgangsindividuelle bidirektionale Verkettungsfunktionen F1.2, F2.3, welche einerseits die Kopie 110 mit dem Ursprungsdokument 100 und andererseits die Kopie 130 mit der Kopiervorlage 110 bidirektional verkette. Insbesondere verkettet die kopiervorgangsindividuelle bidirektionale Verkettungsfunktionen F2.3 die beiden unmittelbar aufeinanderfolgenden Blöcke 116 und 136 miteinander. Nach Ausführungsformen umfasst der Block 136 ferner eine Adresse zum Aufrufen des Identifikators 114 der für den entsprechenden Kopiervorgang verwendeten Kopiervorlage 110.

Der zuletzt hinzugefügte Block 136, welcher zu der Blockchain-Struktur 131 der zuletzt erstellten Kopie 130 hinzugefügt wurde, umfasst allerdings lediglich die kopiervorgangsindividuelle bidirektionale Verkettungsfunktion F2.3. Der Grund hierfür ist, dass der Block 136 mangels nachfolgendem Block nur eine Verkettung mit dem vorangehenden Block 116 aufweist. Wird die Kopie 130 als Kopiervorlage für das Erstellen einer weiteren Kopie verwendet und wird diese weitere Kopie mit der Kopiervorlage 130 über eine kopiervorgangsindividuelle bidirektionale Verkettungsfunktion verkettet, so wird das Prüfmerkmal des Blocks 136 um die entsprechende kopiervorgangsindividuelle bidirektionale Verkettungsfunktion erweitert.

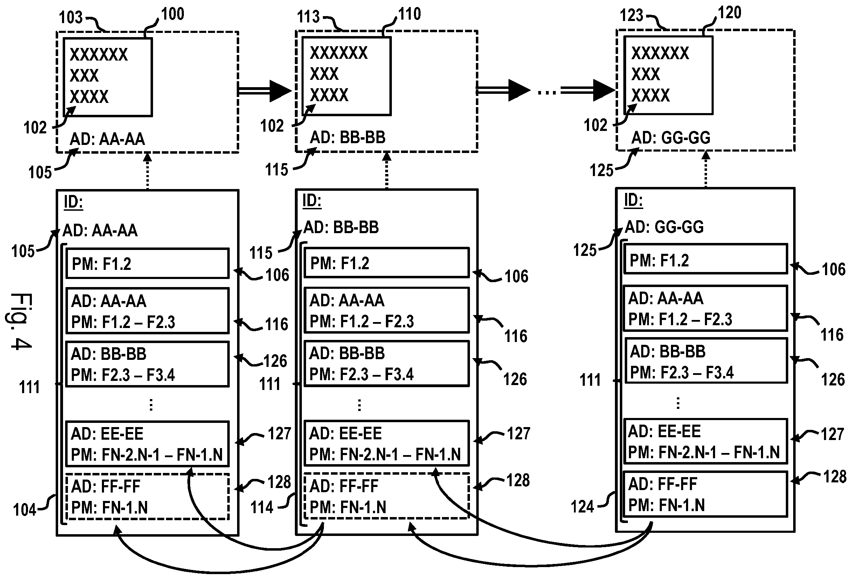

Figur 4 zeigt eine weitere exemplarische Abstammungshistorie mit einem Ursprungsdokuments 100 und einer Mehrzahl von Kopien 110, 120 mit Daten 102 des Ursprungsdokuments 100. Die digital codierten Dokumente 100, 110, 120 sind beispielsweise an den Speicherorten 103, 113, 123 mit den Adressen 105, 115, 125 gespeichert. Ferner werden Identifikatoren 104, 114, 124 der digital codierten Dokumente 100, 110, 120 gezeigt. Die gezeigten digital codierten Dokumente 100, 110, 120 und Identifikatoren 104, 114, 124 entsprechen den digital codierten Dokumenten und Identifikatoren aus Figur 2. Die Blockchain-Strukturen 111 der Dokumente 100, 110, 120 der Abstammungshistorie werden bei jedem Kopiervorgang aktualisiert. Der Unterschied gegenüber Figur 2 besteht darin, dass es sich bei den Prüfmerkmalen PM jeweils um kopiervorgangsindividuelle bidirektionale Verkettungsfunktionen handelt. Ferner umfassen die Blockchain-Strukturen 111 jeweils einen Block 106 als Genesisblock, welcher als Prüfmerkmal die kopiervorgangsindividuelle bidirektionale Verkettungsfunktion F1.2 umfasst, welche das Ursprungsdokument 100 mit der ersten Kopie 110 bzw. den Block 106 mit dem Block 116 der Blockchain-Struktur 111 verkettet.

Wird beispielsweise in einem N-ten Kopiervorgang die N-te Kopie 120 erstellt, so umfasst deren zusätzlich erstellter Identifikator 124 eine Kopie der Blockchain-Struktur 111 der vorangehenden Kopiervorlage. Diese Blockchain-Struktur 111 wird um einen zusätzlichen Block 128 für den N-te Kopiervorgang zur Erstellung der Kopie 120 erweitert. Da die Blockchain-Struktur 111 einen Genesisblock 106 umfasst, handelt es sich bei dem Block 128 um den N+1 Block der erweiterten Blockchain-Struktur 111 des Dokuments 120. Der zusätzliche Block 128 umfasst eine Adresse der verwendeten Kopiervorlage sowie einen Prüfmerkmal in Form der kopiervorgangsindividuellen bidirektionalen Verkettungsfunktion FN-1.FN, welches eine Prüfung der kopierten Daten 102 inklusive der kopierten Blockchain-Struktur 111 des Dokuments 120 ebenso wie der Daten und Blockchain-Struktur der verwendeten Kopiervorlage ermöglicht. Nach Ausführungsformen hängt die kopiervorgangsindividuellen bidirektionalen Verkettungsfunktion FN-1.FN zudem von den Adressen der Kopiervorlage sowie der daraus erstellten Kopie 120 ab.

Im Zuge der Aktualisierung der Identifikatoren 104, 114 der Kopien bzw. Kopiervorlagen 110, 110 der Abstammungshistorie der hinzugefügten Kopie 120 werden alle Blockchain-Strukturen 111 um den zusätzlichen Block 128 ergänzt. Ferner wird bei allen Blockchain-Strukturen 111 jeweils die bidirektionale Verkettung zwischen dem zusätzlichen Block 128 und dem unmittelbar vorangehenden Block 127 ergänzt. Hierzu wird das Prüfmerkmal des Blocks 127 jeweils um die kopiervorgangsindividuellen bidirektionalen Verkettungsfunktion FN-1.FN erweitert. Beispielsweise wird eine Verknüpfung zwischen der kopiervorgangsindividuellen bidirektionalen Verkettungsfunktion FN-2.FN-1 und der kopiervorgangsindividuellen bidirektionalen Verkettungsfunktion FN-1.FN erstellt. Hierbei handelt es sich beispielsweise um eine arithmetische Verknüpfung, wie etwa Addition, Subtraktion, Multiplikation und/oder Division. Somit weist jede Kopie der Abstammungshistorie jeweils ein Blockchain-Struktur 111 auf, aus welcher alle Kopiervorgänge hervorgehen, welche zur Erstellung der entsprechenden Kopie geführt haben, ebenso wie alle Kopiervorgänge, welche ausgehend von der entsprechenden Kopie ausgeführt wurden. Nach Ausführungsformen umfasst ferner jeder Block 116, 126, 127, 128 jeweils eine Adresse zum Aufrufen des Identifikators der für den entsprechenden Kopiervorgang verwendeten Kopiervorlage.

Der Genesisblock 106 wird beispielsweise erstellt, um das Ursprungsdokument 100 der Abstammungshistorie zu kennzeichnen. Anhand des Genesisblock 106 ist ersichtlich, dass die Abstammungshistorie tatsächlich mit dem Ursprungsdokument 100 beginnt und nicht nur einen abgeschnittenen Rest einer eigentlich viel längeren Abstammungshistorie darstellt. Nach weiteren Ausführungsformen kann der Genesisblock 106 auch entfallen. Ferner kann beispielsweise der Block 116 als erster Block der Blockchain-Struktur 110 gekennzeichnet werden. Einen entsprechenden Genesisblock, welcher das Ursprungsdokument 100 der Abstammungshistorie kennzeichnet, können nach weiteren Ausführungsformen auch die Blockchain-Strukturen der exemplarischen Dokumente der Figuren 1 bis 3 aufweisen und/oder die Identifikatoren der Ursprungsdokumente können um eine Blockchain-Struktur mit einem solchen Genesisblock erweitert werden.

Figur 5 zeigt ein schematisches Blockdiagramm einer Ausführungsform des zweiten digital codierten Dokuments 110 sowie eines zugehörigen Identifikators 114 aus Figur 2. Im vorliegenden Fall dient das digital codierte Dokument 110 mit Adresse BB-BB nicht nur als Kopiervorlage für eine dritte Kopie mit Adresse CC-CC der Abstammungshistorie aus Figur 2, sondern zudem auch als Kopiervorlage für weitere Kopien mit Adresse KK-KK und Adresse MM-MM. Die Blockchain-Struktur 111 des Identifikators 114 weist in diesem Fall Verzweigungen 117, 119 zu den weiteren Kopien bzw. Blockchain-Strängen auf. Die Blockchain-Struktur 121 der Kopie 120 bleibt demgegenüber beispielsweise unverändert, falls sich die Aktualisierungen allein auf Blockchain-Strukturen vorhergehender Blöcke der direkten linearen Verbindung zwischen Ursprungsdokument und der jeweils neu erstellten Kopie beschränken. Werden im Zuge einer Aktualisierung die Blockchain-Strukturen der Identifikatoren aller Dokumente aller Verzweigungen der Abstammungshistorie erweitert, so umfassen die Identifikatoren alle Dokumente die identische Blockchain-Struktur, welche die vollständige Abstammungshistorie mit allen Verzweigungen 117, 119 wiedergibt.

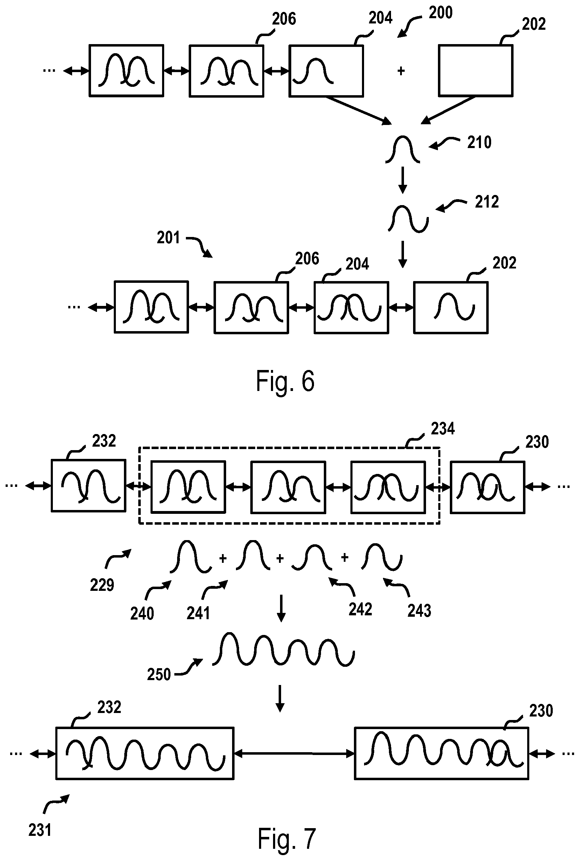

Figur 6 zeigt eine Ausführungsform einer exemplarischen Blockchain-Struktur 200. Die Blockchain-Struktur 200 soll um einen zusätzlichen Block 202 erweitert werden. Die Blöcke der Blockchain-Struktur 200 sind durch kopiervorgangsindividuelle bidirektionale Verkettungsfunktionen, schematisch angedeutet durch Funktionskurven, miteinander verkettet. Die inneren Blöcke der Blockchain-Struktur 200, wie etwa der vorletzte Block 206, sind so jeweils durch eine erste kopiervorgangsindividuelle bidirektionale Verkettungsfunktion von dem unmittelbar vorangehenden Block und durch eine zweite kopiervorgangsindividuelle bidirektionale Verkettungsfunktion von dem unmittelbar nachfolgenden Block abhängig. Die entsprechenden kopiervorgangsindividuellen bidirektionalen Verkettungsfunktionen sind als Prüfmerkmal in die Blöcke integriert. Die jeweiligen kopiervorgangsindividuellen bidirektionalen Verkettungsfunktionen wurden unter Verwendung von Daten sowohl der jeweiligen Kopiervorlage als auch der resultierenden Kopie erzeugt.

Zur bidirektionalen Verkettung des letzten Blocks 204 der Blockchain-Struktur 200 mit dem zusätzlichen Block 202 wird beispielsweise eine kopiervorgangsunabhängige Verkettungsfunktion 210 bereitgestellt. Aus der kopiervorgangsunabhängigen Verkettungsfunktion 210 wird eine kopiervorgangsindividuelle bidirektionale Verkettungsfunktion 214 abgeleitet. Für die Ableitung der kopiervorgangsindividuellen bidirektionalen Verkettungsfunktion 212 werden ein Dateninhalt der Kopiervorlage sowie ein Dateninhalt der beim entsprechenden Kopiervorgang erstellten Kopie als Parameter in die kopiervorgangsindividuelle bidirektionale Verkettungsfunktion 210 eingesetzt. Die so erzeugte kopiervorgangsindividuelle bidirektionale Verkettungsfunktion 212 ist paarweise sowohl von der Kopiervorlage als auch von der in dem Kopiervorgang erstellten Kopie abhängig.

Die kopiervorgangsindividuelle bidirektionale Verkettungsfunktion 212 wird zur Aktualisierung des Prüfmerkmals des Blocks 204 sowie zum Erstellen des Prüfmerkmals des Blocks 202 verwendet. Beispielsweise wird die kopiervorgangsindividuelle bidirektionale Verkettungsfunktion 212 sowohl in den Block 204 als auch in dem Block 202 eingefügt. Nach weiteren Ausführungsformen kann die Funktion 212 ferner dazu verwendet werden, den Dateninhalt der Kopiervorlage und/oder den Dateninhalt der erstellten Kopie zu transformieren, sodass ein Chiffrat entsteht.

Figur 7 zeigt eine exemplarische bidirektional verkettete Blockchain-Struktur 229, welche verkürzt werden soll, sodass eine verkürzte Form 231 entsteht. Hierzu wird ein inneres Kettensegment 234 zwischen den Blöcken 232 und 230 entnommen. Das innere Kettensegment 234 umfasst beispielsweise eine Mehrzahl von aufeinanderfolgenden Blöcken der Blockchain-Struktur 229. Die Prüfmerkmale der Blöcke des inneren Kettensegments 234, d. h. deren kopiervorgangsindividuelle bidirektionale Verkettungsfunktionen 240, 241, 242, 243, werden miteinander verknüpft, sodass eine kombinierte bidirektionale Verkettungsfunktion 250 entsteht. Diese kombinierte bidirektionale Verkettungsfunktion 250 ist von den einzelnen kopiervorgangsindividuellen bidirektionalen Verkettungsfunktionen 240, 241, 242, 243 abhängig. Beispielsweise werden die einzelnen kopiervorgangsindividuellen bidirektionalen Verkettungsfunktionen 240, 241, 242, 243 durch eine arithmetische Verknüpfung miteinander verknüpft, welche beispielsweise eine Addition, Subtraktion, Multiplikation und/oder Division umfasst.

Die beiden Blöcke 232 und 230 der Blockchain-Struktur 229, welche nach der Entnahme des inneren Kettensegments 234 lose Enden der Blockchain-Struktur 229 bilden, werden unter Verwendung der kombinierten bidirektionalen Verkettungsfunktion 250 miteinander verkettet. Hierzu werden beispielsweise die kopiervorgangsindividuellen bidirektionalen Verkettungsfunktionen, welche die Blöcke 230, 232 jeweils mit einem Block des entnommenen inneren Kettensegments 234 verbinden, durch die kombinierte bidirektionale Verkettungsfunktion 250 ersetzt bzw. zu dieser erweitert. Damit entsteht eine verkürzte bidirektional verkettete Blockchain-Struktur 231. Die entstehende Blockchain-Struktur 231 ist jedoch nach wie vor abhängig von dem entnommenen inneren Kettensegment 234. Wird das entnommene innere Kettensegment 234 zur Ergänzung der verkürzten Blockchain-Struktur 231 bereitgestellt, so kann unter Verwendung der kombinierten bidirektionalen Verkettungsfunktion 250 geprüft werden, ob das bereitgestellte innere Kettensegment authentisch ist. Ist das bereitgestellte innere Kettensegment authentisch, d. h. identisch mit dem entnommenen inneren Kettensegment 234, so kann die verkürzte Blockchain-Struktur, beispielsweise für Prüfzwecke, zu der ursprünglichen vollständigen Blockchain-Struktur 229 ergänzt werden.

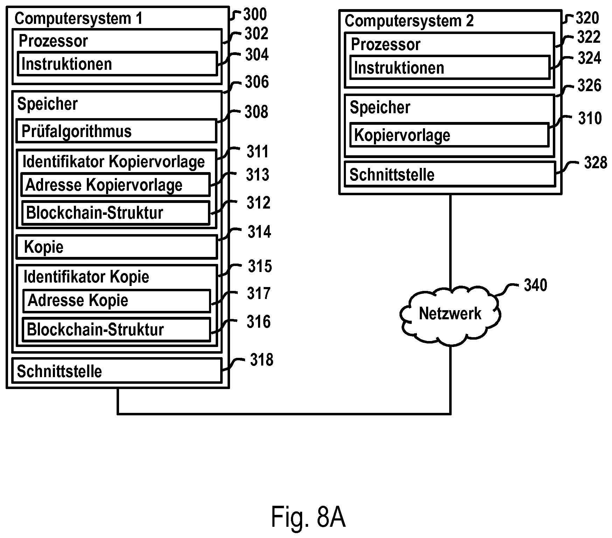

Figur 8A zeigt eine Ausführungsform eines exemplarischen Computersystems 300 zum Ausführen eines Verfahrens zur Integritätssicherung einer digital codierten Kopie eines digital codierten Ursprungsdokuments unter Verwendung einer in einen Identifikator der Kopie integrierten Blockchain-Struktur zur Protokollierung der Abstammungshistorie der Kopie. Das Computersystem 300 umfasst einen Prozessor 302, welcher dazu konfiguriert ist, Programminstruktionen 304 auszuführen. Durch Ausführung der Programminstruktionen 304 steuert der Prozessor 302 das Computersystem 300 so, dass es eine der zuvor beschriebenen Ausführungsformen des Verfahrens zur Integritätssicherung einer digital codierten Kopie ausführt.

Ein weiteres Computersystem 320 stellt beispielsweise eine Kopiervorlage 310 bereit, welche über ein Netzwerk 340 aufgerufen bzw. angefordert werden kann. Das Computersystem 320 umfasst einen Prozessor 322, welcher dazu konfiguriert ist, Programminstruktionen 324 auszuführen. Ferner umfasst das Computersystem 320 eine Speicher 326, in welchem die Kopiervorlage 310 gespeichert ist. Durch Ausführung der Programminstruktionen 324 steuert der Prozessor 322 das Computersystem 320 so, dass es auf eine Anforderung hin, z.B. eine HTTP-GET-Anforderung, die Kopiervorlage 310 als Antwort auf die Anforderung an das anfordernde Computersystem, z.B. Computersystem 300, sendet. Hierzu umfasst das Computersystem 320 eine Kommunikationsschnittstelle 328 zur Kommunikation über das Netzwerk 340.

Das Computersystem 300 umfasst beispielsweise einen Speicher 306, in welchem ein Identifikator 311 der Kopiervorlage 310 gespeichert ist. Der Identifikator 311 umfasst beispielsweise eine Adresse 313, unter der die Kopiervorlage 310 aufgerufen werden kann. Die Adresse 313 umfasst beispielsweise eine URL der Kopiervorlage 310 mit einem Hostnamen des Computersystems 320 und einen Dateinamen unter dem die Kopiervorlage 310 gespeichert ist. Ferner umfasst der Identifikator 311 eine Blockchain-Struktur 312, die die Abstammungshistorie der Kopiervorlage 310 protokolliert. Unter Verwendung des Identifikators 311 mit der Adresse 313 der Kopiervorlage 310 kann das Computersystem 300 die Kopiervorlage 310 von dem Computersystem 320 anfordern. Nach weiteren Ausführungsformen ist die Kopiervorlage 310 beispielsweise in dem Speicher 306 des Computersystems 300 gespeichert und die Adresse 313 ist umfasst einen Dateinamen inklusive Verzeichnispfad oder eine URI zum Aufrufen der Kopiervorlage 310 innerhalb eines Dateisystems des Computersystems 300. Nach weiteren Ausführungsformen wird der Identifikator 311 der Kopiervorlage 310 von einem weiteren Computersystem zum Aufrufen über das Netzwerk 340 bereitgestellt. Beispielsweise ist der Identifikator 311 der Kopiervorlage 310 eingebettet in eine Webseite, welche das weitere Computersystem bereitstellt.

Durch Ausführen der Programminstruktionen 304 wird eine Kopie 314 der empfangenen bzw. aufgerufenen Kopiervorlage 310 erstellt und in dem Speicher 306 gespeichert. Nach weiteren Ausführungsformen wird die Kopie 314 über das Netzwerk 340 an ein weiteres Computersystem gesendet, welches die Kopie 314 in einem Speicher speichert und über das Netzwerk 340 zum Abruf bereitstellt. Ferner wird ein Identifikator 315 der Kopie 314 erstellt, welcher eine Blockchain-Struktur 316 umfasst. Bei der Blockchain-Struktur 316 handelt es sich um eine Kopie der Blockchain-Struktur 312, welche um einen zusätzlichen Block erweitert wurde. Zur Erstellung des zusätzlichen Blocks wird ein Prüfmerkmal der kopierten Daten inklusive der Blockchain-Struktur 312 berechnet und in den zusätzlichen Block der Blockchain-Struktur 316 aufgenommen. Das entsprechende Prüfmerkmal wird beispielsweise unter Verwendung eines in dem Speicher 306 gespeicherten Prüfalgorithmus 308, bei dem es sich beispielsweise um einen Hash-Algorithmus handelt, berechnet. Zudem umfasst der Identifikator 315 der Kopie 314 eine Adresse 317 zum Aufrufen der Kopie 314. Die Adresse 317 umfasst beispielsweise eine URL der Kopie 314 mit einem Hostnamen des Computersystems 300 und einen Dateinamen unter dem die Kopie 314 gespeichert ist. Falls die Kopie 314 von einem anderen Computersystem zum Abruf bereitgestellt wird, umfasst die Adresse 317 beispielsweise eine URL der Kopie 314 mit einem Hostnamen dieses anderen Computersystems und einen Dateinamen unter dem die Kopie 314 in dem anderen Computersystem gespeichert ist. Identifikator 315 der Kopie 314 wird beispielsweise in dem Speicher 306 gespeichert und von dem Computersystem 300 zum Abrufen über das Netzwerk 340 bereitgestellt. Nach weiteren Ausführungsformen wird der Identifikator 315 der Kopie 314 an ein weiteres Computersystem gesendet, von diesem gespeichert und zum Abrufen über das Netzwerk 340 bereitgestellt.

Nach Ausführungsformen umfasst das Computersystem 300 und/oder das Computersystem 320 ferner eine Schnittelle zur Kommunikation mit einem Wechseldatenträger. Zudem kann das Computersystem 300 und/oder das Computersystem 320 eine Nutzerschnittstelle zur Eingabe von Befehlen durch einen Nutzer und/oder zur Ausgabe von Ergebnissen aufweisen.

Bei der Kopiervorlage 310 handelt es sich beispielsweise um eine Nachrichtenmeldung, welche auf einer Internetplattform, wie etwa als Webseite auf einer Website oder als Eintrag auf einer Social-Media-Plattform, in einem Diskussionsforum und/oder in einem Blog, zum Aufrufen bereitgestellt wird. Computersystem 300 ist beispielsweise über die Kommunikationsschnittstelle 318 mit dem Internet verbunden und kann die Kopiervorlage 310 so unter Verwendung des Identifikators 311 mit der Adresse 313 der Kopiervorlage 310 aufrufen. Beim Aufrufen der Kopiervorlage 310 unter Verwendung des Identifikators 311 wird beispielsweise im Hintergrund mittels des Prüfalgorithmus 308 die Integrität der Kopiervorlage 310 geprüft. Hierzu wird die Blockchain-Struktur 313 der der Kopiervorlage 310 herangezogen und beispielsweise das Ursprungsdokument der Abstammungshistorie der Kopiervorlage 310 sowie dessen Adresse identifiziert. Über das Netzwerk 340, etwa das Internet, wird beispielswiese auf das Ursprungsdokument der Abstammungshistorie der Kopiervorlage 310 zugegriffen. Nach Ausführungsformen wird auf alle von der Abstammungshistorie gemäß Blockchain-Struktur 312 umfassten Kopiervorlagen zugegriffen. Anhand eines Vergleich der Blockchain-Struktur 312 mit den Kopiervorlagen der Abstammungshistorie, auf welche zugegriffen wird, kann die Integrität der Kopiervorlage 310 geprüft werden. Fällt die Integritätsprüfung positiv aus, kann beispielsweise die Kopie 314 der Nachrichtenmeldung unter Verwendung der Kopiervorlage 310 erstellt werden. Die Kopie 314 kann sodann beispielsweise auf einer Internet-Plattform zum weiteren Abruf bzw. zur Weiterverbreitung bereitgestellt werden. Der Identifikator der Kopie 314 kann ebenfalls über das Internet beispielsweise als Nachricht verschickt oder auf einer Internet-Plattform zum Abrufen der Kopie 310 bereitgestellt werden. Ebenso kann in analoger Weise unter Verwendung der Blockchain-Struktur 316 die Integrität der Kopie 314 geprüft werden, wenn der Identifikator 315 mit der Adresse 317 zum Aufrufen der Kopie 314 verwendet wird.

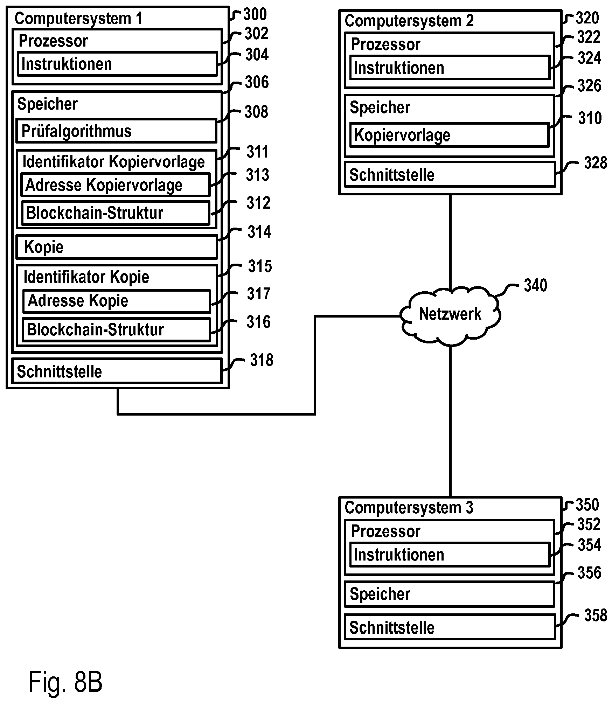

Figur 8B zeigt die exemplarischen Computersystem 300, 320 aus Figur 8A. Als elektronisches Datenspeichersystem ist das Computersystems 300 beispielsweise dazu konfiguriert die erstellte digital codierte Kopie 314 in dem Speicher 306 zu speichern. Nach Ausführungsformen können die Programminstruktionen 304 beispielsweise ein Datenbankmanagementsystem umfassen, welches die in dem Speicher 306 gespeicherten digital codierten Daten in Form von digital codierten Dokumenten, wie etwa der Kopie 314, verwaltet. Ferner kann das Computersystems 300 als ein Telekommunikationssystem konfiguriert sein, welches mittels der Kommunikationsschnittstelle 318 über das Netzwerk 340 mit anderen Computersystemen, wie etwa dem Computersystem 350, kommunizieren kann. Das Computersystem 350 umfasst beispielsweise einen Speicher 356 zum Speichern von digital codierten Dokumenten, wie etwa die von dem Computersystem 300 erstellte digital codierte Kopie 314. Ferner umfasst das Computersystem 350 einen Prozessor 352, welcher dazu konfiguriert ist, Programminstruktionen 354 auszuführen. Nach Ausführungsformen ist das Computersystems 350 ebenfalls als ein Telekommunikationssystem konfiguriert, welches mittels der Kommunikationsschnittstelle 358 über das Netzwerk 340 mit dem Computersystemen 300 kommunizieren kann.

Nach Ausführungsformen steuert der Prozessor 352 das Computersystem 350 durch Ausführung der Programminstruktionen 354 so, dass es die erstellte digital codierte Kopie 314 von dem Computersystem 300 anfordert. Beispielsweise sendet das Computersystem 350 über das Netzwerk 340 eine entsprechende Anforderung, wie etwa eine HTTP-GET-Anforderung, an das Computersystem 300. Nach Ausführungsformen steuert der Prozessor 302 das Computersystem 300 durch Ausführung der Programminstruktionen 304 so, dass das Computersystem 300 in Antwort auf den Empfang der Anforderung die digital codierte Kopie 314 über das Netzwerk 340 an das Computersystem 350 sendet. Beispielsweise wird die digital codierte Kopie 314 als Webseite oder Posting bereitgestellt. Ferner kann die digital codierte Kopie 314 mit einer entsprechenden Webseite oder Posting verlinkt sein. Nach weiteren Ausführungsformen wird die digital codierte Kopie 314 beispielsweise mittels einer E-Mail oder als Instant-Message von dem Computersystem 300 unaufgefordert über das Netzwerk 340 an das Computersystem 350 gesendet. Schließlich kann digital codierte Kopie 314 auch durch eine HTTP-Post-Anforderung von dem Computersystem 300 unaufgefordert über das Netzwerk 340 an das Computersystem 350 gesendet werden.

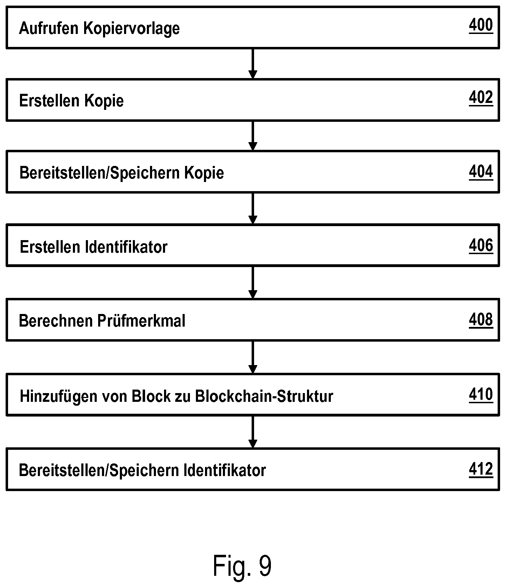

Figur 9 zeigt eine Ausführungsform eines exemplarischen Verfahrens zur Integritätssicherung beim Erstellen einer digital codierten Kopie eines digital codierten Ursprungsdokuments unter Verwendung einer in einen Identifikator der Kopie integrierten Blockchain-Struktur zur Protokollierung der Abstammungshistorie der Kopie. In Schritt 400 wird eine Kopiervorlage für den Kopiervorgang aufgerufen unter Verwendung eines Identifikators der Kopiervorlage. Der Identifikator umfasst eine Adresse zum Aufrufen der Kopiervorlage und als Parameterwert eine Blockchain-Struktur, in der die Abstammungshistorie der ersten Kopiervorlage protokolliert ist. Die Kopiervorlage umfasst Daten des digital codierten Ursprungsdokuments. Die Kopiervorlage kann beispielsweise auf dem den Kopiervorgang ausführenden Computersystem oder auf einem an dieses angeschlossenen Speichermedium oder einem Wechseldatenträger gespeichert sein. Ferner kann die Kopiervorlage beispielsweise über ein Netzwerk, wie etwa das Internet oder ein Intranet, zum Abrufen durch das Computersystem bereitgestellt sein. Ebenso kann der Identifikator der Kopiervorlage beispielsweise auf dem den Kopiervorgang ausführenden Computersystem oder auf einem an dieses angeschlossenen Speichermedium oder einem Wechseldatenträger gespeichert sein. Ferner kann der Identifikator beispielsweise über ein Netzwerk, wie etwa das Internet oder ein Intranet, zum Abrufen durch das Computersystem bereitgestellt sein. Schließlich kann das Computersystem den Identifikator auch als Anhang zu einer digital codierten Nachricht, wie etwa eine E-Mail, empfangen. In Schritt 402 wird eine Kopie der Daten der Kopiervorlage erstellt. In Schritt 404 wird die erstellte Kopie unter einer Adresse gespeichert und zum Aufrufen der Kopie bereitgestellt. Die Speicherung erfolgt beispielsweise auf dem den Kopiervorgang ausführenden Computersystem oder auf einem weiteren Computersystem, welcher beispielsweise als ein Server zum Bereitstellen der Kopie über ein Netzwerk konfiguriert ist. In Schritt 406 wird ein Identifikator der Kopie erstellt, welcher eine Kopie der Blockchain-Struktur des Identifikators der in Schritt 400 aufgerufenen Kopiervorlage umfasst. Zudem umfasst der Identifikator eine Adresse unter der die erstellte Kopie aufgerufen werden kann. In Schritt 408 wird ein Prüfmerkmal der kopierten Daten, d. h. der Daten des digital codierten Ursprungsdokuments sowie der Blockchain-Struktur, welche der Identifikator der Kopiervorlage umfasst, erstellt. Ferner kann das Prüfmerkmal die Adresse der Kopiervorlage berücksichtigen.

In Schritt 410 wird ein zusätzlicher Block zu der kopierten Blockchain-Struktur hinzugefügt, wobei der zusätzliche Block die Adresse der Kopiervorlage und das in Schritt 408 berechneten Prüfmerkmal umfasst. Durch das Hinzufügen des zusätzlichen Blocks wird die Blockchain-Struktur der Kopie gebildet. Nach Ausführungsformen kann der Identifikator der Kopie zudem eine Adresse zum Aufrufen des verwendeten Identifikators der Kopiervorlage umfassen. In Schritt 410 wird der erstellte Identifikator der Kopie mit seiner Blockchain-Struktur beispielsweise gespeichert oder über ein Netzwerk an ein den Identifikator bzw. die Kopie anfragendes Computersystem übersendet. Im letzteren Fall wird der Kopiervorgang beispielsweise durch eine entsprechende Anfrage nach der Kopie durch das weitere Computersystem ausgelöst. Schließlich kann der Identifikator der Kopie auch durch einen Server zum Abrufen über ein Netzwerk, wie etwa das Internet oder ein Intranet, bereitgestellt werden.

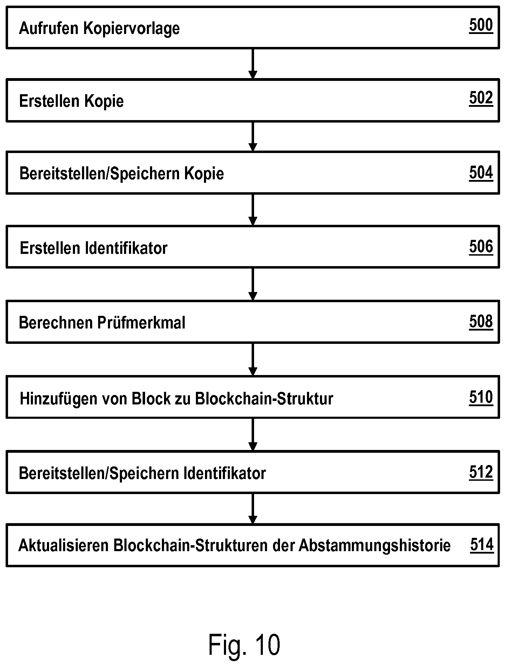

Figur 10 zeigt eine Ausführungsform eines weiteren exemplarischen Verfahrens zum Erstellen einer integritätsgesicherten digital codierten Kopie. Die Verfahrensschritte 500 bis 512 entsprechen dabei den Verfahrensschritten 400 bis 412 aus Figur 9. Das Verfahren gemäß Figur 10 weist zusätzlich den Schritt 514 auf, in welchem die Blockchain-Strukturen der Identifikatoren der Kopien der Abstammungshistorie der in Schritt 502 erstellten Kopie um den in Block 506 erstellten zusätzlichen Block aktualisiert, d. h. ergänzt werden. Hierzu weisen die Identifikatoren neben der Adresse der jeweiligen Kopie, der sie zugeordneten sind, beispielsweise jeweils eine Adresse des Identifikators der Kopiervorlage auf, welche zur Erstellung der entsprechenden Kopie verwendet wurde. Nach weiteren Ausführungsformen umfassen die Blöcke der Blockchain-Struktur beispielsweise neben der Adresse der für den jeweiligen Kopiervorgang verwendeten Kopiervorlage eine Adresse des Identifikators der entsprechenden Kopiervorlage. Unter Verwendung der Adressen können die Identifikatoren der Kopien bzw. Kopiervorlagen der Abstammungshistorie identifiziert werden. Daraufhin werden die Blockchain-Strukturen der entsprechenden Identifikatoren der Kopien bzw. Kopiervorlagen der Abstammungshistorie aktualisiert. Sind entsprechende Identifikatoren auf verschiedenen Computersystemen verteilt gespeichert, so werden beispielsweise die einzelnen Computersysteme anhand der Adressen, unter denen die Identifikatoren gespeichert sind, über die notwendige Aktualisierung informiert. Auf den Empfang einer entsprechenden Information bzw. Aktualisierungsaufforderung hin werden die Identifikatoren von den angefragten Computersystemen aktualisiert. Nach Ausführungsformen erfolgt beispielsweise zunächst eine Authentifizierung des kopierenden Computersystems gegenüber dem angefragten Computersystem, auf welchem der zu aktualisierende Identifikator gespeichert ist. Das Authentifizieren des kopierenden Computersystems kann Teil einer gegenseitigen Authentifizierung sein. Eine Authentifizierung kann nach Ausführungsformen unter Verwendung von Zertifikaten, insbesondere Zertifikate eines PKI erfolgen. Handelt es sich bei der Blockchain-Struktur um eine bidirektional verkettete Blockchain-Struktur, so umfasst das Hinzufügen des zusätzlichen Blocks ein bidirektionales Verketten des entsprechenden Blocks mit dem letzten Block der zu aktualisierenden Blockchain-Struktur.

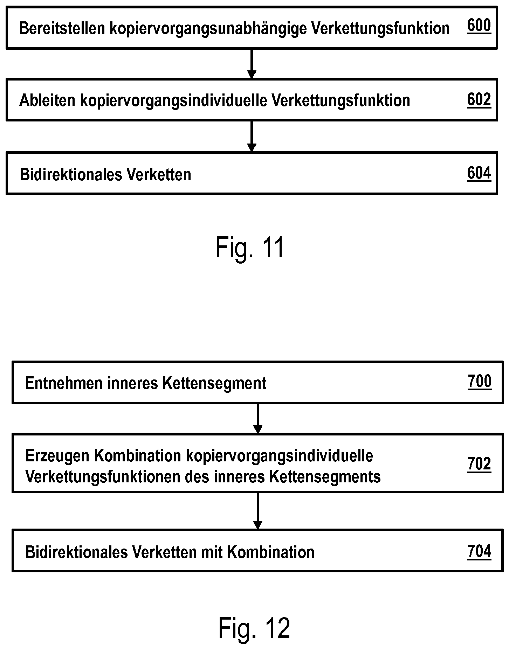

Figur 11 zeigt eine Ausführungsform eines exemplarischen Verfahrens zum Erzeugen einer bidirektionalen Verkettung. Dieses Verfahren ist beispielsweise Teil des Berechnens eines Prüfmerkmals und Erstellen eines zusätzlichen Blocks gemäß Schritten 408 und 410 bzw. 508 und 510 der Figuren 9 bzw. 10. In Schritt 600 wird eine kopiervorgangsunabhängige Verkettungsfunktion bereitgestellt. Die entsprechende kopiervorgangsunabhängige Verkettungsfunktion kann beispielsweise für eine Mehrzahl unterschiedlicher Blockchain-Strukturen bereitgestellt werden. Aus der kopiervorgangsunabhängigen Verkettungsfunktion wird in Schritt 602 eine kopiervorgangsindividuelle bidirektionale Verkettungsfunktion abgeleitet, wobei Dateninhalte der Kopiervorlage als auch der erstellten Kopie als Parameter in die kopiervorgangsunabhängige Verkettungsfunktion eingesetzt werden. In Schritt 604 erfolgt schließlich ein bidirektionales Verketten der kopierten Blockchain-Struktur mit dem hinzuzufügenden zusätzlichen Block. Hierzu wird beispielsweise die kopiervorgangsindividuelle bidirektionale Verkettungsfunktion zu dem bisherigen Prüfmerkmal des letzten Blocks der kopierten Blockchain-Struktur hinzugefügt bzw. mit diesem verknüpft und zugleich als Prüfmerkmal in dem zusätzlich erstellten Block ergänzt. Bei der Verknüpfung kann es sich beispielswiese um eine arithmetische Verknüpfung handeln, welche eine Addition, Subtraktion, Multiplikation und/oder Division umfasst.

Figur 12 zeigt eine Ausführungsform eines exemplarischen Verfahrens zum Erzeugen einer verkürzten Kopie einer bidirektional verketteten Blockchain-Struktur. Bei der bidirektional verketteten Blockchain-Struktur kann es sich beispielsweise um eine Blockchain-Struktur handeln, die unter Verwendung des Verfahrens aus Figur 11 erstellt wurde. In Schritt 700 werden ein oder mehrere innere Kettensegmente aus der bidirektional verketteten Blockchain-Struktur entnommen. Die entnommenen inneren Kettensegmente umfassen dabei jeweils ein oder mehrere Blöcke der bidirektional verketteten Blockchain-Struktur. In Schritt 702 wird für jedes entnommene innere Kettensegment eine kombinierte kopiervorgangsindividuelle bidirektionale Verkettungsfunktion erzeugt. Hierzu werden die kopiervorgangsindividuellen bidirektionalen Verkettungsfunktionen der Blöcke des entsprechenden inneren Kettensegments miteinander verknüpft. Bei der Verknüpfung kann es sich beispielswiese um eine arithmetische Verknüpfung handeln, welche eine Addition, Subtraktion, Multiplikation und/oder Division umfasst. In Schritt 704 werden schließlich im Falle jedes entnommenen inneren Kettensegments die beiden losen Enden, welche sich durch das Entnehmen des entsprechenden inneren Kettensegments ergeben, unter Verwendung der kombinierten bidirektionalen Verkettungsfunktion aus Schritt 702 bidirektional miteinander verkettet. Hierzu werden die in den Blöcken, welche die beiden losen Enden bilden, gespeicherten kopiervorgangsindividuellen bidirektionalen Verkettungsfunktionen, mit welchen die entsprechenden Blöcke mit Blöcken des entnommenen inneren Kettensegments verkettet waren, durch die kombinierte bidirektionale Verkettungsfunktion ersetzt bzw. zu der kombinierten bidirektionalen Verkettungsfunktion ergänzt.

Nach Ausführungsformen können in Schritt 702 zwei kombinierte bidirektionale Verkettungsfunktionen erzeugt werden, wobei eine erste der beiden kombinierten bidirektionalen Verkettungsfunktionen zur Ergänzung des ersten losen Endes der verkürzten Blockchain-Struktur und die zweite kombinierte Verkettungsfunktion zum Ergänzen des zweiten losen Endes der verkürzten Blockchain-Struktur vorgesehen sind. Dabei umfasst die erste kombinierte Verkettungsfunktion alle kopiervorgangsindividuellen bidirektionalen Verkettungsfunktionen des inneren Kettensegments außer der kopiervorgangsindividuellen bidirektionalen Verkettungsfunktion des ersten losen Endes der verkürzten Blockchain-Struktur und die zweite kombinierte Verkettungsfunktion umfasst alle kopiervorgangsindividuellen bidirektionalen Verkettungsfunktionen des inneren Kettensegments außer der kopiervorgangsindividuellen bidirektionalen Verkettungsfunktion des zweiten losen Endes der verkürzten Blockchain-Struktur. Die Ergänzung des ersten bzw. zweiten losen Endes der Blockchain-Struktur kann in diesem Fall durch ein Verknüpfen der zu ergänzenden kopiervorgangsindividuellen bidirektionalen Verkettungsfunktionen des ersten bzw. zweiten losen Endes mit der ersten bzw. zweiten kombinierten bidirektionalen Verkettungsfunktion erfolgen.

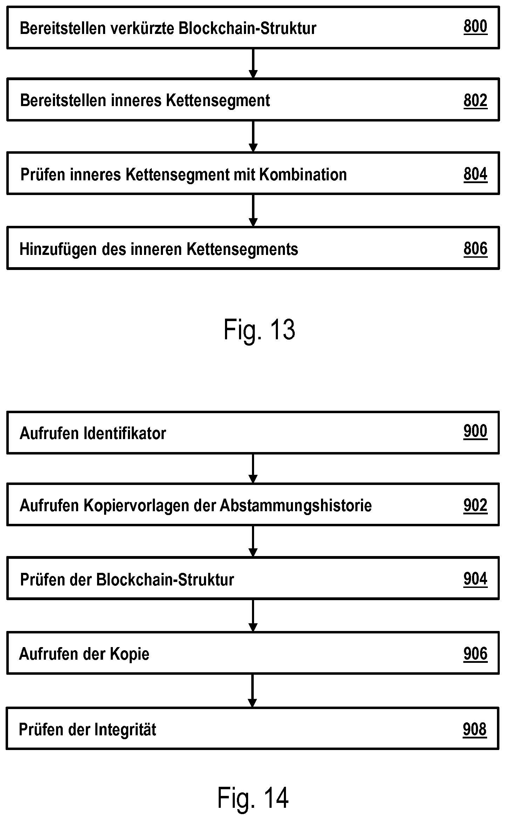

Figur 13 zeigt ein exemplarisches Verfahren zum Erstellen einer vollständigen bidirektional verketteten Blockchain-Struktur aus einer verkürzten bidirektionalen Blockchain-Struktur, beispielsweise für Prüfungszwecke. In Schritt 800 wird eine verkürzte bidirektional verkettete Blockchain-Struktur bereitgestellt. Hierbei handelt es sich beispielsweise um eine gemäß dem Verfahren der Figur 12 erstellten verkürzten bidirektional verketteten Blockchain-Struktur. In Schritt 802 wird ein zu ergänzendes inneres Kettensegment der ursprünglichen vollständigen bidirektional verketteten Blockchain-Struktur bereitgestellt. In Block 804 wird geprüft, ob das bereitgestellte innere Kettensegment mit dem aus der ursprünglichen vollständigen bidirektional verketteten Blockchain-Struktur entnommenen Segment übereinstimmt. Beispielsweise wird aus dem bereitgestellten inneren Kettensegment probeweise eine kombinierte bidirektionale Verkettungsfunktion berechnet und mit der kombinierten bidirektionalen Verkettungsfunktion der bereitgestellten verkürzten Blockchain-Struktur verglichen. Im Fall einer Übereinstimmung wird das bereitgestellte innere Kettensegment als authentisch anerkannt. Daraufhin wird in Schritt 806 das bereitgestellte innere Kettensegment an die ursprüngliche Stelle der bereitgestellten verkürzten Blockchain-Struktur eingefügt und die kombinierte bidirektionale Verkettungsfunktion der Blöcke, zwischen denen ein Kettensegment eingefügt wurde, durch die ursprünglichen bidirektionalen Verkettungsfunktionen ersetzt bzw. auf diese verkürzt.

Figur 14 zeigt schließlich ein exemplarisches Verfahren zum Prüfen der Integrität einer digital codierten Kopie eines digital codierten Ursprungsdokuments unter Verwendung einer in einen Identifikator der Kopie integrierten Blockchain-Struktur, welche die Abstammungshistorie der Kopie protokolliert. In Schritt 900 wird ein entsprechender Identifikator mit einer Blockchain-Struktur der zu prüfenden Kopie aufgerufen. In Schritt 902 werden die Kopiervorlagen der Abstammungshistorie anhand der Blockchain-Struktur identifiziert und zu Prüfzwecken aufgerufen. In Schritt 904 wird die Blockchain-Struktur unter Verwendung der aufgerufenen Kopiervorlage auf ihre Integrität hin geprüft. Unter Verwendung der aufgerufenen Kopiervorlagen werden beispielsweise die einzelne Prüfmerkmale der einzelnen Blöcke der Blockchain-Struktur nachgerechnet. Stimmen die nachgerechneten Prüfmerkmale mit den Prüfmerkmalen der Blockchain-Struktur des in Schritt 900 aufgerufenen Identifikators überein, so ergibt sich daraus die Korrektheit der bereitgestellten Blockchain-Struktur. In Schritt 906 wird die zu prüfende Kopie unter Verwendung einer von dem Identifikator bereitgestellten Adresse der Kopie aufgerufen. In Schritt 908 erfolgt schließlich eine Integritätsprüfung der kopierten Daten. Hierzu werden beispielsweise die Daten der Kopie mit den Daten des Ursprungsdokuments verglichen. Stimmen diese miteinander überein, so handelt es sich um unveränderte Daten. Stimmen diese nicht überein, so kann anhand der Blockchain-Struktur nachgeprüft werden, an welcher Stelle der Abstammungshistorie bzw. bei welchem Kopiervorgang es zu einer Veränderung der kopierten Daten gekommen ist. Hierzu werden beispielsweise die einzelnen Prüfmerkmale unter Verwendung des Ursprungsdokuments nachgerechnet. Weicht ein Prüfmerkmal von dem Prüfmerkmal der Blockchain-Struktur ab, so indiziert dies eine Veränderung der Daten. Daraufhin kann geprüft werden, ob die Veränderung die Daten inhaltlich betrifft und/oder ob die bereitgestellte Kopie explizit auf die entsprechende Veränderung der Daten hinweist. Handelt es sich bei der Veränderung der Daten um keine inhaltliche Veränderung oder handelt es sich bei der Veränderung der Daten um eine Veränderung der Daten, auf welche explizit hingewiesen wird, so können die kopierten Daten in der bereitgestellten Kopie als integer eingestuft werden. Ein entsprechendes Prüfungsverfahren gemäß Figur 14 läuft beispielsweise im Hintergrund ab, wenn die entsprechende Kopie geöffnet bzw. aufgerufen werden. Das Ergebnis des Prüfvorgangs, d. h. eine Bestätigung der Integrität der Kopie, eine Verneinung der Integrität der Kopie und/oder eine Analyse von Änderungen der kopierten Daten, wird nach Abschluss der Prüfung beispielsweise zusätzlich zu dem geöffneten digital codierten Dokument angezeigt.

### Bezugszeichenliste

- 100: Ursprungsdokument
- 102: Daten
- 103: Speicher
- 104: Identifikator
- 105: Adresse
- 110: Kopie
- 111: Blockchain-Struktur
- 113: Speicher
- 114: Identifikator
- 115: Adresse
- 116: Block
- 117: Verzweigung
- 119: Verzweigung
- 120: Kopie
- 121: Blockchain-Struktur
- 124: Identifikator
- 123: Speicher
- 125: Adresse
- 126: Block
- 127: Block
- 128: Block
- 130: Kopie
- 133: Speicher
- 131: Blockchain-Struktur
- 134: Identifikator
- 136: Block
- 200: Blockchain-Struktur
- 201: Blockchain-Struktur
- 202: Block
- 204: Block
- 206: Block
- 210: kopiervorgangsunabhängige Verkettungsfunktion
- 212: kopiervorgangsindividuelle Verkettungsfunktion
- 229: Blockchain-Struktur
- 230: Block
- 231: verkürzte Blockchain-Struktur
- 232: Block
- 234: inneres Kettensegment
- 240: kopiervorgangsindividuelle Verkettungsfunktion
- 241: kopiervorgangsindividuelle Verkettungsfunktion
- 242: kopiervorgangsindividuelle Verkettungsfunktion
- 243: kopiervorgangsindividuelle Verkettungsfunktion
- 250: Kombination Verkettungsfunktionen
- 300: Computersystem
- 302: Prozessor
- 304: Programminstruktionen
- 306: Speicher
- 308: Prüfalgorithmus
- 310: Kopiervorlage
- 311: Identifikator Kopiervorlage
- 312: Blockchain-Struktur
- 313: Adresse Kopiervorlage
- 314: Kopie
- 315: Identifikator Kopie
- 316: Blockchain-Struktur
- 317: Adresse Kopie
- 318: Kommunikationsschnittstelle
- 320: Computersystem
- 322: Prozessor
- 324: Instruktionen
- 326: Speicher
- 328: Kommunikationsschnittstelle
- 340: Netzwerk
- 350: Computersystem
- 352: Prozessor
- 354: Instruktionen
- 356: Speicher
- 358: Kommunikationsschnittstelle

## Patentansprüche

1. Verfahren zur Integritätssicherung digital codierter Kopien (110, 120, 130, 314) eines digital codierten Ursprungsdokuments (100) unter Verwendung einer in Identifikatoren (114, 124, 134, 315) der Kopien (110, 120, 130, 314) integrierten Blockchain-Struktur (111, 121, 131, 200, 201, 229, 231, 312, 316) zur Protokollierung der Abstammungshistorie der Kopien,
wobei das Verfahren umfasst:
• Aufrufen einer ersten digital codierten Kopiervorlage (110), welche Daten (102) des digital codierten Ursprungsdokuments (100) umfasst, unter Verwendung eines Identifikators (114) der ersten Kopiervorlage (110), welcher eine Adresse (115) zum Aufrufen der ersten Kopiervorlage (110) und als Parameterwert eine Blockchain-Struktur (111) umfasst, in der die Abstammungshistorie der ersten Kopiervorlage (110) protokolliert ist,
• Erstellen einer ersten digital codierten Kopie (120, 130, 314) von Daten (102) der ersten Kopiervorlage (110), wobei die kopierten Daten (102) der ersten Kopie (120, 130, 314) die Daten (102) des digital codierten Ursprungsdokuments (100) umfassen,
• Bereitstellen der ersten Kopie (120, 130, 314) unter einer Adresse (125, 135, 317) zum Aufrufen der ersten Kopie (120, 130, 314),
• Erstellen eines Identifikators (124, 134, 315) der ersten Kopie (120, 130, 314), wobei der Identifikator (124, 134, 315) der ersten Kopie (120, 130, 314) die Adresse (125, 135, 313) der ersten Kopie (120, 130, 314) und als Parameterwert die Blockchain-Struktur (111) der ersten Kopiervorlage (110) umfasst, wobei ein zusätzlicher Block (128, 136) zu der Blockchain-Struktur (111) hinzugefügt wird, wobei der zusätzliche Block (128, 136) der ersten Kopiervorlage (110) zugeordnet ist, wobei der zusätzliche Block (128, 136) die Adresse (115) der ersten Kopiervorlage (110) sowie einen Prüfmerkmal (PM) der kopierten Daten (102) umfasst, welcher eine Integritätsprüfung der kopierten Daten (102) inklusive des Identifikators (114) der ersten Kopiervorlage (110) ermöglicht,
• Bereitstellen des Identifikators (124, 134, 315) der ersten Kopie (120, 130, 314) zum Aufrufen der ersten Kopie (120, 130, 314) und zum Prüfen der Identität der kopierten Daten (102) der ersten Kopie (120, 130, 314).

2. Verfahren nach Anspruch 1, wobei das Verfahren ferner umfasst:
• Aufrufen einer zweiten digital codierten Kopiervorlage (100), welche die Daten (102) des digital codierten Ursprungsdokuments (100) umfasst, unter Verwendung eines Identifikators (104) der zweiten Kopiervorlage (100), welcher eine Adresse (105) zum Aufrufen der zweiten Kopiervorlage (100) umfasst,
• Erstellen der ersten Kopiervorlage (110) als eine zweite digital codierte Kopie (110) von Daten (102) der zweiten digital codierten Kopiervorlage (100), wobei die kopierten Daten (102) der zweiten Kopie (110) die Daten (102) des digital codierten Ursprungsdokuments (100) umfassen,
• Bereitstellen der zweiten Kopie (11 0unter der Adresse (115) zum Aufrufen der ersten Kopiervorlage (110),
• Erstellen des Identifikators (114) der zweiten Kopie (110), wobei der Identifikator (114) der zweiten Kopie (110) die zweite Adresse (115) umfasst, wobei ein Block (116) der Blockchain-Struktur (111) als Parameterwert zu dem Identifikator (114) der zweiten Kopie (110) hinzugefügt wird, wobei der Block (116) der zweiten Kopiervorlage (100) zugeordnet ist, wobei der Block (116) die Adresse (105) der zweiten Kopiervorlage (100) sowie einen Prüfmerkmal (PM) der kopierten Daten (102) umfasst, welcher eine Integritätsprüfung der kopierten Daten (102) der zweiten Kopie (110) ermöglicht,
• Bereitstellen des Identifikators (114) der zweiten Kopie (110) zum Aufrufen der zweiten Kopie (110) und zum Prüfen der Identität der kopierten Daten (102) der zweiten Kopie (110).

3. Verfahren nach Anspruch 2, wobei es sich bei der zweiten digital codierten Kopiervorlage (100) um das digital codierte Ursprungsdokument handelt oder wobei es sich bei der zweiten digital codierten Kopiervorlage) um eine dritte Kopie mit kopierten Daten (102) des digital codierten Ursprungsdokuments (100) handelt,
wobei der Identifikator der zweiten Kopiervorlage als Parameterwert eine Blockchain-Struktur umfasst, wobei die Blockchain-Struktur einen Block für jeden Kopiervorgang der Abstammungshistorie der zweiten Kopiervorlage ausgehend von dem digital codierten Ursprungsdokument (100) bis hin zu der Erstellung der zweiten Kopiervorlage umfasst, wobei die Blöcke jeweils der Kopiervorlage zugeordnet sind, welche für den entsprechenden Kopiervorgang verwendet wurde, wobei jeder der Blöcke jeweils eine Adresse zum Aufrufen der Kopiervorlage umfasst, welcher der entsprechende Block zugeordnet ist, und wobei jeder der Blöcke jeweils einen Prüfmerkmal der kopierten Daten (102) des entsprechenden Kopiervorgangs umfasst, welcher eine Integritätsprüfung der kopierten Daten (102) inklusive des Identifikators der Kopiervorlage ermöglicht, welcher der entsprechende Block zugeordnet ist,
wobei der Identifikator der zweiten Kopie als Parameterwert die Blockchain-Struktur der zweiten Kopiervorlage umfasst und das Hinzufügen des Blocks zu dem Identifikator der zweiten Kopie ein Erweitern der Blockchain-Struktur der zweiten Kopiervorlage um den entsprechenden Block umfasst,
wobei das Prüfmerkmal der kopierten Daten (102) eine Integritätsprüfung der kopierten Daten (102) der zweiten Kopie inklusive des Identifikators der zweiten Kopiervorlage ermöglicht.

4. Verfahren nach einem der vorangehenden Ansprüche, wobei die kopierten Daten (102) der ersten digital codierten Kopie (110, 120, 130, 314) und/oder die kopierten Daten (102) der zweiten digital codierten Kopie (110, 120, 130, 314) zumindest einen Auszug der Daten (102) des digital codierten Ursprungsdokuments (100) umfassen,
wobei insbesondere die kopierten Daten (102) der ersten digital codierten Kopie (120, 130, 314) und/oder die kopierten Daten (102) der zweiten digital codierten Kopie (110) die vollständigen Daten (102) des digital codierten Ursprungsdokuments (100) umfassen.

5. Verfahren nach einem der vorangehenden Ansprüche, wobei die Identifikatoren (104, 114, 124, 134, 311, 315) der Kopien und Kopiervorlagen (100, 110, 120, 130, 310, 314) jeweils eine URI umfassen und das Aufrufen der jeweiligen Kopien und/oder Kopiervorlagen (100, 110, 120, 130, 310, 314) über ein Netzwerk erfolgt,
wobei die Identifikatoren (104, 114, 124, 134, 311, 315) der Kopien und Kopiervorlagen (100, 110, 120, 130, 310, 314) insbesondere jeweils eine URL umfassen.

6. Verfahren nach einem der vorangehenden Ansprüche, wobei die Identifikatoren (104, 114, 124, 134, 311, 315) jeweils zur Verwendung in einem Protokoll zur Übertragung von Daten (102) auf der Anwendungsschicht des TCP/IP-Referenzmodels editiert sind,
wobei es sich bei dem Protokoll insbesondere um ein HTTP- oder HTTPS-Protokoll handelt.

7. Verfahren nach einem der Ansprüche 2 bis 6, wobei das Verfahren ferner umfasst:
auf das Hinzufügen des Blocks (116) zu dem Identifikator (104, ) der zweiten Kopiervorlage (100) hin, Aktualisieren der Blockchain-Strukturen aller Identifikatoren aller Kopien welche die Abstammungshistorie der zweiten Kopiervorlage (100,) umfasst, wobei das Aktualisieren jeweils ein Ergänzen der entsprechenden Blockchain-Struktur um den hinzugefügten Block (116) umfasst.

8. Verfahren nach einem der vorangehenden Ansprüche, wobei das Verfahren ferner umfasst:
auf das Hinzufügen des zusätzlichen Blocks (128, 136) zu der Blockchain-Struktur (111) der ersten Kopiervorlage (110) in dem Identifikator (124, 134, 315) der ersten Kopie (120, 130, 314) hin, Aktualisieren der Blockchain-Strukturen aller Identifikatoren aller Kopien , welche die Abstammungshistorie der ersten Kopiervorlage (110) umfasst, wobei das Aktualisieren jeweils ein Ergänzen der entsprechenden Blockchain-Struktur um den zusätzlichen Block (128, 136) umfasst.

9. Verfahren nach einem der vorangehenden Ansprüche, wobei ein Identifikator (104) des Ursprungsdokuments (100) eine Adresse (105) zum Aufrufen des Ursprungsdokuments (100) und eine Blockchain-Struktur (111) umfasst,
wobei das Verfahren insbesondere ferner umfasst:
auf das Hinzufügen des Blocks (116, 128, 136) zu dem Identifikator (104) der zweiten Kopiervorlage (100) hin, Aktualisieren der Blockchain-Struktur (111) des Identifikators (104) des Ursprungsdokuments (100), wobei das Aktualisieren ein Ergänzen der Blockchain-Struktur (111) des Identifikators (104) des Ursprungsdokuments (100) um den hinzugefügten Block (116, 128, 136) umfasst,
und/oder wobei das Verfahren insbesondere ferner umfasst:
auf das Hinzufügen des zusätzlichen Blocks (116, 128, 136) zu der Blockchain-Struktur (111) der ersten Kopiervorlage (110) in dem Identifikator (124, 134, 315) der ersten Kopie (120, 130, 314) hin, Aktualisieren der Blockchain-Struktur (111) des Identifikators (104) des Ursprungsdokuments (100), wobei das Aktualisieren ein Ergänzen der Blockchain-Struktur (111) des Identifikators (104) des Ursprungsdokuments (100) um den zusätzlichen Block (116, 128, 136) umfasst.

10. Verfahren nach einem der vorangehenden Ansprüche, wobei es sich bei den Blockchain-Strukturen (111, 121, 131, 200, 201, 229, 231, 312, 316) jeweils um eine bidirektional verkettete Blockchain-Struktur handelt und das Hinzufügen eines Blocks (116, 128, 136, 202) zu den Blockchain-Strukturen (111, 121, 131, 200, 201, 229, 231, 312, 316) im Zuge eines Kopiervorgangs ferner jeweils umfasst:
• Bereitstellen einer kopiervorgangsunabhängigen Verkettungsfunktion (210),
• Ableiten einer kopiervorgangsindividuellen bidirektionalen Verkettungsfunktion (212, 240, 241, 212, 243) aus der kopiervorgangsunabhängigen Verkettungsfunktion (210),
wobei für das Ableiten ein Dateninhalt der Kopie (110, 120, 130, 314), welche im Zuge eines Kopiervorgangs erstellt wird, als ein erster Parameter und ein Dateninhalt der Kopiervorlage (100, 110, 130, 310), welche für den Kopiervorgang verwendet wird, als ein zweiter Parameter verwendet werden, sodass die kopiervorgangsindividuelle bidirektionale Verkettungsfunktion (212, 240, 241, 212, 243) paarweise sowohl von der erstellten Kopie (110, 120, 130, 314) als auch von der verwendeten Kopiervorlage (100, 110, 130, 310) abhängig ist,
• bidirektionales Verketten des hinzuzufügenden Blocks (116, 128, 136, 202) mit dem zuletzt hinzugefügten Block (116, 127, 204) der entsprechenden Blockchain-Struktur (111, 121, 131, 200, 201, 229, 231, 312, 316),
wobei das bidirektionale Verketten insbesondere ein Hinzufügen der kopiervorgangsindividuellen bidirektionalen Verkettungsfunktion (212, 240, 241, 212, 243) als Prüfmerkmal (PM) sowohl zu dem hinzuzufügenden Block (116, 128, 136, 202) als auch zu dem zuletzt hinzugefügten Block (116, 127, 204) der entsprechenden Blockchain-Struktur (111, 121, 131, 200, 201, 229, 231, 312, 316) umfasst,
oder wobei das bidirektionale Verketten insbesondere ein Anwenden der kopiervorgangsindividuellen bidirektionalen Verkettungsfunktion (212, 240, 241, 212, 243) auf die kopierten Daten (102) und ein Hinzufügen des resultierenden Ergebnisses als Prüfmerkmal (PM) sowohl zu dem hinzuzufügenden Block (116, 128, 136, 202) als auch zu dem zuletzt hinzugefügten Block (116, 127, 204) der entsprechenden Blockchain-Struktur (111, 121, 131, 200, 201, 229, 231, 312, 316) umfasst.

11. Verfahren nach einem der vorangehenden Ansprüche, wobei das Verfahren ferner eine Integritätsprüfung der ersten Kopie (120, 130, 314) umfasst, wobei die Prüfung umfasst:
• Zugreifen auf das Ursprungsdokument (100),
• Erzeugen eines Referenzmerkmals für das Prüfmerkmal (PM) des zusätzlichen Blocks unter (128, 136, 202) Verwendung des Ursprungsdokuments (100) und der von der Blockchain-Struktur (121, 131, 200, 201, 229, 312, 316) des Identifikators (124, 134, 315) der ersten Kopie (120, 130, 314) protokollierten Abstammungshistorie der ersten Kopie (120, 130, 314),
• Vergleichen des Referenzmerkmals mit dem Prüfmerkmal (PM) des zusätzlichen Blocks (128, 136, 202),
• im Fall einer Übereinstimmung des Referenzmerkmals mit dem Prüfmerkmal (PM), Bestätigen der Integrität der ersten Kopie (120, 130, 314),
wobei insbesondere im Fall einer fehlenden Übereinstimmung des Referenzmerkmals mit dem Prüfmerkmal (PM), die Integrität der ersten Kopie (120, 130, 314) verneint wird,
und/oder wobei die Integritätsprüfung der ersten Kopie (120, 130, 314) umfasst:
• Zugreifen auf eine der Kopien (110), welche die Abstammungshistorie der ersten Kopie (120, 130, 314) umfasst, die die Blockchain-Struktur (121, 131, 200, 201, 229, 312, 316) des Identifikators (124, 134, 315) der ersten Kopie (120, 130, 314) protokolliert,
• Erzeugen eines Referenzmerkmals für das Prüfmerkmal (PM) des zusätzlichen Blocks (116) unter Verwendung der Kopie (110), auf welche zugegriffen wird, und der protokollierten Abstammungshistorie der ersten Kopie (120, 130, 314),
• Vergleichen des Referenzmerkmals mit dem Prüfmerkmal (PM) des zusätzlichen Blocks (116),
• im Fall einer Übereinstimmung des Referenzmerkmals mit dem Prüfmerkmal (PM), Bestätigen der Integrität der ersten Kopie (120, 130, 314) im Verhältnis zu der Kopie (110), auf welche zugegriffen wurde,
wobei insbesondere im Fall einer fehlenden Übereinstimmung des Referenzmerkmals mit dem Prüfmerkmal (PM), die Integrität der ersten Kopie (120, 130, 314) verneint wird.

12. Verfahren nach einem der vorangehenden Ansprüche, wobei das Verfahren ferner eine Integritätsprüfung der protokollierten Abstammungshistorie der ersten Kopie (120, 130, 314) umfasst, wobei die Prüfung umfasst:
• Zugreifen auf das Ursprungsdokument (100) sowie die Kopien (110), welche die Abstammungshistorie der ersten Kopie (120, 130, 314) umfasst, die die Blockchain-Struktur (121, 131, 200, 201, 229, 312, 316) des Identifikators (124, 134, 315) der ersten Kopie (120, 130, 314) protokolliert,
• Erzeugen von Referenzmerkmalen für die Prüfmerkmale (PM) der einzelnen Blöcke (116, 126, 127, 128, 136, 202) der Blockchain-Struktur (121, 131, 200, 201, 229, 312, 316) des Identifikators (124, 134, 315) der ersten Kopie (120, 130, 314) unter Verwendung des Ursprungsdokuments (100) sowie der Kopien (110), auf welche zugegriffen wird,
• Vergleichen der Prüfmerkmale (PM) der einzelnen Blöcke (116, 126, 127, 128, 136, 202) mit dem für das jeweilige Prüfmerkmal (PM) erzeugten Referenzmerkmal,
• im Fall einer Übereinstimmung der Prüfmerkmale (PM) mit den jeweiligen Referenzmerkmalen, Bestätigen der Integrität der protokollierten Abstammungshistorie der ersten Kopie (120, 130, 314),
wobei insbesondere im Fall einer fehlenden Übereinstimmung eines der Prüfmerkmale (PM) mit dem für das jeweilige Prüfmerkmal (PM) erzeugten Referenzmerkmal die Integrität der protokollierten Abstammungshistorie der ersten Kopie (120, 130, 314) verneint wird.

13. Verfahren zum integritätssicheren Versenden von digital codierten Daten (102) über ein Netzwerk (340), wobei das Verfahren umfasst:
• Erstellen eines digital codierten Dokuments (110, 120, 130, 314), welches die zu versendenden digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem der vorangehend Ansprüche erstellt und unter einer Adresse (115, 125, 135, 313) zum Aufrufen der Kopie gespeichert wird,
• Erstellen eines Identifikators (114, 124, 134, 315) der digital codierten Kopie (110, 120, 130, 314) unter Verwendung eines Verfahrens nach einem der vorangehend Ansprüche, wobei der Identifikator (114, 124, 134, 315) die Adresse (115, 125, 135, 313) zum Aufrufen der Kopie umfasst,
• Versenden des Identifikators (114, 124, 134, 315) der digital codierten Kopie (110, 120, 130, 314) über das Netzwerk (340),
• Versenden des digital codierten Dokuments (110, 120, 130, 314) über das Netzwerk (340) in Antwort auf eine Anforderung des digital codierten Dokuments (110, 120, 130, 314), welche die Adresse (115, 125, 135, 313) durch den des digital codierten Dokuments (110, 120, 130, 314) identifiziert.

14. Verfahren zum integritätssicheren Anfordern von digital codierten Daten (102) über ein Netzwerk (340), wobei das Verfahren umfasst:
• Empfangen eines Identifikators (114, 124, 134, 315) eines digital codierten Dokuments (110, 120, 130, 314) über das Netzwerk (340), wobei das digital codierte Dokument (110, 120, 130, 314) die digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem Ansprüche 1 bis 12 erstellt und unter einer Adresse (115, 125, 135, 313) zum Aufrufen der Kopie gespeichert wurde, wobei der Identifikator (114, 124, 134, 315) unter Verwendung eines Verfahrens nach einem Ansprüche 1 bis 12 erstellt wurde und die Adresse (115, 125, 135, 313) zum Aufrufen der Kopie umfasst,
• Anfordern eines digital codierten Dokuments (110, 120, 130, 314) über das Netzwerk (340) unter Verwendung der von dem Identifikator (114, 124, 134, 315) umfassten Adresse (115, 125, 135, 313) zum Aufrufen der Kopie,
• in Antwort auf das Anfordern, Empfangen des angeforderten digital codierten Dokuments (110, 120, 130, 314) über das Netzwerk (340).

15. Computersystem (300) zur Integritätssicherung digital codierter Kopien (110, 120, 130, 314) eines digital codierten Ursprungsdokuments (100) unter Verwendung einer in Identifikatoren (114, 124, 134, 315) der Kopien (110, 120, 130, 314) integrierten Blockchain-Struktur (111, 121, 131, 200, 201, 229, 312, 316) zur Protokollierung der Abstammungshistorie der Kopien (110, 120, 130, 314), wobei das System einen Prozessor (302), eine Netzwerkschnittstelle (318) und einen Speicher (306) mit maschinenlesbaren Instruktionen (304) umfasst, wobei ein Ausführen der maschinenlesbaren Instruktionen (304) durch den Prozessor (302) das Computersystem (300) dazu veranlasst, ein Verfahren auszuführen, welches umfasst:
• Aufrufen einer digital codierten Kopiervorlage (110, 120, 130, 310), welche Daten (102) des digital codierten Ursprungsdokuments (100) umfasst, unter Verwendung eines Identifikators (114, 124, 134, 311) der Kopiervorlage (110, 120, 130, 310), welcher eine Adresse (115, 125, 135, 313) zum Aufrufen der Kopiervorlage (110, 120, 130, 310) und als Parameterwert eine Blockchain-Struktur (111, 121, 131, 200, 201, 229, 312, 316) umfasst, in der die Abstammungshistorie der Kopiervorlage (110, 120, 130, 310) protokolliert ist,
• Erstellen einer digital codierten Kopie (110, 120, 130, 314) von Daten (102) der Kopiervorlage (110, 120, 130, 310), wobei die kopierten Daten (102) der Kopie (110, 120, 130, 314) die Daten (102) des digital codierten Ursprungsdokuments (100) umfassen,
• Bereitstellen der Kopie (110, 120, 130, 314) unter einer Adresse (115, 125, 135, 317) zum Aufrufen der Kopie (110, 120, 130, 314),
• Erstellen eines Identifikators (114, 124, 134, 315) der Kopie (110, 120, 130, 314), wobei der Identifikator (114, 124, 134, 315) der Kopie (110, 120, 130, 314) die Adresse (115, 125, 135, 317) der Kopie (110, 120, 130, 314) und als Parameterwert die Blockchain-Struktur (111, 121, 131, 200, 201, 229, 312, 316) der Kopiervorlage (110, 120, 130, 310) umfasst, wobei ein zusätzlicher Block (116, 128, 136, 202) zu der Blockchain-Struktur (111, 121, 131, 200, 201, 229, 312, 316) hinzugefügt wird, wobei der zusätzliche Block (116, 128, 136, 202) der Kopiervorlage (110, 120, 130, 310) zugeordnet ist, wobei der zusätzliche Block (116, 128, 136, 202) die Adresse (115, 125, 135, 313) der Kopiervorlage (110, 120, 130, 310) sowie einen Prüfmerkmal (PM) der kopierten Daten (102) umfasst, welcher eine Integritätsprüfung der kopierten Daten (102) inklusive des Identifikators (114, 124, 134, 311) der Kopiervorlage (110, 120, 130, 310) ermöglicht,
• Bereitstellen des Identifikators (114, 124, 134, 315) der Kopie (110, 120, 130, 314) zum Aufrufen der Kopie (110, 120, 130, 314) und zum Prüfen der Identität der kopierten Daten (102) der Kopie (110, 120, 130, 314).

16. Telekommunikationssystem (300) zum integritätssicheren Versenden von digital codierten Daten (102) über ein Netzwerk (340), wobei das Telekommunikationssystem (300) einen Prozessor (302) und einen Speicher (306) mit maschinenlesbaren Instruktionen (304, 308) umfasst, wobei das Telekommunikationssystem (300) ferner eine Kommunikationsschnittstelle (318) zur Kommunikation über das Netzwerk (340) umfasst, wobei ein Ausführen der maschinenlesbaren Instruktionen (304, 308) durch den Prozessor (302) das Telekommunikationssystem (300) dazu veranlasst, ein Verfahren auszuführen, welches umfasst:
• Erstellen eines digital codierten Dokuments (110, 120, 130, 314), welches die zu versendenden digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem Ansprüche 1 bis 12 erstellt und unter einer Adresse zum Aufrufen der Kopie gespeichert wird,
• Erstellen eines Identifikators (114, 124, 134, 315) der digital codierten Kopie (110, 120, 130, 314) unter Verwendung eines Verfahrens nach einem Ansprüche 1 bis 12, wobei der Identifikator (114, 124, 134, 315) die Adresse (115, 125, 135, 313) zum Aufrufen der Kopie umfasst,
• Versenden des Identifikators (114, 124, 134, 315) der digital codierten Kopie (110, 120, 130, 314) über das Netzwerk (340),
• Versenden des digital codierten Dokuments (110, 120, 130, 314) über das Netzwerk (340) in Antwort auf eine Anforderung des digital codierten Dokuments (110, 120, 130, 314), welche die Adresse (115, 125, 135, 313) durch den des digital codierten Dokuments (110, 120, 130, 314) identifiziert.

17. Telekommunikationssystem (350) zum integritätssicheren Aufrufen von digital codierten Daten (102) über ein Netzwerk (340), wobei das Telekommunikationssystem (350) einen Prozessor (352) und einen Speicher (356) mit maschinenlesbaren Instruktionen (354) umfasst, wobei das Telekommunikationssystem (350) ferner eine Kommunikationsschnittstelle (358) zur Kommunikation über das Netzwerk (340) umfasst, wobei ein Ausführen der maschinenlesbaren Instruktionen (354) durch den Prozessor (302) das Telekommunikationssystem (300) dazu veranlasst, ein Verfahren auszuführen, welches umfasst:
• Empfangen eines Identifikators (114, 124, 134, 315) eines digital codierten Dokuments (110, 120, 130, 314) über das Netzwerk (340), wobei das digital codierte Dokument (110, 120, 130, 314) die digital codierten Daten (102) umfasst, wobei es sich bei den digital codierten Daten (102) um kopierte Daten eines digital codierten Ursprungsdokuments (100) handelt und wobei das digital codierte Dokument (110, 120, 130, 314) als digital codierte Kopie unter Verwendung eines Verfahrens nach einem Ansprüche 1 bis 12 erstellt und unter einer Adresse (115, 125, 135, 313) zum Aufrufen der Kopie (110, 120, 130, 314) gespeichert wurde, wobei der Identifikator (114, 124, 134, 315) unter Verwendung eines Verfahrens nach einem Ansprüche 1 bis 12 erstellt wurde und die Adresse (115, 125, 135, 313) zum Aufrufen der Kopie (110, 120, 130, 314) umfasst,
• Anfordern eines digital codierten Dokuments (110, 120, 130, 314) über das Netzwerk (340) unter Verwendung der von dem Identifikator (114, 124, 134, 315) umfassten Adresse (115, 125, 135, 313) zum Aufrufen der Kopie,
• in Antwort auf das Anfordern, Empfangen des angeforderten digital codierten Dokuments (110, 120, 130, 314) über das Netzwerk (340).

## Claims

1. A method for the integrity protection of digitally coded copies (110, 120, 130, 314) of a digitally coded original document (100) using a blockchain structure (111, 121, 131, 200, 201, 229, 231, 312, 316) integrated into identifiers (114, 124, 134, 315) of the copies (110, 120, 130, 314) for logging the derived history of the copies,
wherein the method comprises:
• calling up a first digitally coded copy template (110), which comprises data (102) of the digitally coded original document (100), with the use of an identifier (114) of the first copy template (110), which comprises an address (115) for calling up the first copy template (110) and a blockchain structure (111) as a parameter value in which the derived history of the first copy template (110) is logged,
• creating a first digitally coded copy (120, 130, 314) of data (102) of the first copy template (110), wherein the copied data (102) of the first copy (120, 130, 314) comprise the data (102) of the digitally coded original document (100),
• providing the first copy (120, 130, 314) at an address (125, 135, 317) for calling up the first copy (120, 130, 314),
• creating an identifier (124, 134, 315) of the first copy (120, 130, 314), wherein the identifier (124, 134, 315) of the first copy (120, 130, 314) comprises the address (125, 135, 313) of the first copy (120, 130, 314) and as a parameter value the blockchain structure (111) of the first copy template (110), wherein an additional block (128, 136) is added to the blockchain structure (111), wherein the additional block (128, 136) is assigned to the first copy template (110), wherein the additional block (128, 136) comprises the address (115) of the first copy template (110) and a test feature (PM) of the copied data (102), which enables an integrity check of the copied data (102) including the identifier (114) of the first copy template (110),
• providing the identifier (124, 134, 315) of the first copy (120, 130, 314) for calling up the first copy (120, 130, 314) and for checking the identity of the copied data (102) of the first copy (120, 130, 314).

2. The method according to claim 1, wherein the method further comprises:
• calling up a second digitally coded copy template (100), which comprises the data (102) of the digitally coded original document (100), by using an identifier (104) of the second copy template (100), which comprises an address (105) for calling up the second copy template (100),
• creating the first copy template (110) as a second digitally coded copy (110) of data (102) of the second digitally coded copy template (100), wherein the copied data (102) of the second copy (110) comprise the data (102) of the digitally coded original document (100),
• providing the second copy (110) at the address (115) for calling up the first copy template (110),
• creating the identifier (114) of the second copy (110), wherein the identifier (114) of the second copy (110) comprises the second address (115), wherein a block (116) of the blockchain structure (111) is added as a parameter value to the identifier (114) of the second copy (110), wherein the block (116) is assigned to the second copy template (100), wherein the block (116) comprises the address (105) of the second copy template (100) and a test feature (PM) of the copied data (102), which enables an integrity check of the copied data (102) of the second copy (110),
• providing the identifier (114) of the second copy (110) for calling up the second copy (110) and for checking the identity of the copied data (102) of the second copy (110).

3. The method according to claim 2, wherein the second digitally coded copy template (100) consists of the digitally coded original document or wherein the second digitally coded copy template consists of a third copy with copied data (102) of the digitally coded original document (100),
wherein the identifier of the second copy template comprises a blockchain structure as a parameter value, wherein the blockchain structure comprises a block for each copying process of the derived history of the second copy template starting from the digitally coded original document (100) up to the creation of the second copy template, wherein the blocks are assigned respectively to the copy template, which was used for the corresponding copying process, wherein each of the blocks respectively comprises an address for calling up the copy template, which is assigned to the corresponding block, and wherein each of the blocks respectively comprises a test feature of the copied data (102) of the corresponding copying process, which enables an integrity check of the copied data (102) including the identifier of the copy template, to which the corresponding block is assigned,
wherein the identifier of the second copy comprises the blockchain structure of the second copy template as the parameter value and the addition of the block to the identifier of the second copy comprises an extension of the blockchain structure of the second copy template by the corresponding block,
wherein the test feature of the copied data (102) enables an integrity check of the copied data (102) of the second copy including the identifier of the second copy template.

4. The method according to any one of the preceding claims, wherein the copied data (102) of the first digitally coded copy (110, 120, 130, 314) and/or the copied data (102) of the second digitally coded copy (110, 120, 130, 314) comprise at least an extract of the data (102) of the digitally coded original document (100),
wherein in particular the copied data (102) of the first digitally coded copy (120, 130, 314) and/or the copied data (102) of the second digitally coded copy (110) comprise the complete data (102) of the digitally coded original document (100).

5. The method according to any one of the preceding claims, wherein the identifiers (104, 114, 124, 134, 311, 315) of the copies and copy templates (100, 110, 120, 130, 310, 314) respectively comprise a URI and the calling up of the respective copies and/or copy templates (100, 110, 120, 130, 310, 314) is performed via a network,
wherein in particular the identifiers (104, 114, 124, 134, 311, 315) of the copies and copy templates (100, 110, 120, 130, 310, 314) respectively comprise a URL.

6. The method according to any one of the preceding claims, wherein the identifiers (104, 114, 124, 134, 311,315) are edited respectively for use in a protocol for the transmission of data (102) at the application layer of the TCP/IP reference model,
wherein the protocol is in particular an HTTP or HTTPS protocol.

7. A method according to any one of claims 2 to 6, wherein the method further comprises:
indicating the addition of the block (116) to the identifier (104) of the second copy template (100), updating the blockchain structures of all identifiers of all copies, which comprises the derived history of the second copy template (100), wherein the updating comprises respectively adding the added block (116) to the corresponding blockchain structure.

8. The method according to any one of the preceding claims, wherein the method further comprises:
indicating the addition of the additional blocks (128, 136) to the blockchain structure (111) of the first copy template (110) in the identifier (124, 134, 315) of the first copy (120, 130, 314), updating the blockchain structures of all identifiers of all copies, which comprises the derived history of the first copy template (110), wherein the update comprises respectively adding the additional block (128, 136) to the corresponding blockchain structure.

9. The method according to any one of the preceding claims, wherein an identifier (104) of the original document (100) comprises an address (105) for calling up the original document (100) and a blockchain structure (111),
wherein in particular the method further comprises:
indicating the addition of the block (116, 128, 136) to the identifier (104) of the second copy template (100), updating the blockchain structure (111) of the identifier (104) of the original document (100), wherein the updating comprises adding the added block (116, 128, 136) to the blockchain structure (111) of the identifier (104) of the original document (100),
and/or wherein in particular the method further comprises:
indicating the addition of the additional block (116, 128, 136) to the blockchain structure (111) of the first copy template (110) in the identifier (124, 134, 315) of the first copy (120, 130, 314), updating the blockchain structure (111) of the identifier (104) of the original document (100), wherein the updating comprises adding the additional block (116, 128, 136) to the blockchain structure (111) of the identifier (104) of the original document (100).

10. The method according to any one of the preceding claims, wherein the blockchain structures (111, 121, 131, 200, 201, 229, 231, 312, 316) have respectively a bidirectionally linked blockchain structure and the addition of a block (116, 128, 136, 202) to the blockchain structures (111, 121, 131, 200, 201, 229, 231, 312, 316) in the course of a copying process further comprises:
• providing a linking function (210) independent of the copying process,
• deriving a copying process-individual bidirectional linking function (212, 240, 241, 212, 243) from the linking function (210) independent of the copying process,
wherein for the derivation a data content of the copy (110, 120, 130, 314), which is created in the course of a copying process, is used as a first parameter and a data content of the copy template (100, 110, 130, 310), which is used for the copying process, is used as a second parameter, so that the copying process-individual bidirectional linking function (212, 240, 241, 212, 243) is dependent pairwise on both the created copy (110, 120, 130, 314) and on the used copy template (100, 110, 130, 310),
• bidirectional linking of the block (116, 128, 136, 202) to be added with the last block added (116, 127, 204) of the corresponding blockchain structure (111, 121, 131, 200, 201, 229, 231, 312, 316),
wherein the bidirectional linking comprises in particular adding the copying process-individual bidirectional linking function (212, 240, 241, 212, 243) as test feature (PM) to both the block to be added (116, 128, 136, 202) and to the last block added (116, 127, 204) of the corresponding blockchain structure (111, 121, 131, 200, 201, 229, 231, 312, 316),
or wherein the bi-directional linking comprises in particular applying the copying process-individual bidirectional linking function (212, 240, 241, 212, 243) to the copied data (102) and adding the resulting result as test feature (PM) to both the block (116, 128, 136, 202) to be added and to the last added block (116, 127, 204) of the corresponding blockchain structure (111, 121, 131, 200, 201, 229, 231, 312, 316).

11. The method according to any one of the preceding claims, wherein the method further comprises an integrity check of the first copy (120, 130, 314), wherein the check comprises:
• accessing the original document (100),
• creating a reference feature for the test feature (PM) of the additional block (128, 136, 202) by using the original document (100) and the derived history of the first copy (120, 130, 314) logged by the blockchain structure (121, 131, 200, 201, 229, 312, 316) of the identifier (124, 134, 315) of the first copy (120, 130, 314),
• comparing the reference feature with the test feature (PM) of the additional block (128, 136, 202),
• in the event of a correspondence of the reference feature with the test feature (PM), confirming the integrity of the first copy (120, 130, 314),
wherein in particular in the event of a lack of correspondence of the reference feature with the test feature (PM) the integrity of the first copy (120, 130, 314) is negated,
and/or wherein the integrity check of the first copy (120, 130, 314) comprises:
• accessing one of the copies (110), which comprises the derived history of the first copy (120, 130, 314), which logs the blockchain structure (121, 131, 200, 201, 229, 312, 316) of the identifier (124, 134, 315) of the first copy (120, 130, 314),
• generating a reference feature for the test feature (PM) of the additional block (116) using the copy (110), which is accessed, and the logged derived history of the first copy (120, 130, 314),
• comparing the reference feature with the test feature (PM) of the additional block (116),
• in the event of a correspondence of the reference feature with the test feature (PM), confirming the integrity of the first copy (120, 130, 314) relative to the copy (110) which was accessed,
wherein in particular in the event of a lack of correspondence of the reference feature with the test feature (PM) the integrity of the first copy (120, 130, 314) is negated.

12. The method according to any one of the preceding claims, wherein the method further comprises an integrity check of the protocolled derived history of the first copy (120, 130, 314), wherein the check comprises:
• accessing the original document (100) and the copies (110), which comprises the derived history of the first copy (120, 130, 314), which logs the blockchain structure (121, 131, 200, 201, 229, 312, 316) of the identifier (124, 134, 315) of the first copy (120, 130, 314),
• generating reference features for the test features (PM) of the individual blocks (116, 126, 127, 128, 136, 202) of the blockchain structure (121, 131, 200, 201, 229, 312, 316) of the identifier (124, 134, 315) of the first copy (120, 130, 314) using the original document (100) and the copies (110), which is accessed,
• comparing the test features (PM) of the individual blocks (116, 126, 127, 128, 136, 202) with the reference feature generated for the respective test feature (PM),
• in the event of a correspondence of the test features (PM) with the respective reference features, confirming the integrity of the logged derived history of the first copy (120, 130, 314).
wherein in particular in the event of a lack of correspondence of one of the test features (PM) with the reference feature generated for the respective test feature (PM) the integrity of the logged derived history of the first copy (120, 130, 314) is negated.

13. A method for the integrity-protected sending of digitally coded data (102) via a network (340), wherein the method comprises:
• creating a digitally coded document (110, 120, 130, 314) which comprises the digitally coded data (102) to be sent, wherein the digitally coded data (102) consists of copied data of a digitally coded original document (100) and wherein the digitally coded document (110, 120, 130, 314) is created as digitally coded copy by using a method according to any one of the preceding claims and is saved at an address (115, 125, 135, 313) for calling up the copy,
• creating an identifier (114, 124, 134, 315) of the digitally coded copy (110, 120, 130, 314) by using a method according to any one of the preceding claims, wherein the identifier (114, 124, 134, 315) comprises the address (115, 125, 135, 313) for calling up the copy,
• sending the identifier (114, 124, 134, 315) of the digitally coded copy (110, 120, 130, 314) via the network (340),
• sending the digitally coded document (110, 120, 130, 314) via the network (340) in response to a request of the digitally coded document (110, 120, 130, 314), which identifies the address (115, 125, 135, 313) by that of the digitally coded document (110, 120, 130, 314).

14. A method for the integrity-protected request of digitally coded data (102) via a network (340), wherein the method comprises:
• receiving an identifier (114, 124, 134, 315) of a digitally coded document (110, 120, 130, 314) via the network (340), wherein the digitally coded document (110, 120, 130, 314) comprises the digitally coded data (102), wherein the digitally coded data (102) is copied data of a digitally coded original document (100) and wherein the digitally coded document (110, 120, 130, 314) was created as a digitally coded copy by using a method according to any one of claims 1 to 12 and saved at an address (115, 125, 135, 313) for calling up the copy, wherein the identifier (114, 124, 134, 315) was created by using a method according to any one of claims 1 to 12 and comprises the address (115, 125, 135, 313) for calling up the copy,
• requesting a digitally coded document (110, 120, 130, 314) via the network (340) by using the address (115, 125, 135, 313) comprised by the identifier (114, 124, 134, 315) for calling up the copy,
• in response to the request, receiving the requested digitally coded document (110, 120, 130, 314) via the network (340).

15. A computer system (300) for the integrity protection of digitally coded copies (110, 120, 130, 314) of a digitally coded original document (100) by using a blockchain structure (111, 121, 131, 200, 201, 229, 312, 316) integrated into identifiers (114, 124, 134, 315) of the copies (110, 120, 130, 314) for logging the derived history of the copies (110, 120, 130, 314), wherein the system comprises a processor (302), a network interface (318) and a memory (306) with machine-readable instructions (304), wherein executing the machine-readable instructions (304) by the processor (302) causes the computer system (300) to execute a method, which comprises:
• calling up a digitally coded copy template (110, 120, 130, 310), which comprises data (102) of the digitally coded original document (100), by using an identifier (114, 124, 134, 311) of the copy template (110, 120, 130, 310), which comprises an address (115, 125, 135, 313) for calling up the copy template (110, 120, 130, 310) and comprises a blockchain structure (111, 121, 131, 200, 201, 229, 312, 316) as a parameter value in which the derived history of the copy template (110, 120, 130, 310) is logged,
• creating a digitally coded copy (110, 120, 130, 314) of data (102) of the copy template (110, 120, 130, 310), wherein the copied data (102) of the copy (110, 120, 130, 314) comprise the data (102) of the digitally coded original document (100),
• providing the copy (110, 120, 130, 314) at an address (115, 125, 135, 317) for calling up the copy (110, 120, 130, 314),
• creating an identifier (114, 124, 134, 315) of the copy (110, 120, 130, 314), wherein the identifier (114, 124, 134, 315) of the copy (110, 120, 130, 314) comprises the address (115, 125, 135, 317) of the copy (110, 120, 130, 314) and as parameter value the blockchain structure (111, 121, 131, 200, 201, 229, 312, 316) of the copy template (110, 120, 130, 310), wherein an additional block (116, 128, 136, 202) is added to the blockchain structure (111, 121, 131, 200, 201, 229, 312, 316), wherein the additional block (116, 128, 136, 202) is assigned to the copy template (110, 120, 130, 310), wherein the additional block (116, 128, 136, 202) comprises the address (115, 125, 135, 313) of the copy template (110, 120, 130, 310) and a test feature (PM) of the copied data (102), which enables an integrity check of the copied data (102) including the identifier (114, 124, 134, 311) of the copy template (110, 120, 130, 310),
• providing the identifier (114, 124, 134, 315) of the copy (110, 120, 130, 314) for calling up the copy (110, 120, 130, 314) and for checking the identity of the copied data (102) of the copy (110, 120, 130, 314).

16. A telecommunications system (300) for the integrity-protected sending of digitally coded data (102) via a network (340), wherein the telecommunications system (300) comprises a processor (302) and a memory (306) with machine-readable instructions (304, 308), wherein the telecommunications system (300) further comprises a communication interface (318) for communication via the network (340), wherein an execution of the machine-readable instructions (304, 308) by the processor (302) causes the telecommunications system (300) to execute a method which comprises:
• creating a digitally coded document (110, 120, 130, 314), which comprises the digitally coded data (102) to be sent, wherein the digitally coded data (102) consists of copied data of a digitally coded original document (100) and wherein the digitally coded document (110, 120, 130, 314) is created as a digitally coded copy using a method according to any one of claims 1 to 12 and is saved at an address for calling up the copy,
• creating an identifier (114, 124, 134, 315) of the digitally coded copy (110, 120, 130, 314) by using a method according to any one of claims 1 to 12, wherein the identifier (114, 124, 134, 315) comprises the address (115, 125, 135, 313) for calling up the copy,
• sending the identifier (114, 124, 134, 315) of the digitally coded copy (110, 120, 130, 314) via the network (340),
• sending the digitally coded document (110, 120, 130, 314) via the network (340) in response to a request of the digitally coded document (110, 120, 130, 314), which identifies the address (115, 125, 135, 313) by that of the digitally coded document (110, 120, 130, 314).

17. A telecommunications system (350) for the integrity-protected calling up of digitally coded data (102) via a network (340), wherein the telecommunications system (350) comprises a processor (352) and a memory (356) with machine-readable instructions (354), wherein the telecommunications system (350) further comprises a communication interface (358) for communication via the network (340), wherein an execution of the machine-readable instructions (354) by the processor (302) causes the telecommunications system (300) to execute a method which comprises:
• receiving an identifier (114, 124, 134, 315) of a digitally coded document (110, 120, 130, 314) via the network (340), wherein the digitally coded document (110, 120, 130, 314) comprises the digitally coded data (102), wherein the digitally coded data (102) consists of copied data of a digitally coded original document (100), and wherein the digitally coded document (110, 120, 130, 314) was created as a digitally coded copy by using a method according to any one of claims 1 to 12 and saved at an address (115, 125, 135, 313) for calling up the copy (110, 120, 130, 314), wherein the identifier (114, 124, 134, 315) was created by using a method according to any one of claims 1 to 12 and the address (115, 125, 135, 313) for calling up the copy (110, 120, 130, 314) comprises,
• requesting a digitally coded document (110, 120, 130, 314) via the network (340) using the address (115, 125, 135, 313) comprised by the identifier (114, 124, 134, 315) for calling up the copy,
• in response to the request, receiving the requested digitally coded document (110, 120, 130, 314) via the network (340).

## Revendications

1. Procédé de sécurisation de l'intégrité de copies (110, 120, 130, 314) codées numériquement d'un document d'origine (100) codé numériquement moyennant l'emploi d'une structure de chaine de blocs (111, 121, 131, 200, 201, 229, 231, 312, 316) intégrée dans des identificateurs (114, 124, 134, 315) des copies (110, 120, 130, 314) pour la consignation de l'historique d'origine des copies,
le procédé comprenant :
• la consultation d'un premier modèle de copie (110) codé numériquement, lequel comprend des données (102) du document d'origine (100) codé numériquement, moyennant l'emploi d'un identificateur (114) du premier modèle de copie (110), lequel comprend une adresse (115) pour la consultation du premier modèle de copie (110) et une structure de chaine de blocs (111) en tant que valeur de paramètre, dans laquelle est consigné l'historique d'origine du premier modèle de copie (110),
• la création d'une première copie (120, 130, 314) codée numériquement de données (102) du premier modèle de copie (110), où les données (102) copiées de la première copie (120, 130, 314) comprennent les données (102) du document d'origine (100) codé numériquement,
• la production de la première copie (120, 130, 314) sous une adresse (125, 135, 317) pour la consultation de la première copie (120, 130, 314),
• la création d'un identificateur (124, 134, 315) de la première copie (120, 130, 314), où l'identificateur (124, 134, 315) de la première copie (120, 130, 314) comprend l'adresse (125, 135, 313) de la première copie (120, 130, 314) et en tant que valeur de paramètre la structure de chaine de blocs (111) du premier modèle de copie (110), où un bloc supplémentaire (128, 136) est ajouté à la structure de chaine de blocs (111), où le bloc supplémentaire (128, 136) est associé au premier modèle de copie (110), où le bloc supplémentaire (128, 136) comprend l'adresse (115) du premier modèle de copie (110) ainsi qu'une caractéristique de vérification (PM) des données (102) copiées, laquelle permet une vérification de l'intégrité des données (102) copiées, y compris de l'identificateur (114) du premier modèle de copie (110),
• la production de l'identificateur (124, 134, 315) de la première copie (120, 130, 314) pour la consultation de la première copie (120, 130, 314) et pour la vérification de l'identité des données (102) copiées de la première copie (120, 130, 314).

2. Procédé selon la revendication 1, le procédé comprenant en outre :
• la consultation d'un deuxième modèle de copie (100) codé numériquement, lequel comprend les données (102) du document d'origine (100) codé numériquement, moyennant l'emploi d'un identificateur (104) du deuxième modèle de copie (100), lequel comprend une adresse (105) pour la consultation du deuxième modèle de copie (100),
• la création du premier modèle de copie (110) en tant que deuxième copie (110) codée numériquement de données (102) du deuxième modèle de copie (100) codé numériquement, où les données (102) copiées de la deuxième copie (110) comprennent les données (102) du document d'origine (100) codé numériquement,
• la production de la deuxième copie (110) sous l'adresse (115) pour la consultation du premier modèle de copie (110),
• la création de l'identificateur (114) de la deuxième copie (110), où l'identificateur (114) de la deuxième copie (110) comprend la deuxième adresse (115), où un bloc (116) est ajouté à la structure de chaine de blocs (111) en tant que valeur de paramètre à l'identificateur (114) de la deuxième copie (110, où le bloc (116) est associé au deuxième modèle de copie (100), où le bloc (116) comprend l'adresse (105) du deuxième modèle de copie (100) ainsi qu'une caractéristique de vérification (PM) des données (102) copiées, laquelle permet une vérification de l'intégrité des données (102) copiées du deuxième modèle de copie (110),
• la production de l'identificateur (114) de la deuxième copie (110) pour la consultation de la deuxième copie (110) et pour la vérification de l'identité des données (102) copiées de la deuxième copie (110).

3. Procédé selon la revendication 2, dans lequel, dans le cas du deuxième modèle de copie (100) codé numériquement, il s'agit du document d'origine codé numériquement ou dans lequel, dans le cas du deuxième modèle de copie codé numériquement, il s'agit d'une troisième copie avec des données (102) copiées du document d'origine (100) codé numériquement,
dans lequel l'identificateur du deuxième modèle de copie comprend une structure de chaine de blocs en tant que valeur de paramètre, où la structure de chaine de blocs comprend un bloc pour chaque processus de copiage de l'historique d'origine du deuxième modèle de copie en partant du document d'origine (100) codé numériquement jusqu'à la création du deuxième modèle de copie, où les blocs sont respectivement associés au modèle de bloc, lequel a été employé pour le processus de copiage correspondant, où chacun des blocs comprend respectivement une adresse pour la consultation du modèle de copie, auquel est associé le bloc correspondant, et où chacun des blocs comprend respectivement une caractéristique de vérification des données (102) copiées du processus de copiage correspondant, lequel permet une vérification de l'intégrité des données (102) copiées y compris de l'identificateur du modèle de copie, auquel le bloc correspondant est associé,
dans lequel l'identificateur de la deuxième copie comprend la structure de chaine de blocs du deuxième modèle de copie en tant que valeur de paramètre et l'ajout du bloc à l'identificateur de la deuxième copie comprend un agrandissement de la structure de chaine de blocs du deuxième modèle de copie de l'équivalent du bloc correspondant,
dans lequel la caractéristique de vérification des données (102) copiées permet une vérification de l'intégrité des données (102) copiées de la deuxième copie y compris de l'identificateur du deuxième modèle de copie.

4. Procédé selon l'une des revendications précédentes, dans lequel les données (102) copiées de la première copie (110, 120, 130, 314) codée numériquement et/ou les données (102) copiées de la deuxième copie (110, 120, 130, 314) codée numériquement comprennent au moins un extrait des données (102) du document d'origine (100) codé numériquement,
dans lequel, en particulier, les données (102) copiées de la première copie (120, 130, 314) codée numériquement et/ou les données (102) copiées de la deuxième copie (110) codée numériquement comprennent les données (102) complètes du document d'origine (100) codé numériquement.

5. Procédé selon l'une des revendications précédentes, dans lequel les identificateurs (104, 114, 124, 134, 311, 315) des copies et modèles de copie (100, 110, 120, 130, 310, 314) comprennent respectivement un identifiant de ressources uniforme, URI, et la consultation des copies respectives et/ou des modèles de copie (100, 110, 120, 130, 310, 314) a lieu par le biais d'un réseau,
dans lequel les identificateurs (104, 114, 124, 134, 311, 315) des copies et modèles de copie (100, 110, 120, 130, 310, 314) comprennent en particulier respectivement une adresse web URL.

6. Procédé selon l'une des revendications précédentes, dans lequel les identificateurs (104, 114, 124, 134, 311, 315) sont édités respectivement pour l'emploi dans un protocole pour la transmission de données (102) sur la couche d'application du modèle de référence TCP/IP,
dans lequel, dans le cas du protocole, il s'agit en particulier d'un protocole HTTP ou HTTPS.

7. Procédé selon l'une des revendications 2 à 6, le procédé comprenant en outre :
suite à l'ajout du bloc (116) à l'identificateur (104) du deuxième modèle de copie (100), l'actualisation des structures de chaine de blocs de tous les identificateurs de toutes les copies, lesquelles sont comprises dans l'historique d'origine du deuxième modèle de copie (100), où l'actualisation comprend respectivement un complément de la structure de chaine de blocs correspondante de l'équivalent du bloc (116) ajouté.

8. Procédé selon l'une des revendications précédentes, le procédé comprenant en outre :
suite à l'ajout du bloc supplémentaire (128, 136) à la structure de chaine de blocs (111) du premier modèle de copie (110) dans l'identificateur (124, 134, 315) de la première copie (120, 130, 314), l'actualisation des structures de chaine de blocs de tous les identificateurs de toutes les copies, lesquelles sont comprises dans l'historique d'origine du premier modèle de copie (110), où l'actualisation comprend respectivement un complément de la structure de chaine de blocs correspondante de l'équivalent du bloc supplémentaire (128, 136).

9. Procédé selon l'une des revendications précédentes, dans lequel un identificateur (104) du document d'origine (100) comprend une adresse (105) pour la consultation du document d'origine (100) et une structure de chaine de blocs (111),
le procédé comprenant en outre, en particulier :
suite à l'ajout du bloc (116, 128, 136) à l'identificateur (104) du deuxième modèle de copie (100), l'actualisation de la structure de chaine de blocs (111) de l'identificateur (104) du document d'origine (100), où l'actualisation comprend un complément de la structure de chaine de blocs (111) de l'identificateur (104) du document d'origine (100) de l'équivalent du bloc (116, 128, 136) ajouté,
et/ou le procédé comprenant en outre, en particulier :
suite à l'ajout du bloc supplémentaire (116, 128, 136) à la structure de chaine de blocs (111) du premier modèle de copie (110) dans l'identificateur (124, 134, 315) de la première copie (120, 130, 314), l'actualisation de la structure de chaine de blocs (111) de l'identificateur (104) du document d'origine (100), où l'actualisation comprend un complément de la structure de chaine de blocs (111) de l'identificateur (104) du document d'origine (100) de l'équivalent du bloc supplémentaire (116, 128, 136).

10. Procédé selon l'une des revendications précédentes, dans lequel, dans le cas des structures de chaine de blocs (111, 121, 131, 200, 201, 229, 231, 312, 316), il s'agit respectivement d'une structure de chaine de blocs concaténée de manière bidirectionnelle, et l'ajout d'un bloc (116, 128, 136, 202) aux structures de chaines de blocs (111, 121, 131, 200, 201, 229, 231, 312, 316) dans le cadre d'un processus de copiage comprend en outre, respectivement :
• la production d'une fonction de concaténation (210) indépendante du processus de copiage,
• la dérivation d'une fonction de concaténation (212, 240, 241, 212, 243) bidirectionnelle individuelle pour le processus de copiage à partir de la fonction de concaténation (210) indépendante du processus de copiage,
où, pour la dérivation, un contenu de données de la copie (110, 120, 130, 314), laquelle est établie dans le cadre d'un processus de copiage, est employé en tant que premier paramètre, et un contenu de données du modèle de copie (100, 110, 130, 310), laquelle est employée pour le processus de copiage, est employé en tant que deuxième paramètre, de sorte que la fonction de concaténation (212, 240, 241, 212, 243) bidirectionnelle individuelle pour le processus de copiage est dépendante par paires à la fois de la copie (110, 120, 130, 314) créée et du modèle de copie (100, 110, 130, 310) employé,
• la concaténation bidirectionnelle du bloc (116, 128, 136, 202) devant être ajouté avec le bloc (116, 127, 204) ajouté en dernier lieu de la structure de chaine de blocs (111, 121, 131, 200, 201, 229, 231, 312, 316) correspondante,
dans lequel la concaténation bidirectionnelle comprend en particulier un ajout de la fonction de concaténation (212, 240, 241, 212, 243) bidirectionnelle individuelle pour le processus de copiage en tant que caractéristique de vérification (PM) à la fois au bloc (116, 128, 136, 202) devant être ajouté et également au bloc (116, 127, 204) ajouté en dernier lieu de la structure de chaine de blocs (111, 121, 131, 200, 201, 229, 231, 312, 316) correspondante,
ou dans lequel la concaténation bidirectionnelle comprend en particulier une utilisation de la fonction de concaténation (212, 240, 241, 212, 243) bidirectionnelle individuelle pour le processus de copiage sur les données (102) copiées et un ajout du résultat ultérieur en tant que caractéristique de vérification (PM) à la fois au bloc (116, 128, 136, 202) devant être ajouté et au bloc (116, 127, 204) ajouté en dernier lieu de la structure de chaine de blocs (111, 121, 131, 200, 201, 229, 231, 312, 316) correspondante.

11. Procédé selon l'une des revendications précédentes, le procédé comprenant en outre une vérification de l'intégrité de la première copie (120, 130, 314), où la vérification comprend :
• l'accès au document d'origine (100),
• la création d'une caractéristique de référence pour la caractéristique de vérification (PM) du bloc supplémentaire (128, 136, 202) moyennant l'emploi du document d'origine (100) et de l'historique d'origine de la première copie (120, 130, 314) enregistré par la structure de chaine de blocs (121, 131, 200, 201, 229, 312, 316) de l'identificateur (124, 134, 315) de la première copie (120, 130, 314),
• la comparaison de la caractéristique de référence avec la caractéristique de vérification (PM) du bloc supplémentaire (128, 136, 202),
• dans le cas d'une concordance de la caractéristique de référence et de la caractéristique de vérification (PM), la confirmation de l'intégrité de la première copie (120, 130, 314),
dans lequel, en particulier, dans le cas d'une concordance absente de la caractéristique de référence avec la caractéristique de vérification (PM), l'intégrité de la première copie (120, 130, 314) est niée,
et/ou dans lequel la vérification de l'intégrité de la première copie (120, 130, 314) comprend :
• l'accès à une des copies (110), laquelle comprend l'historique d'origine de la première copie (120, 130, 314), qui consigne la structure de chaine de blocs (121, 131, 200, 201, 229, 312, 316) de l'identificateur (124, 134, 315) de la première copie (120, 130, 314),
• la création d'une caractéristique de référence pour la caractéristique de vérification (PM) du bloc supplémentaire (116) moyennant l'emploi de la copie (110), à laquelle on a eu accès et de l'historique d'origine consigné de la première copie (120, 130, 314),
• la comparaison de la caractéristique de référence avec la caractéristique de vérification (PM) du bloc supplémentaire (116),
• dans le cas d'une concordance de la caractéristique de référence et de la caractéristique de vérification (PM), la confirmation de l'intégrité de la première copie (120, 130, 314) par rapport à la copie (110) à laquelle on a eu accès,
dans lequel, en particulier, dans le cas d'une concordance absente de la caractéristique de référence avec la caractéristique de vérification (PM), l'intégrité de la première copie (120, 130, 314) est niée.

12. Procédé selon l'une des revendications précédentes, le procédé comprenant en outre une vérification de l'intégrité de l'historique d'origine consignée de la première copie (120, 130, 314), la vérification comprenant :
• l'accès au document d'origine (100) ainsi qu'aux copies (110), lesquelles sont comprises dans l'historique d'origine de la première copie (120, 130, 314) qui consigne la structure de chaine de blocs (121, 131, 200, 201, 229, 312, 316) de l'identificateur (124, 134), 315) de la première copie (120, 130, 314),
• la création de caractéristiques de référence pour les caractéristiques de vérification (PM) des blocs (116, 126, 127, 128, 136, 202) individuels de la structure de chaine de blocs (121, 131, 200, 201, 229, 312, 316) de l'identificateur (124, 134, 315) de la première copie (120, 130, 314) moyennant l'emploi du document d'origine (100) ainsi que des copies (110) auxquelles on a eu accès,
• la comparaison des caractéristiques de vérification (PM) des blocs (116, 126, 127, 128, 136, 202) individuels avec la caractéristique de référence créée pour la caractéristique de vérification (PM) respective,
• dans le cas d'une concordance des caractéristiques de vérification (PM) avec les caractéristiques de référence respectives, la confirmation de l'intégrité de l'historique d'origine de la première copie (120, 130, 314),
dans lequel, en particulier, dans le cas d'une concordance absente d'une des caractéristiques de vérification (PM) avec la caractéristique de référence créée pour la caractéristique de vérification (PM) respective, l'intégrité de l'historique d'origine consignée de la première copie (120, 130, 314) est niée.

13. Procédé d'envoi avec une intégrité sécurisée de données (102) codées numériquement par le biais d'un réseau (340), le procédé comprenant :
• la création d'un document (110, 120, 130, 314) codé numériquement, lequel comprend les donnés (102) codées numériquement à envoyer, où, dans le cas des données (102) codées numériquement, il s'agit de données copiées d'un document d'origine (100) codé numériquement, et où le document (110, 120, 130, 314) codé numériquement est créé en tant que copie codée numériquement moyennant l'emploi d'un procédé selon l'une des revendications précédentes et est enregistré sous une adresse (115, 125, 135, 313) pour la consultation de la copie,
• la création d'un identificateur (114, 124, 134, 315) de la copie (110, 120, 130, 314) codée numériquement moyennant l'emploi d'un procédé selon l'une des revendications précédentes, où l'identificateur (114, 124, 134, 315) comprend l'adresse (115, 125, 135, 313) pour la consultation de la copie,
• l'envoi de l'identificateur (114, 124, 134, 315) de la copie (110, 120, 130, 314) codée numériquement par le biais du réseau (340),
• l'envoi du document (110, 120, 130, 314) codé numériquement par le biais du réseau (340) en réponse à une demande du document (110, 120, 130, 314) codé numériquement, laquelle identifie l'adresse (115, 125, 135, 313) par le document (110, 120, 130, 314) codé numériquement.

14. Procédé de demande avec une intégrité sécurisée de données (102) codées numériquement par le biais d'un réseau (340), le procédé comprenant :
• la réception d'un identificateur (114, 124, 134, 315) d'un document (110, 120, 130, 314) codé numériquement par le biais du réseau (340), où le document (110, 120, 130, 314) codé numériquement comprend les données (102) codées numériquement, où, dans le cas des données (102) codées numériquement, il s'agit de données copiées d'un document d'origine (100) codé numériquement et où le document (110, 120, 130, 314) codé numériquement est créé en tant que copie codée numériquement moyennant l'emploi d'un procédé selon l'une des revendications 1 à 12 et a été enregistré sous une adresse (115, 125, 135, 313) pour la consultation de la copie, où l'identificateur (114, 124, 134, 315) a été créé moyennant l'emploi d'un procédé selon l'une des revendications 1 à 12 et comprend l'adresse (115, 125, 135, 313) pour la consultation de la copie,
• la demande d'un document (110, 120, 130, 314) codé numériquement par le biais du réseau (340) moyennant l'emploi de l'adresse (115, 125, 135, 313) comprise par l'identificateur (114, 124, 134, 315) pour la consultation de la copie,
• en réponse à la demande, la réception du document (110, 120, 130, 314) codé numériquement demandé par le biais du réseau (340).

15. Système informatique (300) de sécurisation de l'intégrité de copies (110, 120, 130, 314) codées numériquement d'un document d'origine (100) codé numériquement moyennant l'emploi d'une structure de chaine de blocs (111, 121, 131, 200, 201, 229, 312, 316) intégrée dans des identificateurs (114, 124, 134, 315) des copies (110, 120, 130, 314) pour la consignation de l'historique d'origine des copies (110, 120, 130, 314), où le système comprend un processeur (302), une interface réseau (318) et une mémoire (306) avec des instructions (304) lisibles par machine, où une exécution des instructions (304) lisibles par machine par le processeur (302) fait en sorte que le système informatique (300) exécute un procédé, lequel comprend :
• la consultation d'un premier modèle de copie (110, 120, 130, 310) codé numériquement, lequel comprend des données (102) du document d'origine (100) codé numériquement, moyennant l'emploi d'un identificateur (114, 124, 134, 311) du modèle de copie (110, 120, 130, 310), lequel comprend une adresse (115, 125, 135, 313) pour la consultation du modèle de copie (110, 120, 130, 310) et une structure de chaine de blocs (111, 121, 131, 200, 201, 229, 312, 316) servant de valeur de paramètre, dans laquelle est consigné l'historique d'origine du modèle de copie (110, 120, 130, 310),
• la création d'une copie (110, 120, 130, 314) codée numériquement de données (102) du modèle de copie (110, 120, 130, 310), où les données (102) copiées de la copie (110, 120, 130, 314) comprennent les données (102) du document d'origine (100) codé numériquement,
• la production de la copie (110, 120, 130, 314) sous une adresse (115, 125, 135, 317) pour la consultation de la copie (110, 120, 130, 314),
• la création d'un identificateur (114, 124, 134, 315) de la copie (110, 120, 130, 314), où l'identificateur (114, 124, 134, 315) de la copie (110, 120, 130, 314) comprend l'adresse (115, 125, 135, 317) de la copie (110, 120, 130, 314) et en tant que valeur de paramètre la structure de chaine de blocs (111, 121, 131, 200, 201, 229, 312, 316) du modèle de copie (110, 120, 130, 310), où un bloc supplémentaire (116, 128, 136, 202)) est ajouté à la structure de chaine de blocs (111, 121, 131, 200, 201, 229, 312, 316), où le bloc supplémentaire (116, 128, 136, 202) est associé au modèle de copie (110, 120, 130, 310), où le bloc supplémentaire (116, 128, 136, 202) comprend l'adresse (115, 125, 135, 313) du modèle de copie (110, 120, 130, 310) ainsi qu'une caractéristique de vérification (PM) des données (102) copiées, laquelle permet une vérification de l'intégrité des données (102) copiées y compris l'identificateur (114, 124, 134, 311) du modèle de copie (110, 120, 130, 310),
• la production de l'identificateur (114, 124, 134, 315) de la copie (110, 120, 130, 314) pour la consultation de la copie (110, 120, 130, 314) et pour la vérification de l'identité des données (102) copiées de la copie (110, 120, 130, 314).

16. Système de télécommunication (300) permettant l'envoi avec une sécurisation de l'intégrité de données (102) codées numériquement par le biais d'un réseau (340), où le système de télécommunication (300) comprend un processeur (302) et une mémoire (306) avec des instructions (304, 308) lisibles par machine, où le système de télécommunication (300) comprend en outre une interface de communication (318) permettant la communication par le biais du réseau (340), où une exécution des instructions (304, 308) lisibles par machine par le processeur (302) fait en sorte que le système de télécommunication (300) exécute un procédé, lequel comprend :
• la création d'un document (110, 120, 130, 314) codé numériquement, lequel comprend les donnés (102) codées numériquement à envoyer, où, dans le cas des données (102) codées numériquement, il s'agit de données copiées d'un document d'origine (100) codé numériquement et où le document (110, 120, 130, 314) codé numériquement est créé en tant que copie codée numériquement moyennant l'emploi d'un procédé selon l'une des revendications 1 à 12 et est enregistré sous une adresse pour la consultation de la copie,
• la création d'un identificateur (114, 124, 134, 315) de la copie (110, 120, 130, 314) codée numériquement moyennant l'emploi d'un procédé selon l'une des revendications 1 à 12, où l'identificateur (114, 124, 134, 315) comprend l'adresse (115, 125, 135, 313) pour la consultation de la copie,
• l'envoi de l'identificateur (114, 124, 134, 315) de la copie (110, 120, 130, 314) codée numériquement par le biais du réseau (340),
• l'envoi du document (110, 120, 130, 314) codé numériquement par le biais du réseau (340) en réponse à une demande du document (110, 120, 130, 314) codé numériquement, laquelle identifie l'adresse (115, 125, 135, 313) par le document (110, 120, 130, 314) codé numériquement.

17. Système de télécommunication (350) permettant la consultation avec une sécurisation de l'intégrité de données (102) codées numériquement par le biais d'un réseau (340), où le système de télécommunication (350) comprend un processeur (352) et une mémoire (356) avec des instructions (354) lisibles par machine, où le système de télécommunication (350) comprend en outre une interface de communication (358) permettant la communication par le biais du réseau (340), où une exécution des instructions (354) lisibles par machine par le processeur (302) fait en sorte que le système de télécommunication (300) exécute un procédé, lequel comprend :
• la réception d'un identificateur (114, 124, 134, 315) d'un document (110, 120, 130, 314) codé numériquement par le biais du réseau (340), où le document (110, 120, 130, 314) codé numériquement comprend les données (102) codées numériquement, où, dans le cas des données (102) codées numériquement, il s'agit de données copiées d'un document d'origine (100) codé numériquement et où le document (110, 120, 130, 314) codé numériquement est créé en tant que copie codée numériquement moyennant l'emploi d'un procédé selon l'une des revendications 1 à 12 et a été enregistré sous une adresse (115, 125, 135, 313) pour la consultation de la copie (110, 120, 130, 314), où l'identificateur (114, 124, 134, 315) a été établi moyennant l'emploi d'un procédé selon l'une des revendications 1 à 12 et comprend l'adresse (115, 125, 135, 313) pour la consultation de la copie (110, 120, 130, 314),
• la demande d'un document (110, 120, 130, 314) codé numériquement par le biais du réseau (340) moyennant l'emploi de l'adresse (115, 125, 135, 313) comprise par l'identificateur (114, 124, 134, 315) pour la consultation de la copie,
• en réponse à la demande, la réception du document (110, 120, 130, 314) codé numériquement demandé par le biais du réseau (340).
